# EUROPEAN PATENT APPLICATION

(11) **EP 4 797 591 A1**
(43) Date of publication of application: **26.08.2026**
(21) Application number: 24890526.7
(22) Date of filing: 04.11.2024
(51) Int. Cl.: H04L 1/18

(54) **DATA TRANSMISSION METHOD AND APPARATUS**

(30) Priority: 17.11.2023 CN 202311556183; 21.02.2024 CN 202410194968
(71) Applicant: HUAWEI TECHNOLOGIES CO., LTD., Shenzhen, Guangdong 518129 (CN)
(72) Inventor: WANG, Xiaolu, Shenzhen, Guangdong 518129 (CN); LUO, Hejia, Shenzhen, Guangdong 518129 (CN); WANG, Jun, Shenzhen, Guangdong 518129 (CN)
(74) Representative: Maiwald GmbH
(86) International application number: PCT/CN2024/129724
(87) International publication number: WO 2025/103169

(57) **Abstract**

This application provides a data transmission method and an apparatus, relating to the field of wireless communication. In the method, a transmit end may send a plurality of TBs to a receive end using one process, and receive, from the receive end, feedback information for the plurality of TBs. In this process, the plurality of TBs may be transmitted between the transmit end and the receive end using one process, extending the TB transmission duration so that more time domain resources corresponding to the RTT between the transmit end and the receive end can be occupied. Therefore, without disabling the HARQ feedback mechanism , the transmit end and the receive end can improve the spectral efficiency of data transmission, ensure the data transmission rate, and lower the data retransmission latency.

## Description

This application claims priorities to Chinese Patent Application No. 202311556183.0, filed with the China National Intellectual Property Administration on November 17, 2023 and entitled "DATA TRANSMISSION METHOD AND APPARATUS", and to Chinese Patent Application No. 202410194968.6, filed with the China National Intellectual Property Administration on February 21, 2024 and entitled "DATA TRANSMISSION METHOD AND APPARATUS", both of which are incorporated herein by reference in their entireties.

### TECHNICAL FIELD

This application relates to the field of wireless communication, and in particular, to a data transmission method and an apparatus.

### BACKGROUND

In a communication system, data may be transmitted between a network device and a terminal using the hybrid automatic repeat request (hybrid automatic repeat request, HARQ) feedback mechanism at the medium access control (medium access control, MAC) layer, to avoid packet loss and improve data transmission reliability. In an example where the network device sends data to the terminal, the network device may perform channel encoding on service data to obtain a plurality of transport blocks (transport blocks, TBs), and send the TBs to the terminal by using the stop-and-wait protocol (stop-and-wait protocol). In a specific process example, after sending a specific TB to the terminal, the network device waits for the decoding result for the TB from the terminal. If the terminal indicates correct decoding of the TB, the network device sends a next TB. If the terminal indicates incorrect decoding of the TB, the network device performs data retransmission until the number of retransmissions exceeds a specific threshold or the terminal indicates correct decoding, and then sends a next TB. Therefore, when the transmission latency between the terminal and the network device is large, the network device waits a long time for the terminal to feed back the decoding result, causing a waste of time domain resources. To resolve this problem, it is proposed to disable the HARQ feedback mechanism and perform data retransmission using the automatic repeat request (automatic repeat request, ARQ) mechanism at the radio link control (radio link control, RLC) layer. However, this causes low spectral efficiency of data transmission and high data retransmission latency.

### SUMMARY

This application provides a data transmission method and an apparatus to improve the spectral efficiency of data transmission and lower the data retransmission latency.

To achieve the foregoing objective, the following technical solutions are used in this application.

According to a first aspect, a data transmission method is provided. The method may be performed by a receive end, for example, a terminal or a network device. The receive end herein may refer to the receive end itself, or may refer to a processor, a module, a logical node, a chip, a chip system, or the like that is in the receive end and that implements the method. The method includes: receiving a plurality of transport blocks using a first process, and sending feedback information. The feedback information indicates whether the plurality of transport blocks are correctly received. For example, the feedback information is feedback for decoding results of the plurality of transport blocks. Specifically, the receive end may send the decoding results of the plurality of transport blocks at a time. For example, the receive end may send one piece of feedback information, and the feedback information indicates a decoding status of the transport blocks by the terminal, for example, a decoding result of each transport block, a number of transport blocks that are incorrectly received, or a number of transport blocks that are correctly received. Alternatively, the receive end may send the decoding results of the plurality of transport blocks in a plurality of rounds/stages. For example, the receive end may send at least one piece of feedback information each time or in each stage, to indicate a decoding result of part of transport blocks. It may be understood that the plurality of transport blocks received using the first process may be referred to as a group of transport blocks or a transport block group.

In the method according to the first aspect, the receive end may receive a plurality of transport blocks using one process, for example, the first process, and send feedback information based on the plurality of transport blocks, so that a duration of transmitting the transport blocks in one process can be prolonged, to occupy more time domain resources corresponding to a round-trip time between the transmit end and the receive end. Therefore, in the method, spectral efficiency of data transmission can be improved, a data transmission rate can be ensured, and data retransmission latency can be lowered without disabling a retransmission mechanism at a MAC layer.

In a possible implementation, the method further includes: receiving or sending first indication information. The first indication information indicates a length of a first window, a number of the plurality of transport blocks received using the first process, or a number of pieces of first scheduling information. The first window is a window of the first process or a window for transmitting the first scheduling information, and the first scheduling information is for scheduling the plurality of transport blocks transmitted using the first process.

In the possible implementation, the receive end may send the first indication information. For example, if the receive end is a network device, the receive end may send the first indication information, to indicate the window length of the first process, indicating that the transport blocks transmitted in the window length belong to a same process, namely, the first process. Alternatively, the first indication information indicates the length of the window in which the first scheduling information for scheduling the plurality of transport blocks transmitted in the first process is located, indicating that the transport blocks scheduled using the first scheduling information transmitted in the window length belong to a same process, namely, the first process. Alternatively, the first indication information indicates the number of the plurality of transport blocks received using the first process, indicating that the plurality of transport blocks belong to a same process, namely, the first process. Alternatively, the first indication information indicates the number of pieces of the first scheduling information for scheduling the plurality of transport blocks transmitted in the first process, indicating that the transport blocks scheduled using the first scheduling information belong to a same process, namely, the first process. Alternatively, the receive end may receive the first indication information. For example, if the receive end is a terminal, the receive end may receive the first indication information, to determine, based on the first indication information, which transport blocks belong to the first process.

In a possible implementation, the first indication information is related to a round-trip time between a network device and a terminal.

In the possible implementation, the length of the first window, the number of the plurality of transport blocks received using the first process, or the number of the first scheduling information can be more suitable for the receive end and the transmit end, to avoid high retransmission latency.

In a possible implementation, the first indication information is further related to a number of processes supported by the terminal for transmitting a transport block.

In the possible implementation, processes processed in parallel by the receive end and the transmit end can occupy as many time domain resources corresponding to the round-trip time between the receive end and the transmit end as possible, to avoid a waste of time domain resources.

In a possible implementation, the method further includes: receiving or sending second indication information. The first indication information indicates the length of the first window, and the second indication information indicates a time domain position of the first window; or the first indication information indicates the number of the plurality of transport blocks received using the first process, and the second indication information indicates a time domain position of the plurality of transport blocks; or the first indication information indicates the number of pieces of first scheduling information, and the second indication information indicates a time domain position of the first scheduling information.

In the possible implementation, the receive end may send the second indication information. For example, if the receive end is a network device, the receive end may send the second indication information, so that the transmit end, for example, a terminal, may determine the time domain position of the window of the first process or the time domain position of the plurality of transport blocks, and further receive the plurality of transport blocks, or the terminal may determine the time domain position of the first scheduling information, and further receive the first scheduling information or perform blind detection on the scheduling information at the time domain position. Alternatively, the receive end may receive the second indication information. For example, if the receive end is a terminal, the receive end may receive the second indication information, to determine the time domain position of the window of the first process or the time domain positions of the plurality of transport blocks based on the second indication information, and further receive the plurality of transport blocks, or the terminal may determine the time domain position of the first scheduling information, and further receive the first scheduling information or perform blind detection on the scheduling information at the time domain position.

In a possible implementation, the plurality of transport blocks received using the first process include a first transport block, and the method further includes: receiving or sending third indication information, where the third indication information indicates at least one of the following: whether the first transport block is retransmitted data, a number of transmissions of the first transport block, a coding group to which the first transport block belongs, an order of the first transport block in a first coding group, an order of the first transport block in the plurality of transport blocks, whether the first transport block is a parity transport block, or whether the first transport block is a source transport block. The first coding group is the coding group to which the first transport block belongs.

In the possible implementation, the receive end may send the third indication information. For example, if the receive end is a network device, the receive end may send the third indication information, to indicate related information of the first transport block, so that the transmit end performs encoding based on the information. Alternatively, the receive end may receive the third indication information. For example, if the receive end is a terminal, the receive end may receive the third indication information, to perform decoding based on the third indication information. An example in which the network device is a transmit end and the terminal is a receive end is used for description. The network device indicates whether the first transport block is retransmitted data, so that the terminal can determine whether the first transport block is new data or retransmitted data, to facilitate decoding by the terminal. The network device indicates the number of transmissions of the first transport block, so that the terminal can determine the number of transmissions of the first transport block, and further determine an order of a parity transport block, to perform joint outer decoding. The network device indicates the coding group to which the first transport block belongs, so that the terminal can determine the coding group to which the first transport block belongs, to perform joint decoding, thereby improving decoding reliability. The network device indicates the order of the first transport block in the first coding group, so that the terminal can determine the order of the first transport block in the first coding group, and further determine a sequence of outer encoding, to perform joint decoding, thereby improving decoding reliability. The network device indicates the order of the first transport block in the plurality of transport blocks, so that the terminal can determine the order of the first transport block in the plurality of transport blocks, and perform joint decoding. The network device indicates whether the first transport block is a parity transport block, or the network device indicates whether the first transport block is a source transport block, so that the terminal can determine whether the first transport block is a parity transport block or a source transport block, and further perform decoding.

In a possible implementation, the method further includes: receiving or sending fourth indication information, where the fourth indication information indicates at least one of the following: whether the plurality of transport blocks are retransmitted data, a number of transmissions of the plurality of transport blocks, a coding group to which the plurality of transport blocks belong, orders of the plurality of transport blocks in the coding group to which the plurality of transport blocks belong, the number of the plurality of transport blocks, whether the plurality of transport blocks are parity transport blocks, or whether the plurality of transport blocks are source transport blocks.

In the possible implementation, the receive end may send the fourth indication information. For example, if the receive end is a network device, the receive end may send the fourth indication information, to indicate related information of the plurality of transport blocks, so that the transmit end performs encoding based on the information. Alternatively, the receive end may receive the fourth indication information. For example, if the receive end is a terminal, the receive end may receive the fourth indication information, to perform decoding based on the fourth indication information.

In one case, "the plurality of transport blocks" herein may be considered as a whole. For example, "the plurality of transport blocks" may be understood as a transport block group. For example, the fourth indication information may indicate that all the transport blocks in the group are retransmitted data or none of the transport blocks in the group is retransmitted data, to facilitate decoding by the terminal; and/or the fourth indication information may indicate a number of transmissions of the group of transport blocks, for example, all the transport blocks in the group are transmitted for the first time, or none of the transport blocks in the group is transmitted for the first time, so that the terminal determines a number of transmissions of the group of transport blocks, and further determines the order of the parity transport block, to perform joint outer decoding; and/or the fourth indication information may indicate the coding group to which the group of transport blocks belong, for example, all the transport blocks in the group belong to a coding group 1, so that the terminal determines a coding group to which the group of transport blocks belong, to perform joint decoding, thereby improving decoding reliability; and/or the fourth indication information may indicate orders of the group of transport blocks in the coding group to which the group of transport blocks belong, so that the terminal determines a sequence of outer encoding, to perform joint decoding, thereby improving decoding reliability; and/or the fourth indication information may indicate a number of transport blocks included in the group of transport blocks, so that the terminal can determine a number of currently scheduled transport blocks; and/or the fourth indication information may indicate that all the transport blocks in the group are parity transport blocks, or none of the transport blocks in the group is a parity transport block, or all the transport blocks in the group are source transport blocks, or none of the transport blocks in the group is a source transport block, so that the terminal can determine whether the group of transport blocks are parity transport blocks or source transport blocks, and further perform decoding.

In another case, "the plurality of transport blocks" are not considered as a whole, and "the plurality of transport blocks" refer to each of the plurality of transport blocks. An example in which the number of the plurality of transport blocks is 2 is used for description. The fourth indication information may indicate whether each transport block is retransmitted data, for example, indicate that a 1^{st} transport block is retransmitted data and a 2^{nd} transport block is not retransmitted data; and/or the fourth indication information may indicate a number of transmissions of each transport block, for example, indicate that the 1^{st} transport block is transmitted for the first time and the 2^{nd} transport block is not transmitted for the first time; and/or the fourth indication information may indicate a coding group to which each transport block belongs, for example, indicate that the 1^{st} transport block belongs to a coding group 1 and the 2^{nd} transport block belongs to the coding group 1; and/or the fourth indication information may indicate an order of each transport block in a coding group to which the transport block belongs, for example, indicate that the 1^{st} transport block is a 1^{st} transport block in a coding group transmitted using a 1^{st} process window of a process 1 and the 2^{nd} transport block is a 2^{nd} transport block in the coding group transmitted using the 1^{st} process window of the process 1; and/or the fourth indication information may indicate a number of transport blocks included in the plurality of transport blocks, for example, indicate that two transport blocks are included; and/or the fourth indication information may indicate whether each transport block is a parity transport block, or indicate whether each transport block is a source transport block, for example, indicate that the 1^{st} transport block is a parity transport block (or is not a source transport block), and the 2^{nd} transport block is not a parity transport block (or is a source transport block).

In a possible implementation, the method further includes: sending fifth indication information, where the fifth indication information indicates a number of detected transport blocks.

In the possible implementation, the receive end may indicate the number of detected transport blocks, so that the transmit end determines a number of transport blocks actually received by the receive end, to avoid inconsistency between the number of transport blocks detected by the receive end and that of the transmit end.

According to a second aspect, a data transmission method is provided. The method may be performed by a transmit end. For example, if a receive end is a terminal, the transmit end is a network device. Alternatively, if a receive end is a network device, the transmit end is a terminal. The transmit end herein may refer to the transmit end itself, or may refer to a processor, a module, a logical node, a chip, a chip system, or the like that is in the transmit end and that implements the method. The method includes: sending a plurality of transport blocks using a first process, and receiving feedback information. The feedback information indicates whether the plurality of transport blocks are correctly received. It may be understood that the plurality of transport blocks sent using the first process may be referred to as a group of transport blocks or a transport block group (TB group).

In the method according to the second aspect, the transmit end may send a plurality of transport blocks using one process, for example, the first process, and receive feedback information for the plurality of transport blocks, so that a duration of transmitting the transport blocks in one process can be prolonged, to occupy more time domain resources corresponding to a round-trip time between the transmit end and the receive end. Therefore, in the method, spectral efficiency of data transmission can be improved, a data transmission rate can be ensured, and data retransmission latency can be lowered without disabling a retransmission mechanism at a MAC layer.

In a possible implementation, the method further includes: sending or receiving first indication information, where the first indication information indicates a length of a first window, a number of the plurality of transport blocks sent using the first process, or a number of pieces of first scheduling information, the first window is a window of the first process or a window for transmitting the first scheduling information, and the first scheduling information is for scheduling the plurality of transport blocks transmitted using the first process.

In the possible implementation, the transmit end may send the first indication information. For example, if the transmit end is a network device, the transmit end may send the first indication information, to indicate the window length of the first process, indicating that the transport blocks transmitted in the window length belong to a same process, namely, the first process. Alternatively, the first indication information indicates the length of the window in which the first scheduling information for scheduling the plurality of transport blocks transmitted in the first process is located, indicating that the transport blocks scheduled using the first scheduling information transmitted in the window length belong to a same process, namely, the first process. Alternatively, the first indication information indicates the number of the plurality of transport blocks received using the first process, indicating that the plurality of transport blocks belong to a same process, namely, the first process. Alternatively, the first indication information indicates the number of pieces of the first scheduling information for scheduling the plurality of transport blocks transmitted in the first process, indicating that the transport blocks scheduled using the first scheduling information belong to a same process, namely, the first process. Alternatively, the transmit end may receive the first indication information. For example, if the transmit end is a terminal, the transmit end may receive the first indication information, to determine, based on the first indication information, which transport blocks belong to the first process.

In a possible implementation, the first indication information is related to a round-trip time between a network device and a terminal.

In the possible implementation, the length of the first window, the number of the plurality of transport blocks received using the first process, or the number of the first scheduling information can be more suitable for the receive end and the transmit end, to avoid high retransmission latency.

In a possible implementation, the first indication information is further related to a number of processes supported by the terminal for transmitting a transport block.

In the possible implementation, processes processed in parallel by the receive end and the transmit end can occupy as many time domain resources corresponding to the round-trip time between the receive end and the transmit end as possible, to avoid a waste of time domain resources.

In a possible implementation, the method further includes: sending or receiving second indication information. The first indication information indicates the length of the first window, and the second indication information indicates a time domain position of the first window; or the first indication information indicates the number of the plurality of transport blocks received using the first process, and the second indication information indicates a time domain position of the plurality of transport blocks; or the first indication information indicates the number of pieces of first scheduling information, and the second indication information indicates a time domain position of the first scheduling information.

In the possible implementation, the transmit end may send the second indication information. For example, if the transmit end is a network device, the transmit end may send the second indication information, so that the receive end, for example, a terminal, may determine the time domain position of the window of the first process or the time domain position of the plurality of transport blocks, and further receive the plurality of transport blocks, or the terminal may determine the time domain position of the first scheduling information, and further receive the first scheduling information or perform blind detection on the scheduling information at the time domain position. Alternatively, the transmit end may receive the second indication information. For example, if the transmit end is a terminal, the transmit end may receive the second indication information, to determine the time domain position of the window of the first process or the time domain positions of the plurality of transport blocks based on the second indication information, and further receive the plurality of transport blocks, or the terminal may determine the time domain position of the first scheduling information, and further receive the first scheduling information or perform blind detection on the scheduling information at the time domain position.

In a possible implementation, the plurality of transport blocks sent using the first process include a first transport block, and the method further includes: sending or receiving third indication information, where the third indication information indicates at least one of the following: whether the first transport block is retransmitted data, a number of transmissions of the first transport block, a coding group to which the first transport block belongs, an order of the first transport block in a first coding group, an order of the first transport block in the plurality of transport blocks, whether the first transport block is a parity transport block, or whether the first transport block is a source transport block. The first coding group is the coding group to which the first transport block belongs.

In the possible implementation, the transmit end may send the third indication information. For example, if the transmit end is a network device, the transmit end may send the third indication information, to indicate related information of the first transport block, so that the receive end performs decoding based on the information. Alternatively, the transmit end may receive the third indication information. For example, if the transmit end is a terminal, the transmit end may receive the third indication information, to perform encoding based on the third indication information. An example in which the network device is a transmit end and the terminal is a receive end is used for description. The network device indicates whether the first transport block is retransmitted data, so that the terminal can determine whether the first transport block is new data or retransmitted data, to facilitate decoding by the terminal. The network device indicates the number of transmissions of the first transport block, so that the terminal can determine the number of transmissions of the first transport block, and further determine an order of a parity transport block, to perform joint outer decoding. The network device indicates the coding group to which the first transport block belongs, so that the terminal can determine the coding group to which the first transport block belongs, to perform joint decoding, thereby improving decoding reliability. The network device indicates the order of the first transport block in the first coding group, so that the terminal can determine the order of the first transport block in the first coding group, and further determine a sequence of outer encoding, to perform joint decoding, thereby improving decoding reliability. The network device indicates the order of the first transport block in the plurality of transport blocks, so that the terminal can determine the order of the first transport block in the plurality of transport blocks, and perform joint decoding. The network device indicates whether the first transport block is a parity transport block, or the network device indicates whether the first transport block is a source transport block, so that the terminal can determine whether the first transport block is a parity transport block or a source transport block, and further perform decoding.

In a possible implementation, the method further includes: sending or receiving fourth indication information, where the fourth indication information indicates at least one of the following: whether the plurality of transport blocks are retransmitted data, a number of transmissions of the plurality of transport blocks, a coding group to which the plurality of transport blocks belong, orders of the plurality of transport blocks in the coding group to which the plurality of transport blocks belong, the number of the plurality of transport blocks, whether the plurality of transport blocks are parity transport blocks, or whether the plurality of transport blocks are source transport blocks.

In the possible implementation, the transmit end may send the fourth indication information. For example, if the transmit end is a network device, the transmit end may send the fourth indication information, to indicate related information of the plurality of transport blocks, so that the receive end performs decoding based on the information. Alternatively, the transmit end may receive the fourth indication information. For example, if the transmit end is a terminal, the transmit end may receive the fourth indication information, to perform encoding based on the fourth indication information. In one case, "the plurality of transport blocks" herein may be considered as a whole, for example, may be understood as a transport block group. In another case, "the plurality of transport blocks" are not considered as a whole, and "the plurality of transport blocks" refer to each of the plurality of transport blocks. For details, refer to corresponding descriptions in the first aspect.

In a possible implementation, the method further includes: receiving fifth indication information, where the fifth indication information indicates a number of transport blocks detected by the receive end.

In the possible implementation, the transmit end may determine a number of transport blocks actually received by the receive end, to avoid inconsistency between the number of transport blocks detected by the receive end and that of the transmit end.

According to a third aspect, a communication apparatus is provided, to implement the foregoing method. The communication apparatus may be the receive end in the first aspect, or the communication apparatus may be the transmit end in the second aspect. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module and an interface module. The processing module may be configured to implement a processing function in any one of the foregoing aspects and any one of the possible implementations of the foregoing aspects. The processing module may be, for example, a processor. The interface module may also be referred to as an interface unit, and is configured to implement a sending function and/or a receiving function in any one of the foregoing aspects and the possible implementations of the foregoing aspects. The interface module may include an interface circuit, a transceiver machine, a transceiver, or a communication interface.

With reference to the third aspect, in a possible implementation, the interface module includes a sending module and a receiving module that are respectively configured to implement the sending and receiving functions in any one of the foregoing aspects and the possible implementations of the foregoing aspects.

According to a fourth aspect, a communication apparatus is provided, and includes a processor. The processor is configured to: be coupled to a memory, and after reading instructions in the memory, perform the method according to any one of the foregoing aspects based on the instructions. The communication apparatus may be the receive end in the first aspect, or the communication apparatus may be the transmit end in the second aspect.

With reference to the fourth aspect, in a possible implementation, the communication apparatus further includes the memory. The memory is configured to store program instructions and data. Optionally, the memory and the processor are integrated together, or the memory is independent of the processor.

With reference to the fourth aspect, in a possible implementation, the communication apparatus is a chip or a chip system. Optionally, when the communication apparatus is the chip system, the communication apparatus may include a chip, or may include a chip and another discrete device.

According to a fifth aspect, a communication apparatus is provided, and includes a processor and an interface circuit. The interface circuit is configured to: receive a computer program or instructions, and transmit the computer program or the instructions to the processor. The processor is configured to execute the computer program or the instructions, to enable the communication apparatus to perform the method according to any one of the foregoing aspects. The communication apparatus may be the receive end in the first aspect, or the communication apparatus may be the transmit end in the second aspect.

With reference to the fifth aspect, in a possible implementation, the communication apparatus is a chip or a chip system. Optionally, when the communication apparatus is the chip system, the communication apparatus may include a chip, or may include a chip and another discrete device.

According to a sixth aspect, a computer-readable storage medium is provided. The computer-readable storage medium stores instructions, and when the instructions are run on a computer, the computer is enabled to perform the method according to any one of the foregoing aspects.

According to a seventh aspect, a computer program product including instructions is provided. When the computer program product runs on a computer, the computer is enabled to perform the method according to any one of the foregoing aspects.

According to an eighth aspect, a communication system is provided. The communication system includes a receive end configured to perform the method according to the first aspect and a transmit end configured to perform the method according to the second aspect.

For technical effect achieved by any one of the possible implementations of the third aspect to the eighth aspect, refer to technical effect achieved by any one of the first aspect, the second aspect, or different possible implementations of the first aspect or the second aspect. Details are not described herein again.

According to a ninth aspect, a communication method is provided. The method may be performed by a terminal. The terminal herein may refer to the terminal itself, or may refer to a processor, a circuit, a module, a logical node, a chip, a chip system, or the like that is in the terminal and that implements the method. The method includes: determining capability information of the terminal, and sending the capability information of the terminal. The capability information of the terminal indicates a capability of the terminal to send a plurality of transport blocks using one process, and/or indicates a capability of the terminal to receive a plurality of transport blocks using one process. In a process of sending a plurality of transport blocks using one process, the terminal stops receiving scheduling information of a transport block in the process, and in a process of receiving a plurality of transport blocks using one process, the terminal stops sending a decoding result of a transport block in the process.

In the method according to the ninth aspect, the terminal may report whether the terminal supports communication of a plurality of transport blocks using one process, so that an apparatus, for example, a network device, that receives the capability information of the terminal configures, based on the capability reported by the terminal, the terminal to communicate the transport blocks. For example, if the terminal supports communication of a plurality of transport blocks using one process, the network device may configure the terminal to communicate the plurality of transport blocks using one process, to improve spectral efficiency of data transmission, ensure a data transmission rate, and lower data retransmission latency. If the terminal does not support communication of a plurality of transport blocks using one process, the network device configures the terminal to communicate one transport block using one process, to avoid a failure of the terminal to implement a transmission mode configured by the network device.

In a possible implementation, the capability information of the terminal includes first indication information, and the first indication information indicates whether the terminal supports sending a plurality of transport blocks using one process, and/or indicates whether the terminal supports receiving a plurality of transport blocks using one process.

In the possible implementation, the network device can determine, based on the first indication information, whether the terminal supports sending a plurality of transport blocks using one process, and/or whether the terminal supports receiving a plurality of transport blocks using one process.

In a possible implementation, the capability information of the terminal includes second indication information, and the second indication information indicates a window length of the process or a number of transport blocks supported by the terminal for transmission using one process.

In the possible implementation, the network device can configure, based on the second indication information, the length of the process window in which the terminal communicates the plurality of transport blocks, or configure, based on the second indication information, a number of transport blocks communicated by the terminal in one process.

In a possible implementation, the method further includes: receiving capability enquiry information, where the capability enquiry information is for inquiring a capability of the terminal to communicate a plurality of transport blocks using one process.

In the possible implementation, the terminal may send the capability information of the terminal based on the received capability enquiry information.

In a possible implementation, the method further includes: receiving third indication information, where the third indication information indicates a first duration, and the first duration satisfies the capability information of the terminal; and communicating a plurality of transport blocks using a first process in the first duration.

In the possible implementation, the terminal may communicate the transport block based on the third indication information.

In a possible implementation, the method further includes: receiving third indication information, where the third indication information indicates N, N is an integer greater than 1, and N satisfies the capability information of the terminal; and communicating N transport blocks using a first process.

In the possible implementation, the terminal may communicate the transport block based on the third indication information.

According to a tenth aspect, a communication method is provided. The method may be performed by a network side device. The network side device herein may refer to the network device itself, or may refer to a processor, a circuit, a module, a logical node, a chip, a chip system, or the like that is in the network device and that implements the method. The method includes: receiving capability information of a terminal, and determining, based on the capability information of the terminal, whether the terminal supports communication of a plurality of transport blocks using one process. The capability information of the terminal indicates a capability of the terminal to send a plurality of transport blocks using one process, and/or indicates a capability of the terminal to receive a plurality of transport blocks using one process. In a process of sending a plurality of transport blocks using one process, the terminal stops receiving scheduling information of a transport block in the process, and in a process of receiving a plurality of transport blocks using one process, the terminal stops sending a decoding result of a transport block in the process.

In the method according to the tenth aspect, the network device may determine whether the terminal supports communication of a plurality of transport blocks using one process, so that the network device configures the terminal to communicate the transport blocks. For example, if the terminal supports communication of a plurality of transport blocks using one process, the network device may configure the terminal to communicate the plurality of transport blocks using one process, to improve spectral efficiency of data transmission, ensure a data transmission rate, and lower data retransmission latency. If the terminal does not support communication of a plurality of transport blocks using one process, the network device configures the terminal to communicate one transport block using one process, to avoid a failure of the terminal to implement a transmission mode configured by the network device.

In a possible implementation, the capability information of the terminal includes first indication information, and the first indication information indicates whether the terminal supports sending a plurality of transport blocks using one process, and/or indicates whether the terminal supports receiving a plurality of transport blocks using one process.

In the possible implementation, the network device can determine, based on the first indication information, whether the terminal supports sending a plurality of transport blocks using one process, and/or whether the terminal supports receiving a plurality of transport blocks using one process.

In a possible implementation, the capability information of the terminal includes second indication information, and the second indication information indicates a window length of the process or a number of transport blocks supported by the terminal for transmission using one process.

In the possible implementation, the network device can configure, based on the second indication information, the length of the process window in which the terminal communicates the plurality of transport blocks, or configure, based on the second indication information, a number of transport blocks communicated by the terminal in one process.

In a possible implementation, the method further includes: sending capability enquiry information, where the capability enquiry information is for inquiring a capability of the terminal to communicate a plurality of transport blocks using one process.

In the possible implementation, the terminal can report, to the network device, the capability of the terminal to communicate a plurality of transport blocks using one process.

In a possible implementation, the method further includes: sending third indication information to the terminal, where the third indication information indicates a first duration, and the first duration satisfies the capability information of the terminal; and communicating a plurality of transport blocks using a first process in the first duration.

In the possible implementation, the network device can configure, based on the third indication information, the terminal to communicate the plurality of transport blocks using one process in the first duration.

In a possible implementation, the method further includes: sending third indication information to the terminal, where the third indication information indicates N, N is an integer greater than 1, and N satisfies the capability information of the terminal; and communicating N transport blocks using a first process.

In the possible implementation, the network device can configure, based on the third indication information, the terminal to communicate the N transport blocks using one process.

According to an eleventh aspect, a communication apparatus is provided, and configured to implement the foregoing method. The communication apparatus may be the terminal in the ninth aspect, or the communication apparatus may be the network device in the tenth aspect. The communication apparatus includes a corresponding module, unit, or means for implementing the foregoing method. The module, unit, or means may be implemented by hardware, software, or hardware executing corresponding software. The hardware or the software includes one or more modules or units corresponding to the foregoing functions.

With reference to the eleventh aspect, in a possible implementation, the communication apparatus may include a processing module and an interface module. The processing module may be configured to implement a processing function in any one of the ninth aspect and the possible implementations of the ninth aspect, or may be configured to implement a processing function in any one of the tenth aspect and the possible implementations of the tenth aspect. The processing module may be, for example, a processor. The interface module, also referred to as an interface unit, is configured to implement a sending function and/or a receiving function in any one of the ninth aspect and the possible implementations of the ninth aspect, or is configured to implement a sending function and/or a receiving function in any one of the tenth aspect and the possible implementations of the tenth aspect. The interface module may include an interface circuit, a transceiver machine, a transceiver, or a communication interface.

With reference to the eleventh aspect, in a possible implementation, the interface module includes a sending module and a receiving module that are respectively configured to implement the sending and receiving functions in any one of the foregoing aspects and the possible implementations of the foregoing aspects.

According to a twelfth aspect, a communication apparatus is provided. The communication apparatus includes one or more processors. The one or more processors are configured to: after being coupled to a memory and reading instructions in the memory, perform, based on the instructions, the method according to the ninth aspect or the tenth aspect. The communication apparatus may be the terminal in the ninth aspect, or the communication apparatus may be the network device in the tenth aspect.

With reference to the twelfth aspect, in a possible implementation, the communication apparatus further includes the memory. The memory is configured to store program instructions and data. Optionally, the memory and the processor are integrated together, or the memory is independent of the processor.

With reference to the twelfth aspect, in a possible implementation, the communication apparatus is a chip or a chip system. Optionally, when the communication apparatus is the chip system, the communication apparatus may include a chip, or may include a chip and another discrete device.

According to a thirteenth aspect, a communication apparatus is provided, and includes a processor and an interface circuit. The interface circuit is configured to: receive a computer program or instructions, and transmit the computer program or the instructions to the processor. The processor is configured to execute the computer program or the instructions, to enable the communication apparatus to perform the method according to the ninth aspect or the tenth aspect. The communication apparatus may be the terminal in the ninth aspect, or the communication apparatus may be the network device in the tenth aspect.

With reference to the thirteenth aspect, in a possible implementation, the communication apparatus is a chip or a chip system. Optionally, when the communication apparatus is the chip system, the communication apparatus may include a chip, or may include a chip and another discrete device.

According to a fourteenth aspect, a computer-readable storage medium is provided. The computer-readable storage medium stores instructions. When the instructions are run on a computer, the computer may be enabled to perform the method according to the ninth aspect or the tenth aspect.

According to a fifteenth aspect, a computer program product including instructions is provided. When the computer program product runs on a computer, the computer is enabled to perform the method according to the ninth aspect or the tenth aspect.

According to a sixteenth aspect, a communication system is provided. The communication system includes a terminal configured to perform the method according to the ninth aspect and a network device configured to perform the method according to the tenth aspect.

For technical effect achieved by any one of the possible implementations of the eleventh aspect to the sixteenth aspect, refer to technical effect achieved by any one of the ninth aspect, the tenth aspect, or different possible implementations of the ninth aspect or the tenth aspect. Details are not described herein again.

It may be understood that the solutions in the foregoing aspects may be combined if the solutions are not contradictory.

### BRIEF DESCRIPTION OF DRAWINGS

FIG. 1A is a diagram of channel encoding according to this application;
FIG. 1B is a diagram of a decode failure probability according to this application;
FIG. 1C is a diagram 1 of data transmission by using a HARQ feedback mechanism according to this application;
FIG. 1D is a diagram of data transmission by using an ARQ mechanism according to this application;
FIG. 1E is a diagram of data transmission by using a HARQ feedback mechanism and an ARQ mechanism according to this application;
FIG. 1F is a diagram 2 of data transmission by using a HARQ feedback mechanism according to this application;
FIG. 1G is a diagram 1 of TB transmission according to this application;
FIG. 1H is a diagram 2 of TB transmission according to this application;
FIG. 1I is a diagram 3 of TB transmission according to this application;
FIG. 2A is a diagram of an architecture of a communication system according to this application;
FIG. 2B is a diagram 1 of a communication scenario according to this application;
FIG. 2C is a diagram 2 of a communication scenario according to this application;
FIG. 3 is a diagram of a hardware structure of a communication apparatus according to this application;
FIG. 4 is a schematic flowchart 1 of a data transmission method according to this application;
FIG. 5 is a diagram 4 of TB transmission according to this application;
FIG. 6 is a diagram of spectral efficiency of data transmission according to this application;
FIG. 7 is a schematic flowchart 2 of a data transmission method according to this application;
FIG. 8 is a diagram 5 of TB transmission according to this application;
FIG. 9A is a diagram 6 of TB transmission according to this application;
FIG. 9B is a diagram 7 of TB transmission according to this application;
FIG. 10 is a diagram of a structure of a communication apparatus according to this application; and
FIG. 11 is a schematic flowchart of a communication method according to this application.

### DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

### 1. Non-terrestrial communication network (non-terrestrial network, NTN)

In this application, the NTN is relative to a terrestrial communication network (terrestrial network, TN). In an NTN technology, a communication apparatus at a specific altitude from the ground, for example, a satellite, an uncrewed aerial vehicle, or a high-altitude platform (high-altitude platform, HPA), may participate in network deployment, to provide a data transmission service, a voice communication service, or the like for a terminal. Therefore, the NTN can provide a wider coverage area (for example, the NTN may cover areas without a terrestrial base station, such as sea areas, polar regions, or rainforests) than the TN, and can implement seamless global network coverage. In addition, the NTN is less susceptible to external force damage and natural disasters, and can provide more communication resources and improve a network rate. It may be understood that the NTN is a supplement to the existing TN, and may also be considered as an independent communication system that provides global network access for users. This is not limited.

It may be understood that the high-altitude platform is usually 8 km to 50 km above the ground. Satellites may be classified into the following three types based on orbital altitudes of the satellites: a geostationary earth orbit (geostationary earth orbit, GEO) satellite (also referred to as a synchronous orbit satellite), a medium earth orbit (medium earth orbit, MEO) satellite, and a low earth orbit (low earth orbit, LEO) satellite. A GEO satellite has an orbital altitude of 35,786 km. A main advantage of the GEO satellite is that it can remain stationary relative to the ground and provide a large coverage area. However, GEO satellite communication also has the following drawbacks: (1) An orbit of the GEO satellite is far away from the earth, and a propagation loss in free space is large, resulting in a tight communication link budget, and a requirement of configuring an antenna with a large diameter for the satellite to increase a transmit/receive gain. (2) Communication transmission latency is high, for example, there may be a round-trip time (round-trip time, RTT) of about 500 ms, which cannot meet a requirement of a low-latency service. (3) GEO orbit resources are limited, transmission costs are high, and coverage cannot be provided for the two polar regions of the earth. An orbit altitude of the MEO satellite is within a range from 2000 km to 35,786 km. An advantage is that global coverage can be implemented via a smaller number of satellites. However, the orbit altitude of the MEO satellite is higher than that of the LEO satellite, and transmission latency is still high. Therefore, the MEO satellite is mainly used for positioning and navigation. An orbit altitude of the LEO satellite is within a range from 300 km to 2000 km. The LEO satellite has the lower orbital altitude than the MEO satellite and the GEO satellite, and has advantages of lower data transmission latency, a smaller transmission loss, and lower transmission costs. Therefore, the LEO satellite has more important research significance, and LEO satellite communication has gained increasing attention in recent years. Therefore, this application is described by using the LEO satellite as an example.

### 2. Data transmission

In this application, a transmit end may perform channel encoding on to-be-sent data (for example, service data) to obtain a plurality of TBs, and send the plurality of TBs to a receive end. For example, a higher layer of the transmit end may process the to-be-sent data to obtain information bits (information bits) in different TBs, and send the information bits to a MAC layer (or a physical (physical, PHY) layer) of the transmit end. After receiving the information bits, the MAC layer (or the PHY layer) may perform outer (outer) encoding and low-density parity-check (low-density parity-check, LDPC) encoding, to obtain a plurality of to-be-sent TBs, and map the TBs to corresponding slots (slots) for sending.

In this application, an outer encoding method includes but is not limited to: a Reed-Solomon code (Reed-Solomon code), a fountain code (fountain code), an algebraic code (algebraic code), a Raptor code (Raptor code), a RaptorQ code (the RaptorQ code is an updated version or an advanced version of the Raptor code), a BCH code (Bose-Chaudhuri-Hocquenghem code), a minimum distance separable code (minimum distance separable code), or the like.

The following uses an example in which a MAC layer of a transmit end performs channel encoding for description.

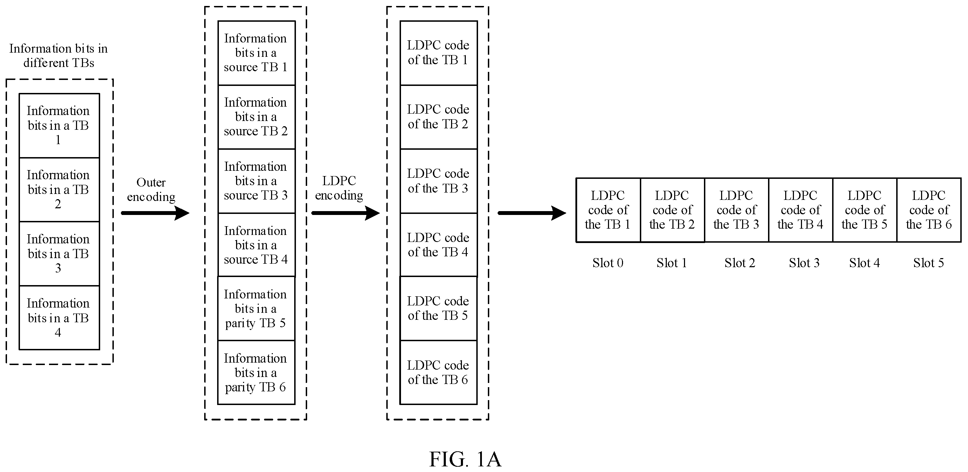

Refer to FIG. 1A. After receiving information bits in different TBs, for example, information bits in a TB 1 to a TB 4, that are delivered by an upper layer, a MAC layer or a PHY (physical) layer of a transmit end performs outer encoding (for example, performs outer encoding by using a RaptorQ code) on the information bits, to obtain four source TB information bits (source TB information bits) (for example, information bits in a source TB 1, information bits in a source TB 2, information bits in a source TB 3, and information bits in a source TB 4) and two parity TB information bits (parity TB information bits) (for example, information bits in a parity TB 5 and information bits in a parity TB 6). Then, the PHY layer may perform LDPC encoding separately on the four source TB information bits and the two parity TB information bits, to obtain LDPC codes of the six TBs. The transmit end may map these TB LDPC codes to different slots for sending. For example, an LDPC code of the TB 1 is sent in a slot 0, an LDPC code of the TB 2 is sent in a slot 1, an LDPC code of the TB 3 is sent in a slot 2, an LDPC code of the TB 4 is sent in a slot 3, an LDPC code of the TB 5 is sent in a slot 4, and an LDPC code of the TB 6 is sent in a slot 5.

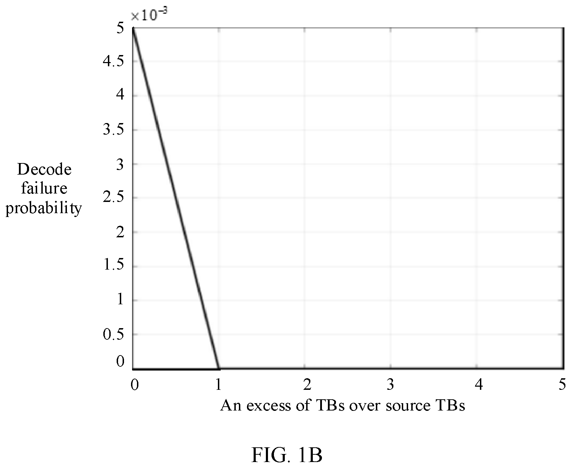

In the channel encoding process, parity TBs (parity transport blocks) are introduced to improve a decoding success rate of a receive end. If a number of TBs received by the receive end is slightly greater than a number of source TBs, it can be ensured that decoding is approximately 100% correct. For example, a total number of TBs is 35, where a number of source TBs is 30, and a number of parity TBs is 5. A relationship between a decode failure probability (decode failure probability) of the receive end and an excess of TBs received by the receive end over the source TBs may be shown in FIG. 1B. In FIG. 1B, when the receive end correctly receives any 30 of the 35 TBs (that is, the excess of the TBs received by the receive end over the source TBs is 0), a decode failure probability is 0.5%, and a probability of correctly decoding and restoring original data is (100%-0.5%). When a number of TBs correctly received by the receive end is greater than or equal to 31 (that is, the excess of the TBs received by the receive end over the source TBs is greater than or equal to 1), a decode failure probability is approximately 0, and a probability of correctly decoding and restoring original data is approximately 100%. In the examples, a number of TBs that are correctly decoded=a number of source TBs+Overhead, and a number of TBs that are incorrectly decoded=a number of parity TBs-Overhead. Overhead is the excess of the TBs received by the receive end over the source TBs.

### 3. Data retransmission

In a data transmission process, if the receive end fails to receive correct data or fails to correctly decode data, a bit error occurs. Generally, the bit error may be resolved through error correction. For example, the transmit end may add specific redundancy information when sending data, so that the receive end can directly perform error correction when a bit error occurs. This method is referred to as forward error correction. For another example, after receiving data and finding a bit error, the receive end requests the transmit end to retransmit the erroneous data. This method is referred to as backward error correction. Generally, the transmit end may perform data retransmission using one or more retransmission mechanisms at the MAC layer (also referred to as the PHY/MAC layer), at the RLC layer, or at the packet data convergence protocol (packet data convergence protocol, PDCP) layer. The following provides detailed descriptions.

### 3.1. HARQ feedback mechanism

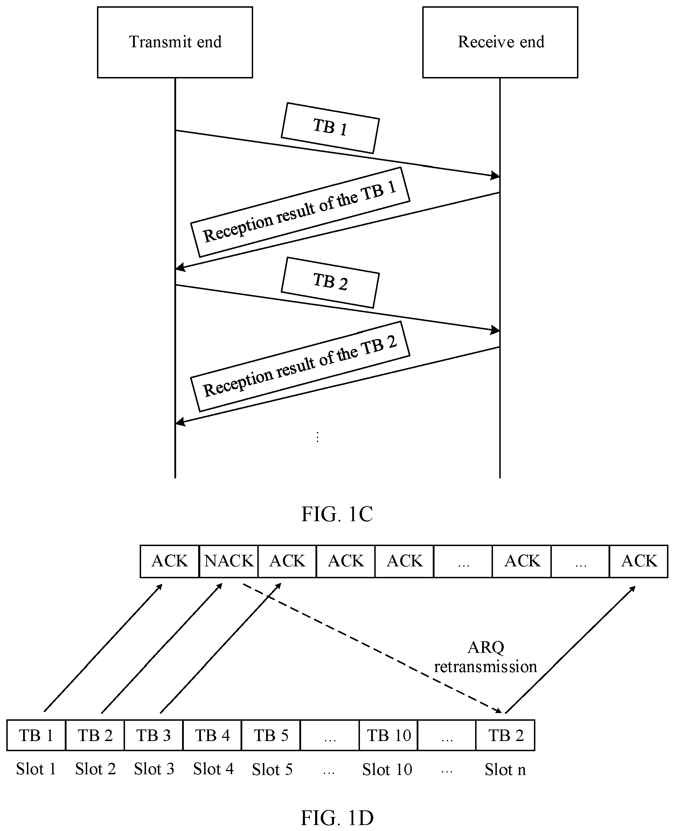

The HARQ feedback mechanism is a retransmission mechanism at the MAC layer, in which the receive end may feed back a transmission success or failure result to the transmit end, to implement data retransmission. During HARQ retransmission, the transmit end and the receive end may use the stop-and-wait protocol. For example, in FIG. 1C, after sending a TB 1 to the receive end using one process, the transmit end waits for a reception result (also referred to as a decoding result) of the TB 1 from the receive end. If the receive end feeds back that the TB 1 is incorrectly received, the transmit end performs data retransmission. If the receive end feeds back that the TB 1 is correctly received, the transmit end sends the next TB, for example, a TB 2, using the process, and waits for a reception result of the TB 2 from the receive end. The rest may be deduced by analogy.

### 3.2. ARQ mechanism

The ARQ mechanism is a retransmission mechanism at the RLC layer, in which the receive end may also feed back a transmission success or failure result to the transmit end, to implement data retransmission. However, the ARQ mechanism has high retransmission latency. For example, in FIG. 1D, the transmit end sends a TB 1 to the receive end in a slot (slot) 1, a TB 2 in a slot 2, a TB 3 in a slot 3, a TB 4 in a slot 4, and a TB 5 in a slot 5, and so on. The transmit end may also receive an acknowledgement (acknowledgement, ACK) message of the TB 1 in the slot 3, and receive a negative acknowledgement (negative acknowledgement, NACK) message of the TB 2 in the slot 4. Then, after receiving an error indication at the RLC layer, the transmit end retransmits the TB 2 in a subsequent slot n. Compared with the retransmission mechanism at the PHY/MAC layer, the retransmission latency is higher.

As described above, the ARQ mechanism has much higher retransmission latency than the HARQ feedback mechanism. However, the ARQ mechanism has a low transmission frequency of feedback status reports and small feedback overhead. Therefore, the ARQ mechanism may be used as a supplement to the retransmission mechanism at the MAC layer, for example, by combining the HARQ feedback mechanism and the ARQ mechanism. In this way, data transmission requirements in different application scenarios can be satisfied.

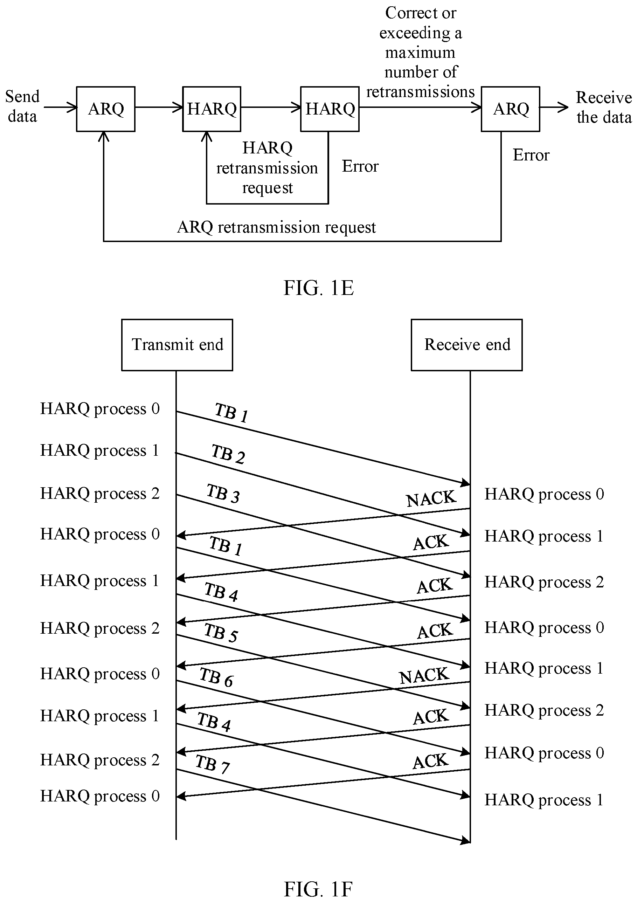

For example, in FIG. 1E, the transmit end and the receive end transmit data by using the ARQ mechanism and the HARQ feedback mechanism. When the MAC layer of the receive end determines a data transmission error, the receive end may send a HARQ retransmission request to the transmit end, so that the transmit end performs HARQ retransmission. When the number of HARQ retransmissions exceeds the maximum number of retransmissions, the MAC layer of the receive end may deliver the received data to the RLC layer, and the RLC layer may send an ARQ retransmission request to the transmit end, so that the transmit end performs ARQ retransmission.

### 3.3. Retransmission mechanism at the PDCP layer

The retransmission mechanism at the PDCP layer is mainly used in cell handover scenarios. Because related configurations and buffers of lower layer protocols (RLC layer and MAC layer protocols) are cleared during a handover process, and those of the PDCP layer protocol are not, the retransmission function of the PDCP layer can ensure that data is not lost due to handover. This application mainly discusses the HARQ feedback mechanism and the ARQ mechanism.

It may be understood that, the stop-and-wait protocol requires the transmit end to stop and wait for feedback from the receive end after each data transmission in the same process, resulting in low system throughput. To resolve this problem, a solution is provided, in which the transmit end and the receive end may process a plurality of processes in parallel. In this way, when one process waits for an acknowledgement, the transmit end may continue to send data using another process. Similarly, when processing data received using one process, the receive end may continue to receive data using another process. It should be understood that "processing a plurality of processes in parallel" in this application means processing a plurality of processes simultaneously or processing a plurality of processes within a period of time.

For example, in FIG. 1F, a transmit end and a receive end may process three HARQ processes (for example, a HARQ process 0, a HARQ process 1, and a HARQ process 2) in parallel. Specifically, the transmit end may send a TB 1 using the HARQ process 0, send a TB 2 using the HARQ process 1, and send a TB 3 using the HARQ process 2. The receive end fails to receive the TB 1 using the HARQ process 0, and sends a NACK message to the transmit end. After receiving the NACK message, the transmit end retransmits the TB 1 using the HARQ process 0. The receive end successfully receives the retransmitted TB 1 using the HARQ process 0, and sends an ACK message to the transmit end. Then, the transmit end sends a next TB, for example, a TB 6, using the HARQ process 0. The receive end successfully receives the TB 6 using the HARQ process 0, and may send an ACK message to the transmit end. A process in which the receive end receives TBs using the HARQ process 1 and the HARQ process 2 is similar to the process in which the receive end receives the TB 1 or the TB 6 using the HARQ process 0. Details are not described again.

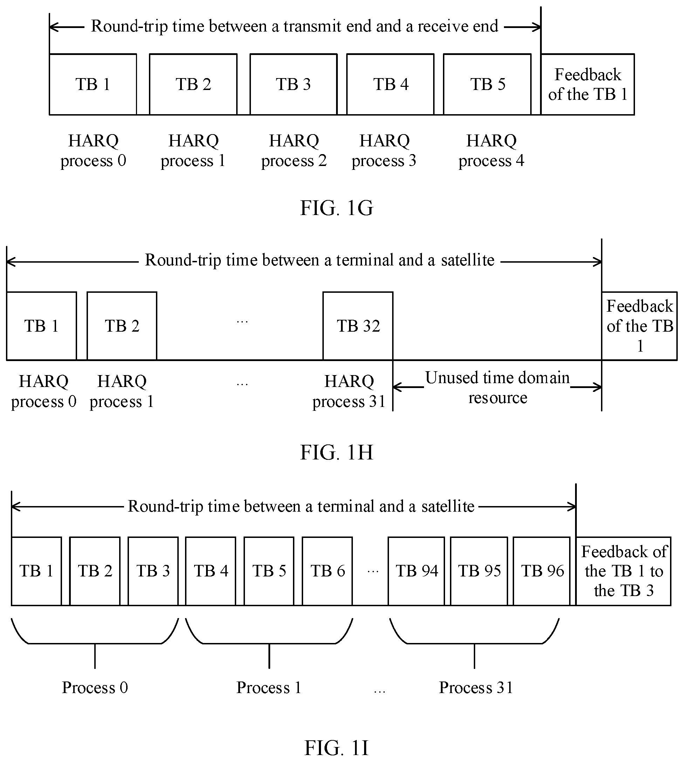

It may be understood that a plurality of TBs can be transmitted between the transmit end and the receive end simultaneously by processing a plurality of processes in parallel, to occupy as many time domain resources corresponding to an RTT between the transmit end and the receive end as possible (for ease of description, the time domain resources corresponding to the RTT between the transmit end and the receive end are referred to as RTT time domain resources below), thereby improving system throughput. For example, in FIG. 1G, in an RTT between a transmit end and a receive end, for example, in a time period from a time when the transmit end sends a TB 1 to the receive end using a HARQ process 0 to a time when the transmit end receives feedback of the TB 1 from the receive end, the transmit end may send a TB 2 to the receive end using a HARQ process 1, send a TB 3 to the receive end using a HARQ process 2, send a TB 4 to the receive end using a HARQ process 3, and send a TB 5 to the receive end using a HARQ process 4. The TB 2 to the TB 5 may fully occupy RTT time domain resources, thereby improving system throughput.

With development of communication technologies, communication scenarios are increasing. In some communication scenarios (for example, a satellite communication scenario), an RTT between a transmit end and a receive end is large, resulting in a longer time for the transmit end to wait for the receive end to feed back a decoding result. For example, a communication elevation angle of a terminal is 20 degrees. If a subcarrier spacing (subcarrier spacing, SCS) is 120 kHz and a satellite orbit altitude is greater than 110 km, an RTT between the terminal and a satellite is greater than 4 ms. If an SCS is 60 kHz and a satellite orbit altitude is greater than 230 km, an RTT between the terminal and the satellite is greater than 8 ms. If an SCS is 30 kHz and a satellite orbit altitude is greater than 510 km, an RTT between the terminal and the satellite is greater than 16 ms. If an SCS is 15 kHz and a satellite orbit altitude is greater than 1200 km, an RTT between the terminal and the satellite is greater than 32 ms. In the foregoing scenario, the RTT between the terminal and the satellite is large. If a maximum number of processes supported by the terminal is 32, the maximum number of processes supported by the terminal cannot fully occupy the RTT time domain resources. For example, a process of transmitting a TB between a terminal and a satellite may be shown in FIG. 1H. There is an unused time domain resource in the RTT time domain resources, causing a resource waste and affecting system throughput.

To resolve this problem, a solution in which a HARQ feedback mechanism is disabled and an ARQ mechanism is used for data retransmission is provided, to fully use the RTT time domain resources. For example, after the HARQ feedback mechanism is disabled, the receive end may not feed back a decoding result, or feed back a NACK message regardless of whether decoding is correct. However, this causes low spectral efficiency of data transmission. For example, when retransmission at a MAC layer is not performed between the receive end and the transmit end, a target (target) block error rate (block error rate, BLER) at a PHY layer is set to 0.01, to ensure that an error rate of a protocol data unit (protocol data unit, PDU) received at an RLC layer is less than or equal to 1%. However, when retransmission at the MAC layer is performed between the transmit end and the receive end, a target BLER at the PHY layer is set to 0.1, to ensure that an error rate of a PDU received at the RLC layer is less than or equal to 1%. Generally, a higher target BLER that is set indicates a larger modulation and coding scheme (modulation and coding scheme, MCS) index (index) corresponding to the target BLER. An MCS with a larger index corresponds to higher spectral efficiency. Therefore, after the HARQ feedback mechanism is disabled, if transmission quality still needs to be ensured, spectral efficiency of data transmission is low, and a data transmission rate is affected. In addition, after the HARQ feedback mechanism is disabled, retransmission at the MAC layer cannot be implemented between the receive end and the transmit end, and retransmission at the RLC layer or even a higher layer is required. This greatly increase retransmission latency.

To resolve the foregoing problem, this application provides a data transmission method. In the method, a transmit end may send a plurality of TBs to a receive end using one process. After receiving the plurality of TBs using one process, the receive end sends feedback information to the transmit end, to indicate whether the plurality of TBs are correctly received. In the foregoing process, the plurality of TBs may be transmitted between the transmit end and the receive end using one process, to prolong a duration of transmitting the TBs using one process, so that more RTT time domain resources can be occupied. An example in which a maximum number of processes supported by a terminal is 32 is still used for description. If three TBs can be transmitted using one process, a process of transmitting a TB between the terminal and a satellite may be shown in FIG. 1I. 32 processes may fully occupy RTT time domain resources, so that utilization of the RTT time domain resources can be improved. Therefore, in the method, spectral efficiency of data transmission can be improved, a data transmission rate can be ensured, and data retransmission latency can be lowered without disabling a HARQ feedback mechanism.

The following describes implementations of this application in detail with reference to accompanying drawings.

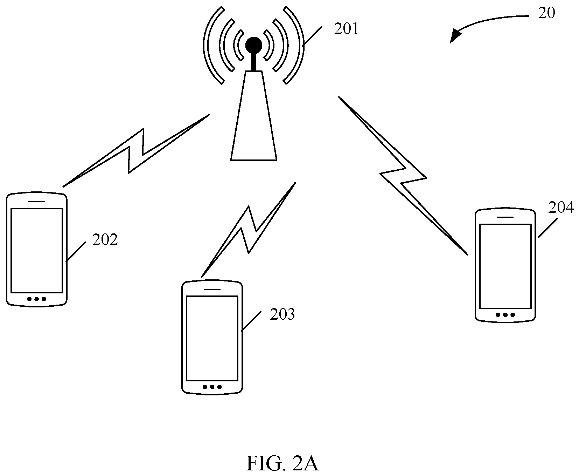

The method provided in this application may be applied to various communication systems. For example, the communication system may be a long term evolution (long term evolution, LTE) system, a 5th generation (5th generation, 5G) communication system, a wireless fidelity (wireless fidelity, Wi-Fi) system, a 3rd generation partnership project (3rd generation partnership project, 3GPP)-related communication system, an open radio access network (open radio access network, O-RAN or ORAN) communication system, or a system integrating a plurality of systems. This is not limited. 5G may also be referred to as new radio (new radio, NR). The method provided in this application is described below by using a communication system 20 shown in FIG. 2A as an example. FIG. 2A is merely a diagram, and does not constitute a limitation on an application scenario of the technical solutions provided in this application.

FIG. 2A is a diagram of an architecture of the communication system 20 according to this application. In FIG. 2A, the communication system 20 may include one or more network devices 201 (where only one network device is shown) and a terminal 202 to a terminal 204 that can communicate with the network device 201.

In FIG. 2A, the network device may provide a wireless access service for the terminal. Specifically, each network device corresponds one service coverage area, and a terminal entering the area may communicate with the network device, to receive a wireless access service provided by the network device. Optionally, the service coverage area may include one or more cells. The network device may communicate with the terminal that accesses the network device. For example, the network device sends a plurality of TBs to the terminal using one process. After receiving the plurality of TBs using one process, the terminal may send feedback information of the plurality of TBs to the network device, to indicate, to the network device, whether the plurality of TBs are correctly received. Alternatively, the terminal sends a plurality of TBs to the network device using one process. After receiving the plurality of TBs using one process, the network device may send feedback information of the plurality of TBs to the terminal, to indicate, to the terminal, whether the plurality of TBs are correctly received.

The network device in this application, for example, the network device 201, may be a device having a wireless transceiver function, and may help the terminal implement wireless access. For example, the network device is a node in a radio access network (radio access network, RAN), and may also be referred to as an access network device, a RAN node, or the like. The network device includes but is not limited to an evolved NodeB (NodeB, eNB, or e-NodeB, evolved NodeB) in LTE, an evolved NodeB in next-generation LTE (next generation eNB, ng-eNB), a NodeB in NR (gNodeB or gNB), a transmitting point (transmitting point, TP) or a transmission reception point (transmission receiving point/transmission reception point, TRP), a future evolved NodeB in 3GPP, a next-generation NodeB (next generation NodeB, gNB), a base station in a future mobile communication system, a satellite, an access node in a Wi-Fi system, a wireless relay node, a wireless backhaul node, an integrated access and backhaul (integrated access and backhaul, IAB) node, a mobile switching center, and a network device in an NTN communication system, for example, may be deployed on a high-altitude platform or a satellite. A base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. Alternatively, the network device may be a device that undertakes a function of the base station in D2D communication, internet of vehicles communication, uncrewed aerial vehicle communication, or machine communication. The network device may alternatively be a radio controller in a cloud radio access network (cloud radio access network, CRAN) scenario. The network device may alternatively be a central unit (central unit, CU), a distributed unit (distributed unit, DU), a CU-control plane (control plane, CP), a CU-user plane (user plane, UP), a radio unit (radio unit, RU), a road side unit (road side unit, RSU) with a function of the base station, a wired access gateway, a core network element, or the like. The network device may alternatively be a server, a wearable device, a machine communication device, a vehicle-mounted device, or the like. For example, an access network device in a vehicle to everything (vehicle to everything, V2X) technology may be an RSU. The following uses an example in which the network device is a base station for description. The plurality of network devices may be base stations of a same type, or may be base stations of different types. The base station may communicate with a terminal, or may communicate with a terminal through a relay station. The terminal may communicate with a plurality of base stations using different technologies. For example, the terminal may communicate with a base station supporting an LTE network, or may communicate with a base station supporting a 5G network, or may support dual connectivity to a base station in an LTE network and a base station in a 5G network.

In this application, the CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the CU may be classified into a network device in an access network, or the CU may be classified into a network device in a core network. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal in this application, for example, the terminal 202, the terminal 203, or the terminal 204, is a device having a wireless transceiver function. The terminal may be deployed on land, and include an indoor terminal, an outdoor terminal, a handheld terminal, or a vehicle-mounted terminal; or may be deployed on a water surface (for example, on a ship); or may be deployed in the air (for example, on an aircraft, a balloon, or a satellite). The terminal may also be referred to as a terminal device. The terminal device may be user equipment (user equipment, UE), a mobile station (mobile station, MS), a mobile terminal (mobile terminal, MT), or the like, or may be a device configured to provide voice or data connectivity for a user. The UE includes a handheld device with a wireless communication function, an in-vehicle device (for example, a car, a bicycle, an electric vehicle, an airplane, a ship, a train, or a high-speed train), a wearable device (for example, a smartwatch, a smart band, or a pedometer), or a computing device. For example, the UE may be a mobile phone (mobile phone), a tablet computer, a notebook computer, a palmtop computer, a mobile internet device (mobile internet device, MID), a satellite terminal, or a computer with wireless receiving/sending functions. The UE may alternatively be a virtual reality (virtual reality, VR) terminal device, an augmented reality (augmented reality, AR) terminal device, a wireless modem (modem), a smart point of sale (point of sale, POS) machine, customer premises equipment (customer premises equipment, CPE), a smart robot, a robot arm, a workshop device, a smart home device (such as a refrigerator, a television, an air conditioner, or an electric meter), a wireless terminal in industrial control, a wireless terminal in self driving, a wireless terminal in telemedicine, a wireless terminal in a smart grid (smart grid), a wireless terminal in transportation security, a wireless terminal in a smart city (smart city), a wireless terminal in a smart home (smart home), a vehicle-mounted terminal, a roadside unit (roadside unit, RSU) with a terminal function, a flight device (for example, a smart robot, a hot air balloon, an uncrewed aerial vehicle, or an airplane), or the like. The terminal may alternatively be another device having a terminal function. For example, the terminal may alternatively be a device that functions as a terminal in device to device (device to device, D2D) communication.

By way of an example but not a limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement all or part of functions without depending on smartphones, for example, smartwatches or smart glasses, and include devices that are dedicated to only one type of application function and need to collaboratively work with other devices such as smartphones, for example, various smart bands or smart jewelry for monitoring physical signs.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-to-machine interconnection and thing-to-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application. The terminal in this application may be a means of delivery, for example, a vehicle. Therefore, this application may be applied to the internet of vehicles, for example, V2X, long term evolution vehicle (long term evolution vehicle, LTE-V), and vehicle to vehicle (vehicle to vehicle, V2V).

It may be understood that, in some scenarios, roles of the network device and the terminal are relative. For example, a helicopter or an uncrewed aerial vehicle that is usually configured as a terminal may be alternatively configured as a mobile base station, and a device that accesses a RAN via the helicopter or the uncrewed aerial vehicle is configured as a terminal.

The communication system 20 shown in FIG. 2A is merely used as an example, but is not intended to limit technical solutions of this application. A person skilled in the art should understand that, during specific implementation, the communication system 20 may further include another device, and a number of network devices and a number of terminals may also be determined based on a specific requirement. This is not limited.

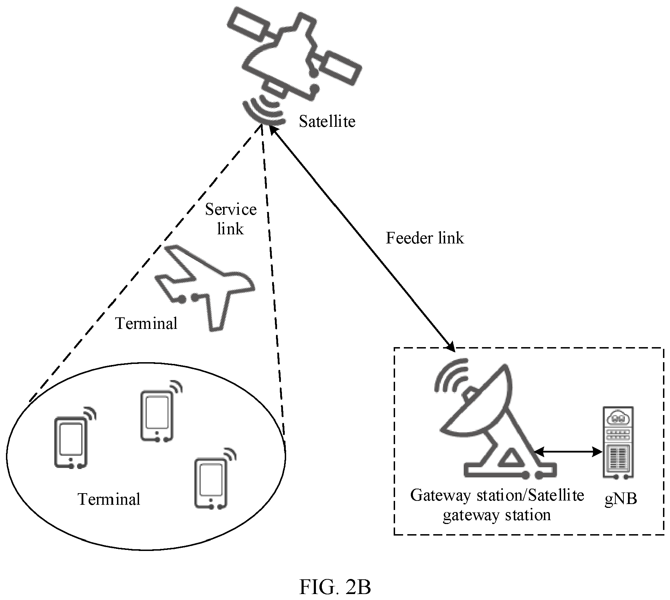

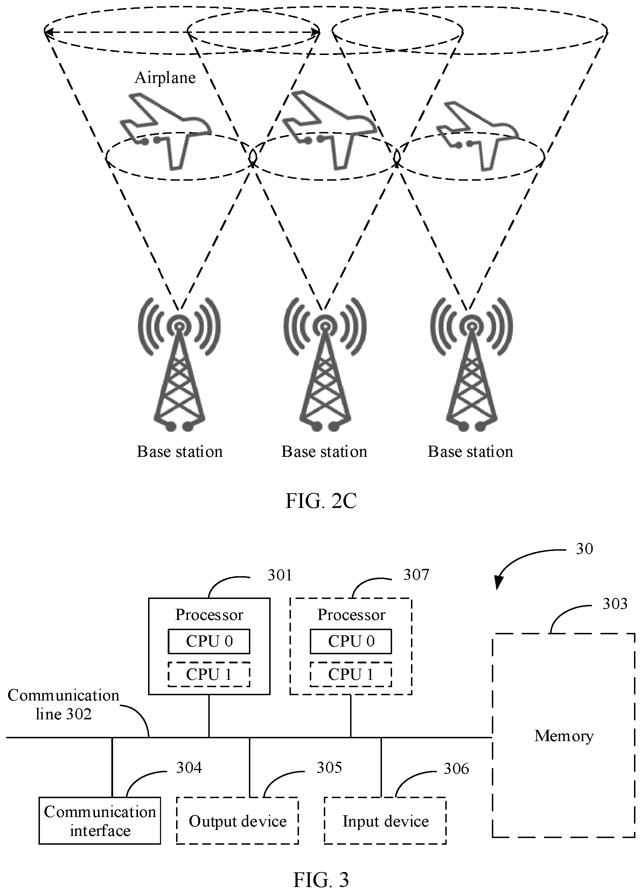

It may be understood that the communication system 20 shown in FIG. 2A is applicable to a plurality of communication scenarios, for example, a communication scenario with a long RRT. The following uses an example in which the communication system 20 is applied to a communication scenario shown in FIG. 2B or FIG. 2C for description.

The communication scenario shown in FIG. 2B includes a satellite (for example, a LEO satellite), a plurality of terminals that communicate with the satellite through a service link (service link), and a gateway station (or a satellite gateway station) that communicates with the satellite through a feeder link (feeder link). Optionally, the communication scenario further includes a gNB that communicates with the gateway station (or the satellite gateway station). Optionally, the gateway station (or the satellite gateway station) or the gNB may be connected to a core network. The satellite may be classified into a transparent (transparent) mode and a regenerative (regenerative) mode based on an operating mode.

It may be understood that the terminal 204, the terminal 202, or the terminal 203 shown in FIG. 2A may be any terminal shown in FIG. 2B, and the network device shown in FIG. 2A may be the satellite, the gateway station (or the satellite gateway station), or the gNB shown in FIG. 2B. For example, when the satellite operates in the transparent mode, the satellite has a relay and forwarding function. The gateway station (or the satellite gateway station) has all or part of functions of a base station. In this case, the gateway station (or the satellite gateway station) may be considered as the base station, and the network device shown in FIG. 2A may be the gateway station (or the satellite gateway station) shown in FIG. 2B. Optionally, in some scenarios, the base station is not deployed in the gateway station (or the satellite gateway station), but is independently deployed in the network. For example, the base station is the gNB in FIG. 2B. In this case, the network device shown in FIG. 2A may be the gNB shown in FIG. 2B. For another example, when the satellite operates in the regeneration mode, the satellite has all or part of functions of a base station, for example, has a data processing capability. In this case, the satellite may be considered as a base station, and the network device shown in FIG. 2A may be the satellite shown in FIG. 2B.

The communication scenario shown in FIG. 2C is also referred to as an air to ground (air to ground, ATG) communication scenario. The communication scenario includes a plurality of base stations and a terminal (for example, an airplane or a terminal on an airplane) that separately communicates with each base station. For example, in this scenario, a height of the terminal from the ground is 6 km to 12 km, and a coverage diameter of the base station is 100 km to 300 km. It may be understood that the terminal 204, the terminal 202, or the terminal 203 shown in FIG. 2A may be any terminal shown in FIG. 2C, and the network device shown in FIG. 2A may be any base station shown in FIG. 2C.

Optionally, each network element or device (for example, the network device 201, the terminal 202, the terminal 203, or the terminal 204) in FIG. 2A in this application may also be referred to as a communication apparatus, and the network element or device may be a general-purpose device or a dedicated device. This is not specifically limited in this application.

Optionally, related functions of each network element or device (for example, the network device 201, the terminal 202, the terminal 203, or the terminal 204) in FIG. 2A of this application may be implemented by one device, may be jointly implemented by a plurality of devices, or may be implemented by one or more functional modules in one device. This is not specifically limited in this application. It may be understood that the foregoing function may be a network element in a hardware device, or may be a software function running on dedicated hardware, or a combination of hardware and software, or an instantiated virtualized function on a platform (for example, a cloud platform).

During specific implementation, each network element or device (for example, the network device 201, the terminal 202, the terminal 203, or the terminal 204) in FIG. 2A of this application may use a composition structure shown in FIG. 3, or include components shown in FIG. 3. FIG. 3 is a diagram of a hardware structure of a communication apparatus to which this application is applicable. The communication apparatus 30 includes at least one processor 301 and at least one communication interface 304, to implement the method provided in this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transferring information between the foregoing components, for example, a bus.

The communication interface 304 is configured to communicate with another device or a communication network. The communication interface 304 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The memory 303 may be a read-only memory (read-only memory, ROM) or another type of static storage device that can store static information and instructions or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage medium, an optical disc storage medium (including a compact disc, a laser disc, an optical disc, a digital versatile disc, a Blu-ray disc, or the like) and a magnetic disk storage medium or another magnetic storage device, or any other medium that can be configured to carry or store expected program code in a form of an instruction or a data structure and that is accessible by a computer, but is not limited thereto. The memory may exist independently, and is coupled to the processor 301 through the communication line 302. The memory 303 may alternatively be integrated with the processor 301. Usually, the memory provided in this application may be non-volatile.

The memory 303 is configured to store computer-executable instructions for performing the solutions provided in this application, and the processor 301 controls execution of the computer-executable instructions. The processor 301 is configured to execute the computer-executable instructions stored in the memory 303, to implement the method provided in this application. Alternatively, optionally, in this application, the processor 301 may perform a processing-related function in the method provided below in this application, and the communication interface 304 is responsible for communicating with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive an input of a user in a plurality of manners. For example, the input device 306 may be a mouse, a keyboard, a touchscreen device, a sensor device, or the like.

It may be understood that the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

The following describes the method provided in this application with reference to the accompanying drawings. Network elements in the following embodiments may have the components shown in FIG. 3. Details are not described again.

It may be understood that, in this application, "communicate" may be understood as send and/or receive based on a specific context. The "communicate" may be a noun or a verb. When an execution entity of an action is not emphasized, the "communicate" is often used to substitute send and/or receive. For example, the phrase "communicating a TB" may be understood as "sending the TB" from a perspective of a transmit end, and may be understood as "receiving the TB" from a perspective of a receive end.

It may be understood that the "connection" in this application may be a direct connection or an indirect connection. In addition, the "connection" may be an electrical connection or a communication connection. For example, that two electrical elements A and B are connected may mean that A and B are directly connected, or may mean that A and B are indirectly connected by using another electrical element or a connection medium, so that electrical signal transmission can be performed between A and B. For another example, that two devices A and B are connected may mean that A and B are directly connected, or may mean that A and B are indirectly connected by using another communication device or a communication medium, so that A and B can communicate with each other.

It may be understood that names of messages between network elements, names of parameters in messages, or the like in the following embodiments of this application are merely examples, and there may alternatively be other names during specific implementation. This is not specifically limited in this application.

It may be understood that "sending information to... (for example, a terminal)" in this application may be understood as that a destination end of the information is the terminal, and may include directly or indirectly sending the information to the terminal. "Receiving information from... (for example, the terminal)" may be understood as that a source end of the information is the terminal, and may include directly or indirectly receiving the information from the terminal. Information may undergo necessary processing, for example, a format change, between the source end for sending the information and the destination end. However, the destination end may understand valid information from the source end. Similar descriptions in this application may be construed in a similar manner, and details are not described herein again.

It may be understood that, in this application, "/" may represent an "or" relationship between associated objects. For example, A/B may represent A or B. The term "and/or" may be used to describe three relationships that exist between associated objects. For example, A and/or B may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of technical solutions of this application, in this application, terms such as "first" and "second" may be used to distinguish between technical features with same or similar functions. The words such as "first" and "second" do not limit a number and an execution sequence, and the words such as "first" and "second" do not limit a definite difference. In this application, a term such as "example" or "for example" indicates an example, an illustration, or a description. Any embodiment or design scheme described as an "example" or "for example" should not be explained as being more preferred or having more advantages than another embodiment or design scheme. A word such as "example" or "for example" is used to present a related concept in a specific manner for ease of understanding.

It can be understood that an "embodiment" mentioned throughout this specification means that particular features, structures, or characteristics related to the embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of processes do not mean execution orders in various embodiments of this application. The execution orders of the processes should be determined based on functions and internal logic of the processes, and should not be construed as any limitation on implementation processes of this application.

It may be understood that, in this application, "indication" may include a direct indication and an indirect indication, or may include an explicit indication and an implicit indication. When a piece of indication information indicates A, the indication information may directly indicate A or indirectly indicate A, but it does not indicate that the indication information definitely carries A. Information indicated by a piece of information (for example, first indication information described below) is referred to as to-be-indicated information. In this case, in a specific implementation process, the to-be-indicated information may be indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

It may be understood that in this application, "when...", "in a case of ...", "provided that", and "if" all mean that corresponding processing is performed in an objective case, and are not intended to limit a time, do not require a determining action during implementation, and do not mean that there is another limitation.

"Simultaneously" in this application may be understood as being at a same time point, may be understood as being in a period of time, or may be understood as being in a same periodicity.

"A plurality of" in this application may be understood as two or more. For example, a plurality of TBs may be understood as two or more TBs.

In this application, unless otherwise specified, "greater than or equal to" may be replaced with "greater than" or "equal to"; and "less than or equal to" may be replaced with "less than" or "equal to". For example, "A is greater than or equal to B" may be replaced with "A is greater than B", or replaced with "A is equal to B"; and "A is less than or equal to B" may be replaced with "A is less than B", or replaced with " A is equal to B".

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, an apparatus provided in this application may also correspondingly implement these features or functions. Details are not described herein.

It may be understood that, in this application, a same step, or steps or technical features that have a same function may be mutually referenced between different embodiments.

It may be understood that, in this application, a network device and/or a terminal may perform a part or all of steps in this application. These steps are merely examples. In this application, other steps or variations of various steps may alternatively be performed. In addition, the steps may be performed in an order different from an order shown in this application, and not all steps in this application are necessarily performed.

It may be understood that, in the method provided below in this application, the method is illustrated by using an example in which the network device and the terminal are used as execution bodies of interaction illustration. However, the execution bodies of the interaction illustration are not limited in this application. For example, the network device in the method provided in the following embodiments of this application may alternatively be a chip, a chip system, or a processor that supports the network device in implementing the method, or may be a logical node, a logical module, or software that can implement all or part of functions of the network device. The terminal in the method provided in the following embodiments of this application may alternatively be a chip, a chip system, or a processor that supports the terminal in implementing the method, or may be a logical node, a logical module, or software that can implement all or part of functions of the terminal.

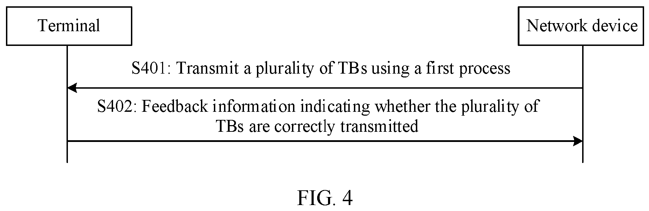

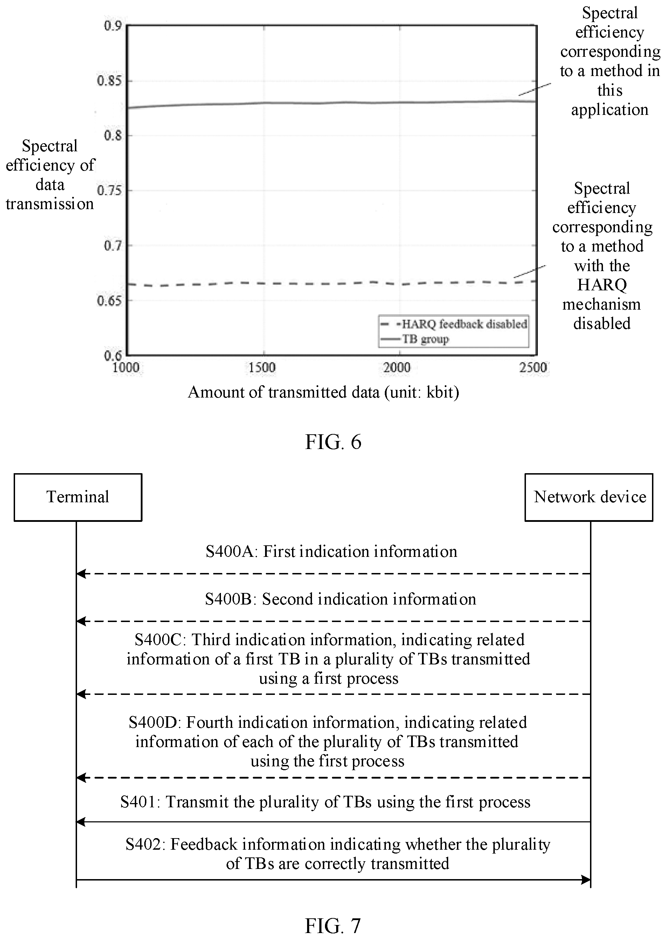

The following describes the method provided in this application by using an example in which the network device is a transmit end and the terminal is a receive end. When the terminal is the transmit end and the network device is the receive end, a process of the method provided in this application is similar to the method shown in FIG. 4 or FIG. 7. For details, refer to corresponding descriptions in the method shown in FIG. 4 or FIG. 7. A difference lies in that when the terminal is the transmit end and the network device is the receive end, a device that sends a plurality of TBs using a first process is the terminal, and a device that receives the plurality of TBs using the first process is the network device. After the network device receives the plurality of TBs, if the plurality of TBs are incorrectly decoded, the network device may schedule the terminal to perform data retransmission. The network device may send one piece of scheduling information, to enable the terminal to retransmit incorrectly decoded data, or the network device sends a plurality of pieces of scheduling information, to separately retransmit part of the plurality of incorrectly decoded TBs. For example, two TBs in the plurality of TBs are incorrectly decoded, and the network device schedules retransmission of the two TBs. The network device may send one piece of scheduling information to schedule retransmission of the two TBs, or the network device sends two pieces of scheduling information to separately schedule retransmission of the corresponding TBs.

Optionally, the network device may further send feedback information to the terminal, to indicate a decoding status of each TB to the terminal, or indicate a number of TBs that are correctly decoded, or indicate a number of TBs that are incorrectly decoded.

FIG. 4 shows a data transmission method provided in this application. The data transmission method may include the following steps.

S401: A network device sends a plurality of TBs to a terminal using a first process. Correspondingly, the terminal receives the plurality of TBs from the network device using the first process.

In this application, the network device may be the network device 201 in the communication system 20 shown in FIG. 2A, and the terminal may be any terminal in the communication system 20, for example, the terminal 202, the terminal 203, or the terminal 204.

In this application, a process number of the first process used by the network device to send the plurality of TBs is the same as a process number of the first process used by the terminal to receive the plurality of TBs. It may be understood that the former may be one of a plurality of processes used by the network device to communicate the TBs, and the latter may be one of a plurality of processes used by the terminal to communicate the TBs. Descriptions of the first process in the following embodiments of this application may be applicable to both the first process used by the network device to send the plurality of TBs and the first process used by the terminal to receive the plurality of TBs. Unified descriptions are provided herein. Details are not described below again.

It may be understood that the first process is a downlink process. For the terminal and the network device, the first process is, for example, a HARQ process.

In this application, a plurality of parallel HARQ processes may form a HARQ entity, and each uplink or downlink carrier may correspond to one HARQ entity.

In addition, the process in this application may be described in another alternative manner. For example, the process may be replaced with a thread. This is not limited.

In this application, the plurality of TBs transmitted using the first process may be described as a group of TBs or a TB group (TB group). This is not limited. The plurality of TBs may include a source TB, or include a source TB and a parity TB, or include a parity TB. When the plurality of TBs include a source TB and a parity TB, reliability of decoding by the terminal can be improved.

Optionally, time domain resources of any two of the plurality of TBs are consecutive or inconsecutive in the time domain. For example, a number of the plurality of TBs is 5. The five TBs may be respectively mapped to a slot 1 to a slot 5. Alternatively, three TBs in the five TBs are mapped to the slot 1 to the slot 3, and the remaining two TBs are mapped to a slot 5 and a slot 6. Alternatively, the five TBs are respectively mapped to the slot 1, the slot 3, the slot 6, a slot 8, and a slot 12.

In a possible implementation, the network device performs channel encoding on to-be-sent data to obtain N TBs. For example, the network device performs channel encoding on the to-be-sent data by using the method shown in FIG. 1A, to obtain the N TBs, where N is an integer greater than or equal to 2. Then, the network device may send the plurality of TBs using the first process.

It may be understood that the number of the plurality of TBs is equal to N or less than N. If the number of the plurality of TBs is equal to N, the network device may send the N TBs using the first process. If the number of the plurality of TBs is less than N (that is, the number of TBs transmitted using the first process is less than N), the network device may send the plurality of TBs using the first process, and send the remaining TBs using one or more processes other than the first process. When sending the remaining TB, the network device may use a method similar to that of sending the plurality of TBs using the first process. In other words, the network device may process a plurality of processes in parallel, and the first process is one of the plurality of processes.

For example, N is equal to 10, and the number of the plurality of TBs is 5. The network device may send five TBs using the first process, and send five TBs using a second process. Alternatively, the network device sends five TBs using the first process, sends three TBs using a second process, and sends two TBs using a third process.

It may be understood that if the network device performs outer encoding on the plurality of TBs transmitted in one process, feedback information sent by the terminal for the plurality of TBs may indicate a number of TBs that are correctly or incorrectly decoded, but does not indicate which specific TB is incorrectly or correctly decoded. Therefore, decoding feedback overheads in the process can be reduced. It should be understood that the network device may alternatively perform channel encoding by using another method. For example, the network device may directly perform LDPC encoding without performing outer encoding.

S402: The terminal sends feedback information to the network device. Correspondingly, the network device receives the feedback information from the terminal.

In a possible implementation, the terminal decodes the plurality of TBs in the first process, and sends the feedback information to the network device. Optionally, the terminal may decode the plurality of TBs blockwise, or perform decoding in a joint decoding manner. This is not limited.

In this application, the feedback information may indicate whether the plurality of TBs are correctly received, so that the network device determines whether retransmission is required. For example, the feedback information indicates whether each of the plurality of TBs is correctly received. For example, the feedback information includes a plurality of bits, and each bit corresponds to one of the plurality of TBs, indicating whether the TB is correctly received. Alternatively, the feedback information indicates a number of correctly received TBs in the plurality of TBs. For example, the feedback information includes the number of correctly received TBs. Alternatively, the feedback information indicates a number of incorrectly received TBs in the plurality of TBs. For example, the feedback information includes the number of incorrectly received TBs. Alternatively, the feedback information indicates a correctly received TB or an incorrectly received TB in the plurality of TBs. For example, the feedback information includes an identifier of the correctly received TB or an identifier of the incorrectly received TB. In this application, the correctly received TB may be understood as a TB that is received by the receive end and that is correctly decoded, and the incorrectly received TB may be understood as a TB that is not received by the receive end, or a TB that is received by the receive end and that is incorrectly decoded.

Optionally, the terminal feeds back decoding results of the plurality of TBs together. For example, the terminal may send one piece of feedback information, and the feedback information indicates a decoding result of each TB, or indicates the number of incorrectly received TBs, or indicates the number of correctly received TBs. Alternatively, the decoding results of the plurality of TBs of the terminal are fed back in a plurality of rounds/stages. For example, the terminal may send at least one piece of feedback information each time or in each stage, to indicate a decoding result of part of the plurality of TBs.

Optionally, the feedback information is carried in an ACK message or a NACK message.

Optionally, the terminal may send the feedback information to the network device using a second process. Correspondingly, the network device may receive the feedback information from the terminal using the second process. The second process is an uplink process.

Optionally, the network device may indicate, to the terminal, a number of pieces of sent feedback information (for example, feedback information for a TB in a window of the first process). For example, the network device indicates the number of pieces of feedback information by using a downlink assignment index (downlink assignment index, DAI) field in downlink control information (downlink control information, DCI), so that the terminal sends the feedback information based on an indication of the network device. For example, if the DAI field includes a bit sequence "10", it indicates that the network device indicates the terminal to send two pieces of feedback information. For another example, at a time 1, the network device sends DCI #1, and a DAI field in the DCI #1 includes a bit sequence "00", indicating that the network device indicates the terminal to send one piece of feedback information. At a time 2 after the time 1, the network device sends DCI #2, and a DAI field in the DCI #2 includes a bit sequence "01", indicating that the network device indicates the terminal to send two pieces of feedback information. The DCI #1 and the DCI #2 further indicate the terminal to send the feedback information at a time 3. In this case, the terminal sends two pieces of feedback information to the network device at the time 3.

It may be understood that if the feedback information indicates that all or part of the plurality of TBs are incorrectly received, or the feedback information indicates that part of the plurality of TBs are correctly received, the network device may perform data retransmission, for example, perform data retransmission on an incorrectly decoded TB, so that the terminal correctly receives the plurality of TBs.

Optionally, if the number of incorrectly decoded TBs is greater than or equal to 1, the number of incorrectly decoded TBs may be greater than or equal to a number of retransmitted TBs, and the number of retransmitted TBs is greater than or equal to 1. When the number of retransmitted TBs is less than the number of incorrectly decoded TBs, part of TBs may be selected not to be retransmitted this time, to implement flexibility.

Optionally, after receiving the retransmitted data, the terminal may perform joint decoding with reference to a plurality of previously received TBs, for example, perform joint decoding through outer encoding or perform joint decoding in a soft combination manner.

Optionally, after receiving the retransmitted data, the terminal may send feedback information for the retransmitted data, to indicate whether the plurality of TBs are correctly received.

Optionally, the retransmitted data sent by the network device may include a source TB, or include a source TB and a parity TB, or include a parity TB. For example, the retransmitted data includes a part or all of the plurality of TBs, or a redundancy version (redundancy version, RV) of a TB in the plurality of TBs.

Optionally, if the retransmitted data includes a parity TB, the network device may further indicate, to the terminal, a number of retransmitted parity TBs (for example, indicate by a physical downlink control channel (physical downlink control channel, PDCCH) or a DAI field), to facilitate decoding by the terminal. In addition, the number of retransmitted parity TBs may not be equal to a number of incorrectly received TBs indicated by the feedback information, for example, may be greater than the number of incorrectly received TBs, to improve decoding reliability.

Optionally, if the network device performs a plurality of retransmissions, parity TBs included in each retransmission may be the same or different.

Optionally, the terminal sends fifth indication information to the network device, and correspondingly, the network device receives the fifth indication information from the terminal. The fifth indication information indicates a number of TBs detected by the terminal, or a number of TBs correctly received by the terminal, so that the network device determines a number of TBs actually received by the terminal, thereby avoiding inconsistency between the number of TBs detected by the terminal and that of the network device. The TB detected by the terminal may include a TB correctly decoded by the terminal and a TB incorrectly decoded by the terminal.

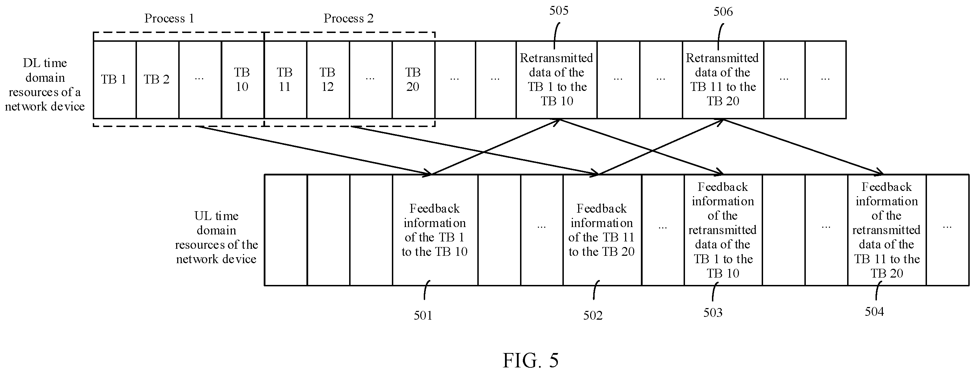

To better understand the method provided in this application, the following describes a process of transmitting a TB between a network device and a terminal by using an example in which the network device and the terminal process two processes in parallel, and 10 TBs may be transmitted using each process (or TBs transmitted using each process each time occupy 10 slots, and one TB may be transmitted in each slot). Specifically, this may be shown in FIG. 5. The network device may send a TB 1 to a TB 10 to the terminal using a process 1, and send a TB 11 to a TB 20 to the terminal using a process 2. For the TB 1 to the TB 10, the network device may receive feedback information from the terminal on a time domain resource 501. If the feedback information indicates that a part or all of the TB 1 to the TB 10 are incorrectly received, for example, indicates that the TB 1 and the TB 3 are incorrectly decoded, or indicates that a number of incorrectly decoded TBs is 2, the network device may send retransmitted data of the TB 1 to the TB 10 to the terminal on a time domain resource 505, for example, send a parity TB 1 and a parity TB 2 (the parity TB 1 and the parity TB 2 are two parity TBs corresponding to the TB 1 to the TB 10), so that the terminal performs joint decoding based on previously received TBs. Subsequently, the network device may further receive feedback information from the terminal on a time domain resource 503, to indicate whether the TB 1 to the TB 10 are correctly received. If the feedback information indicates that the TB 1 to the TB 10 are correctly received, the network device may transmit 10 TBs other than the TB 1 to the TB 20 to the terminal using the process 1, for example, a TB 21 to a TB 30. For the TB 11 to the TB 20, the network device may receive feedback information from the terminal on a time domain resource 502. If the feedback information indicates that a part or all of the TB 11 to the TB 20 are incorrectly received, for example, indicates that the TB 12 is incorrectly decoded, or indicates that a number of incorrectly decoded TBs is 1, the network device may send retransmitted data of the TB 11 to the TB 20 to the terminal on a time domain resource 506, for example, send a parity TB 11 (the parity TB 11 is one parity TB corresponding to the TB 1 to the TB 20), so that the terminal performs joint decoding based on previously received TBs. Subsequently, the network device may further receive feedback information from the terminal on a time domain resource 504, to indicate whether the TB 11 to the TB 20 are correctly received. If the feedback information indicates that the TB 11 to the TB 20 are correctly received, the network device may transmit 10 TBs other than the TB 1 to the TB 20 to the terminal using the process 2, for example, a TB 31 to a TB 40. The rest may be deduced by analogy.

It may be understood that the actions of the network device or the terminal in S401 and S402 may be performed by the processor 301 in the communication apparatus 30 shown in FIG. 3 by invoking the application program code stored in the memory 303. This is not limited in this application.

In the method shown in FIG. 4, the plurality of TBs may be transmitted between the terminal and the network device using one process, to prolong a duration of transmitting the TBs using one process, so that more RTT time domain resources can be occupied. Therefore, spectral efficiency of data transmission can be improved, a data transmission rate can be ensured, and data retransmission latency can be lowered without disabling a HARQ feedback mechanism by the terminal and the network device.

For example, in a fading (Fading) channel scenario, simulation results obtained by performing simulation on the method in this application and a method for disabling the HARQ feedback mechanism may be shown in FIG. 6. In the method in this application without disabling the HARQ feedback mechanism, a corresponding target BLER may be set to 0.1, and a corresponding target MCS is an MCS 15. In the method with disabling the HARQ feedback mechanism, a corresponding target BLER may be set to 0.01, and a corresponding target MCS is an MCS 13. Spectral efficiency of data transmission corresponding to the MCS 15 is higher than that corresponding to the MCS 13. Therefore, compared with the method with disabling the HARQ feedback mechanism, the method in this application can improve the spectral efficiency of data transmission. In FIG. 6, spectral efficiency corresponding to the method in this application is maintained between 0.8 bit/s/Hz and 0.85 bit/s/Hz, and spectral efficiency corresponding to the method with disabling the HARQ feedback mechanism is maintained between 0.65 bit/s/Hz and 0.7 bit/s/Hz. The spectral efficiency of the method in this application can be improved by 25%.

Optionally, in a possible implementation of the method shown in FIG. 4, the network device may indicate, to the terminal, a length of a first window, a number of the plurality of TBs transmitted using the first process, or a number of pieces of first scheduling information for scheduling the plurality of TBs transmitted using the first process, so that the terminal determines which TBs belong to a same process, namely, the first process, or so that the terminal determines one TB transmission using a same process (for example, the first process). Specifically, as shown in FIG. 7, the method shown in FIG. 4 may further include the following steps.

S400A: The network device sends first indication information to the terminal. Correspondingly, the terminal receives the first indication information from the network device.

In this application, the first indication information may be used to determine the TB to be transmitted in the window of the first process. In a specific application, the network device may indicate, in a plurality of manners, the TB to be transmitted in the window of one or more processes, enabling the terminal to determine the TB transmitted in the window of the first process. Designs 1 to 3 are described below as examples.

Design 1: The first indication information may indicate the length of the first window. The first window may be understood as a time domain resource, and the unit of the length of the first window may be any time domain unit, for example, a slot (slot), a frame, a subframe, a millisecond (ms), or a microsecond (um).

For example, the first window is a window of a process (referred to as a TB process below for ease of description) for transmitting TBs, for example, a window of the first process. In this example, the length of the first window may be understood as the duration from the time the TB process starts transmitting TBs to the time the TB process stops transmitting TBs, namely, the window length of the TB process. That "the TB process stops transmitting TBs" herein means that the network device pauses transmission to wait for feedback information from the terminal, rather than being caused by discontinuity of time domain resources of the plurality of TBs in the time domain. The first process is used as an example. The length of the first window is the duration for transmitting the plurality of TBs in the first process. For example, in FIG. 5, the window length of a process 1 is equal to the duration from the time a TB 1 is sent using the process 1 to the time a TB 10 is sent using the process 1, and the window length of a process 2 is equal to the duration from the time a TB 11 is sent using the process 2 to the time a TB 20 is sent using the process 2. Optionally, the actual length of the time domain resource occupied for transmitting TBs in the first window may be shorter than the length of the first window.

For example, the first window is a window for transmitting first scheduling information. The first scheduling information is for scheduling TBs, which may be transmitted using the same TB process. For example, the first scheduling information is for scheduling the plurality of TBs transmitted in the first process, and the terminal may determine that these TBs are transmitted using the same TB process, for example, the first process. In other words, the first scheduling information is for scheduling TBs transmitted in a single TB process. There may be one or more pieces of first scheduling information. In other words, this example may indicate a time period in which TBs scheduled by using the scheduling information sent within the time period can be transmitted using the same TB process. For example, the network device sends TBs to the terminal. If the network device sends scheduling information 1 to the terminal in the first window, and the scheduling information 1 is for scheduling a TB 1 and a TB 2, then the network device sends the TB 1 and the TB 2 to the terminal by using a process 1, and the terminal sends feedback information to the network device for the TB 1 and the TB 2. If the network device sends the scheduling information 1 and scheduling information 2 to the terminal in the first window, where the scheduling information 1 is for scheduling the TB 1 and the scheduling information 2 is for scheduling the TB 2, then the network device sends the TB 1 and the TB 2 to the terminal using the process 1, and the terminal sends the feedback information to the network device for the TB 1 and the TB 2.

For example, the first window is a window for transmitting the first scheduling information and all or part of the TBs scheduled by using the first scheduling information. For example, the network device sends TBs to the terminal. If the network device sends scheduling information 1 to the terminal in the first window, and the scheduling information 1 is for scheduling a TB 1 and a TB 2, and the TB 1 and the TB 2 are also in the first window, then the network device sends the TB 1 and the TB 2 to the terminal using a process 1, and the terminal sends feedback information to the network device for the TB 1 and the TB 2. If the network device sends the scheduling information 1 and scheduling information 2 to the terminal in the first window, where the scheduling information 1 is for scheduling the TB 1 and a TB 3, the scheduling information 2 is for scheduling the TB 2 and a TB 4, the TB 1 and the TB 2 are in the first window, and the TB 3 and the TB 4 are not in the first window, then the network device sends the TB 1 and the TB 2 to the terminal using the process 1, and the terminal sends the feedback information to the network device for the TB 1 and the TB 2. The network device may further send the TB 3 and the TB 4 to the terminal using the process 2, and the terminal sends feedback information to the network device for the TB 1 and the TB 2.

Design 2: The first indication information indicates a number of TBs associated with a TB process or a number of TBs mapped to a TB process. The number of TBs associated with the TB process or the number of TBs mapped to the TB process may be understood as a number of TBs that can be transmitted in a time period from a time when the TB process starts transmitting the TBs to a time when the TB process stops transmitting the TBs. The number of TBs associated with the TB process may alternatively be replaced with a number of TBs transmitted using the TB process. For example, in FIG. 5, a number of TBs associated with the process 1 is 10, and a number of TBs associated with the process 2 is also 10. In other words, the first indication information indicates a number of TBs based on which the terminal sends the feedback information.

In an example, the first indication information indicates a number of TBs associated with the first process, a number of a plurality of TBs transmitted using the first process, a number of TBs transmitted using the first process, a number of TBs mapped to the first process, or a number of TBs transmitted using the first process at a time. For example, the first indication information includes the number of the plurality of TBs, or includes an index corresponding to the number of the plurality of TBs. For example, if the number of the plurality of TBs is 5, the first indication information includes a bit sequence "101". For another example, the terminal supports communication of three TBs, four TBs, and five TBs separately in one process, an index corresponding to the three TBs is 1, an index corresponding to the four TBs is 2, and an index corresponding to the five TBs is 3. If the number of the plurality of TBs is 5, the first indication information includes a bit sequence "11".

Design 3: The first indication information indicates a number of pieces of first scheduling information. The first scheduling information is for scheduling TBs, and the TBs scheduled by using the first scheduling information may be transmitted using a same TB process. In other words, in this example, the first scheduling information may indicate a number of pieces of scheduling information for scheduling TBs that can be transmitted using a same TB process. For example, the first indication information indicates that the number of pieces of first scheduling information is 3. If the network device separately sends scheduling information 1 to scheduling information 6 to the terminal, and the scheduling information 1 to the scheduling information 6 are respectively for scheduling a TB 1 to a TB 6, the network device sends the TB 1 to the TB 3 to the terminal using a process 1, and the terminal sends feedback information to the network device for the TB 1 to the TB 3. The network device further sends the TB 4 and the TB 5 to the terminal using a process 2, and the terminal sends feedback information to the network device for the TB 4 and the TB 5.

Optionally, the first scheduling information is DCI.

In a possible implementation, the network device determines the length of the first window, the number of TBs associated with the TB process, or the number of pieces of first scheduling information, and sends the first indication information. The following uses Case 1 as an example to describe a manner in which the network device determines the length of the first window, uses Case 2 as an example to describe a manner in which the network device determines the number of TBs associated with the TB process, and uses Case 3 as an example to describe a manner in which the network device determines the number of pieces of first scheduling information.

Case 1: The length of the first window is related to an RTT between the network device and the terminal, so that the length is more suitable for the terminal, to avoid high retransmission latency.

In a possible design, in an NTN, an RTT between a network device and a terminal is related to an altitude of a satellite and a coverage area of the satellite. For example, the network device may determine the RTT based on the altitude of the satellite and the coverage area of the satellite.

It may be understood that, when the coverage area of the satellite remains unchanged, a higher altitude of the satellite indicates a longer RTT between the network device and the terminal. When the altitude of the satellite remains unchanged, a larger coverage area of the satellite indicates a longer RTT between the terminal and the network device. For example, if the network device uses an edge of the coverage area of the satellite as a reference point, the RTT increases accordingly with the coverage area.

It may be understood that if the network device is the satellite shown in FIG. 2B, the RTT between the network device and the terminal is an RTT between the satellite and the terminal. If the network device is the gateway station shown in FIG. 2B, the RTT between the network device and the terminal is a sum of an RTT 1 and an RTT 2, where the RTT 1 is an RTT between a satellite and the terminal, and the RTT 2 is an RTT between the satellite and the gateway station. If the network device is the gNB shown in FIG. 2B, the RTT between the network device and the terminal is a sum of an RTT 1, an RTT 2, and an RTT 3, where the RTT 1 is an RTT between a satellite and the terminal, the RTT 2 is an RTT between the satellite and a gateway station, and the RTT 3 is an RTT between the gateway station and the gNB.

In another possible design, in an TN, the RTT between the network device and the terminal is related to a coverage area of the network device or a coverage area of a cell accessed by the terminal. For example, the network device may determine the RTT based on the coverage area of the network device or the coverage area of the cell accessed by the terminal.

It may be understood that a larger coverage area of the network device or a larger coverage area of the cell accessed by the terminal indicates a larger RTT between the terminal and the network device. For example, if the network device uses an edge of the coverage area as a reference point, the RTT increases accordingly with the coverage area.

It may be understood that if the network device is the base station shown in FIG. 2C, the RTT between the network device and the terminal is an RTT between the base station and the airplane.

In a possible design, the length of the first window and the RTT between the network device and the terminal may satisfy the following relationship: $T = \left⌈RTT/P\right⌉$*. T* is the length of the first window, *RTT* is the RTT between the network device and the terminal, for example, a maximum round-trip time between the network device and the terminal, and *P* is a preset parameter, a parameter determined by the network device, or a parameter configured by a core network.

It should be understood that the relationship is merely an example. During specific application, the length of the first window and the RTT between the network device and the terminal may further satisfy another relationship. This is not limited. For example, the length of the first window and the RTT between the network device and the terminal may satisfy the following relationship (1) or relationship (2): $T = \left⌊RTT/P\right⌋ ;$ and $T = \left⌈RTT/P/t\right⌉ ; or T = \left⌊RTT/P/t\right⌋ .$

It may be understood that in the relationship (2), $\left⌈RTT/P\right⌉$ or $\left⌊RTT/P\right⌋$ is quantized, and t is a quantized time unit, for example, t is equal to a time length of one slot. It should be understood that t may alternatively be another time unit, for example, 1 ms, 1 µs, a subframe time length, or a frame time length. For example, if $T = \left⌈RTT/P/t\right⌉$, the RTT between the network device and the terminal is 40 ms, P=32, and the first window is a window of a first process, $\left⌈RTT/P\right⌉ = 1 ms$. The network device may further perform quantization at a granularity of a slot. For example, when SCS=120 kHz, one slot is equal to 0.125 ms, and $T = \left⌈40/32/0.125\right⌉ = 10$. In other words, a duration of the window of the first process is 10 slots. If each slot may be mapped to one TB, 10 TBs may be transmitted using the first process.

Optionally, the length of the first window is further related to a number of TB processes supported by the terminal, so that processes processed in parallel by the terminal occupy as many RTT time domain resources as possible, to avoid a waste of time domain resources. For example, the number of TB processes supported by the terminal may be a maximum number of TB processes supported by the terminal, a minimum number of TB processes supported by the terminal, or the like. This is not limited. For example, *P* may be replaced with a number of TB processes supported by the terminal.

It should be understood that the maximum number of TB processes indicates an upper limit of the number of TB processes supported by the terminal, and does not mean that all TB processes are used.

It may be understood that lengths of different first windows may be the same or different in this application. During specific implementation, the network device may indicate a length of one first window, or indicate a length of each first window. In this way, the terminal can determine a time domain resource of each first window.

For example, if lengths of different first windows are the same, the network device may indicate a length of one first window. The terminal may determine a time domain resource of each first window with reference to a time domain position of any first window (which may be a time domain start position or a time domain end position of the first window). For example, after a plurality of first windows are sorted in ascending order of time domain resources, a time domain position of an n^{th} first window=a time domain position of a 1^{st} first window+(n-1)*the length of the first window. The 1^{st} first window is a first window that is in the plurality of first windows and that is at an earliest time domain position, and n is an integer greater than or equal to 1. Optionally, the time domain position of the 1^{st} first window may be defined in a protocol (for example, located in a slot 0), preconfigured, or configured by the network device. For example, the network device indicates, by using the first indication information, that the length of the first window is 10 slots. If a time domain start position of the 1^{st} first window is the slot 0, and an end position is a slot 9, the terminal may determine that a time domain start position of a 2^{nd} first window is a slot 10, an end position is a slot 19, a time domain start position of a 3^{rd} first window is a slot 20, and an end position is a slot 29. The rest may be deduced by analogy. The terminal may further determine that a time domain resource of the 1^{st} first window includes the slot 0 to the slot 9, a time domain resource of the 2^{nd} first window includes the slot 10 to the slot 19, and a time domain resource of the 3^{rd} first window includes the slot 20 to the slot 29. The rest may be deduced by analogy.

For example, if lengths of different first windows are different, the network device may indicate a length of each first window. The terminal may determine a time domain resource of each first window with reference to a time domain start position or a time domain end position of any first window. For example, the network device indicates, by using the first indication information, that lengths of three first windows are 10 slots, 8 slots, and 12 slots respectively. If a time domain start position of a 1^{st} first window is a slot 0, the terminal may determine that a time domain start position of a 2^{nd} first window is a slot 10, and a time domain start position of a 3^{rd} first window is a slot 18. The terminal may further determine that a time domain resource of the 1^{st} first window includes the slot 0 to a slot 9, a time domain resource of the 2^{nd} first window includes the slot 10 to a slot 17, and a time domain resource of the 3^{rd} first window includes the slot 18 to a slot 29.

Optionally, the network device may further indicate a time domain position of at least one first window. For example, the network device sends second indication information to the terminal, to indicate a time domain position of the first window, for example, a time domain position of a window of the first process. For details, refer to corresponding descriptions in the following S400B.

Optionally, to flexibly schedule the time domain resource of the first window, the network device may further indicate a first offset, and the first offset is an offset between a time domain position of any first window and a reference time domain position. The reference time domain position is preset, specified in a protocol, or indicated by the network device. In this way, the terminal may determine the time domain resource of each first window with reference to the reference time domain position and the first offset. For example, after a plurality of first windows are sorted in ascending order of time domain resources, a time domain position of an n^{th} first window=the reference time domain position+the first offset+(n-1)*the length of the first window.

For example, the network device indicates, by using the first indication information, that the length of the first window is 10 slots, and the reference time domain position is a slot 0, and the network device further indicates that the first offset is 5. In this case, the terminal may determine that a time domain start position of a 1^{st} first window is a slot 5, a time domain start position of a 2^{nd} first window is a slot 15, a time domain start position of a 3^{rd} first window is a slot 25. The rest may be deduced by analogy. The terminal may further determine that a time domain resource of the 1^{st} first window includes the slot 5 to a slot 14, a time domain resource of the 2^{nd} first window includes the slot 15 to a slot 24, and a time domain resource of the 3^{rd} first window includes the slot 25 to a slot 34.

Case 2: The number of TBs associated with the TB process is related to an RTT between the network device and the terminal, so that the number of TBs mapped to the TB process is more suitable for the terminal, to avoid high retransmission latency.

For a description of the RTT between the network device and the terminal, refer to the description corresponding to Case 1. Details are not described again.

In a possible design, the number of TBs associated with the TB process and the RTT between the network device and the terminal may satisfy the following relationship: $S = \left⌈RTT/Q\right⌉$*. S* is the number of TBs associated with the TB process, *RTT* is the RTT between the network device and the terminal, and Q is a preset parameter, a parameter determined by the network device, or a parameter configured by a core network.

It should be understood that the relationship is merely an example. During specific application, the number of TBs associated with the TB process and the RTT between the network device and the terminal may further satisfy another relationship. This is not limited. For example, the number of TBs associated with the TB process and the RTT between the network device and the terminal may satisfy the following relationship (3) or relationship (4): $S = \left⌊RTT/Q\right⌋ ;$ and $S = \left⌈RTT/Q/y\right⌉ ; or S = \left⌊RTT/Q/y\right⌋ .$

It may be understood that the relationship (4) is quantization of $\left⌈RTT/Q\right⌉$ or $\left⌊RTT/Q\right⌋$*,* and y may be a length of a time domain resource occupied by one TB, or y is a length of one time unit, for example, a time length of one slot, or may be a value of another time unit. A quantization process of the relationship (4) is similar to the quantization process of the relationship (2). For details, refer to the foregoing descriptions of the relationship (2). Details are not described again.

Optionally, the number of TBs associated with the TB process is further related to a number of TB processes supported by the terminal, so that TB processes processed in parallel by the terminal occupy as many RTT time domain resources as possible, to avoid a waste of time domain resources. For example, Q may be replaced with the number of TB processes supported by the terminal.

It may be understood that, in this application, in a plurality of TB processes processed by the network device or the terminal in parallel, numbers of TBs associated with different TB processes may be the same or different. The network device may indicate a number of TBs associated with one TB process, or indicate a number of TBs associated with each TB process. For example, if numbers of TBs associated with different TB processes are the same, the network device may indicate the number of TBs associated with one TB process. If numbers of TBs associated with different TB processes are different, the network device may indicate the number of TBs associated with each TB process. For example, the network device sends one piece of indication information to indicate the number of TBs associated with each TB process, or the network device sends a plurality of pieces of indication information (for example, sends a plurality of pieces of first indication information), where the plurality of pieces of indication information separately indicate the number of TBs associated with each TB process.

Optionally, the network device further indicates a time domain position of a plurality of TBs transmitted using at least one of the plurality of TB processes. For example, the network device sends second indication information to the terminal, to indicate the time domain position of the plurality of TBs transmitted using the first process. For details, refer to corresponding descriptions in the following S400B.

Case 3: The number of pieces of first scheduling information is related to an RTT between the network device and the terminal, so that the number of TBs mapped to the TB process is more suitable for the terminal, to avoid high retransmission latency.

For a description of the RTT between the network device and the terminal, refer to the description corresponding to Case 1. Details are not described again.

It may be understood that the number of pieces of first scheduling information is further related to a number of TBs scheduled by using the first scheduling information. Optionally, the number of pieces of first scheduling information is further related to a number of TB processes supported by the terminal, so that TB processes processed in parallel by the terminal occupy as many RTT time domain resources as possible, to avoid a waste of time domain resources.

For example, if one piece of scheduling information may schedule one TB, a manner of determining the number of pieces of first scheduling information is the same as a manner of determining the number of TBs associated with the TB process. If X TBs may be scheduled by one piece of scheduling information, and X is an integer greater than or equal to 1, X may represent a length of a time domain resource occupied by the X scheduled TBs, or X is a length of one time unit, for example, a time length of one slot, or may be a value of another time unit. The number of pieces of first scheduling information and the RTT between the network device and the terminal may satisfy the following relationship: $Z = \left⌈RTT/Q\right⌉$; or $Z = \left⌈RTT/Q/X\right⌉$; or $Z = \left⌊RTT/Q/X\right⌋$; or $Z = \left⌈RTT/Q/X/y\right⌉$; or $Z = \left⌈RTT/Q/X/y\right⌉$*. Z* is the number of pieces of first scheduling information, and for other parameters, refer to the foregoing corresponding descriptions.

It should be understood that the formulas in the foregoing Case 1 to Case 3 are merely examples, and various variations of the foregoing formulas, for example, adding a number, subtracting a number, multiplying by a coefficient, or dividing by a coefficient, fall within the protection scope of this application.

It may be understood that, in this application, in a plurality of TB processes processed by the network device or the terminal in parallel, numbers of pieces of first scheduling information corresponding to different TB processes may be the same or different. The network device may indicate a number of pieces of first scheduling information corresponding to one TB process, or indicate a number of pieces of first scheduling information corresponding to each TB process. For example, if the numbers of pieces of first scheduling information corresponding to different TB processes are the same, the network device may indicate the number of pieces of first scheduling information corresponding to one TB process. If the numbers of pieces of first scheduling information corresponding to different TB processes are different, the network device may indicate the number of pieces of first scheduling information corresponding to each TB process. For example, the network device sends one piece of indication information to indicate the number of pieces of first scheduling information corresponding to each TB process, or the network device sends a plurality of pieces of indication information (for example, sends a plurality of pieces of first indication information), where the plurality of pieces of indication information separately indicate the number of pieces of first scheduling information corresponding to each TB process.

Optionally, the network device further indicates a time domain position of the first scheduling information. For example, the network device sends second indication information to the terminal, to indicate the time domain position of the first scheduling information for scheduling the plurality of TBs transmitted using the first process. For details, refer to corresponding descriptions in the following S400B. Optionally, the terminal may perform blind detection based on the time domain position of the first scheduling information of the plurality of TBs transmitted using the first process, to obtain the scheduling information.

Optionally, for the case 1, the case 2, or the case 3, the first indication information may be carried in a broadcast message such as a system information block (system information block, SIB) 1, other system information (other system information, OSI), or a master information block (master information block, MIB). Alternatively, the first indication information may be carried in radio resource control (radio resource control, RRC) signaling, DCI, group DCI, a MAC control element (control element, CE), or a PDCCH. The RRC signaling includes an RRC setup (RRC setup) message, an RRC reconfiguration (RRC reconfiguration) message, an RRC resume (RRC resume) message, or the like. It may be understood that the first indication information may be carried in one or more fields included in the foregoing message. For example, the first indication information is carried in the DCI, and the first indication information may be carried in a DAI field. Optionally, the DAI field may further indicate a number of TBs currently transmitted in the window of the first process, so that the terminal determines whether there is a TB detection is missed. For example, at a time 1, the network device has transmitted one TB, and the network device indicates that one TB is transmitted in the window of the first process. At a time 2, the network device has transmitted two TBs, and the network device indicates that two TBs are transmitted in the window of the first process. It may be understood that the DAI field indicates the number of TBs currently transmitted in the window of the first process, and therefore the terminal sends feedback information based on the indication of the network device. For example, the terminal may feed back, based on the DAI field, whether each TB is correctly received, or feed back a number of correctly received TBs, or feed back a number of incorrectly received TBs. Alternatively, the first indication information may be sent to the terminal by using a table. Alternatively, the first indication information may be transmitted with data or transmitted on a separately allocated PDSCH bearer.

Optionally, the network device may send the first indication information to the terminal for a plurality of times, to adjust a corresponding parameter, for example, adjust the length of the first window, the number of TBs associated with the TB process, or the number of pieces of first scheduling information.

It may be understood that the network device may schedule a plurality of TBs transmitted using the first process, so that the terminal receives the plurality of TBs using the first process through scheduling by the network device. For example, the network device may schedule a plurality of TBs by using one piece of scheduling information (for example, a plurality of TBs are scheduled by using one piece of DCI), to reduce signaling overheads. Alternatively, the network device may schedule the plurality of TBs by using a plurality of pieces of scheduling information (for example, a plurality of pieces of DCI are sent, and one TB is scheduled by using each piece of DCI). In this way, different TBs can be flexibly scheduled. In addition, when the terminal incorrectly detects one piece of scheduling information, the terminal can still detect and receive scheduling information corresponding to another TB, without causing all TBs in the first process to fail to be received. Therefore, a number of retransmissions can be reduced.

The scheduling may be understood as that scheduling information sent by the network device indicates at least one of the following: a time domain position of a first window, a time domain resource of a TB, whether a TB is retransmitted data, a number of transmissions of a TB, a coding group to which a TB belongs, an order of a TB in a coding group to which the TB belongs, an order of a TB in a plurality of TBs, whether a TB is a parity TB, or the like. It should be understood that, during specific application, the scheduling information sent by the network device may include more or less information than the foregoing information. This is not limited. An objective of the network device to schedule the information is to enable the terminal to receive a corresponding TB, and/or enable the terminal to determine TBs for which feedback information is sent, and/or improve a decode success probability of the terminal. The following specifically describes a manner in which the network device schedules the foregoing information.

Optionally, in a possible implementation of the method shown in FIG. 4, the network device may indicate a time domain position of a first window to the terminal, or indicate a time domain position of a plurality of TBs transmitted in a first process, or indicate a time domain position of first scheduling information (for example, a scheduling information time domain resource in the first window), so that the terminal determines which TBs belong to a same process, and subsequently can send feedback information for these TBs. Specifically, as shown in FIG. 7, the method shown in FIG. 4 may further include the following steps.

S400B: The network device sends second indication information to the terminal. Correspondingly, the terminal receives the second indication information from the network device.

For the foregoing design 1, the second indication information indicates the time domain position of the first window.

In an example, the time domain position may be a time domain start position of the first window or a time domain end position of the first window. In this way, the terminal may determine, based on the time domain position and the length of the first window, which TBs belong to a same process. For example, the first window is a window of a first process, and the terminal may determine that all TBs received in the first window belong to the first process. For example, the first window is a window for transmitting first scheduling information, and the terminal may determine that all TBs scheduled by using the first scheduling information received in the first window belong to the first process. For example, the first window is a window for transmitting first scheduling information and all or part of TBs scheduled by using the first scheduling information. The terminal may determine that all TBs that are in the first window and that are scheduled by using the first scheduling information received in the first window belong to the first process.

The following describes a manner of indicating the time domain position of the first window by using the second indication information.

For example, the second indication information may include an identifier of a time domain resource on which the time domain position is located. For example, if the second indication information includes a slot 1, it indicates that a time domain start position or a time domain end position of the first window is in the slot 1.

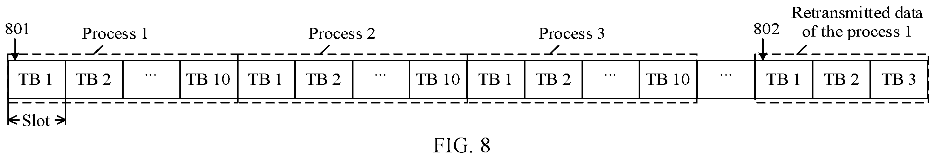

For example, the second indication information includes at least one bit, and the at least one bit indicates whether the time domain position of the first window exists on the time domain resource on which the second indication information is located, or the at least one bit indicates whether the time domain resource on which the second indication information is located is the time domain start position of the first window, or the at least one bit indicates whether the time domain resource on which the second indication information is located is the time domain end position of the first window. For example, in FIG. 8, the network device may send second indication information at a time domain position 801, to indicate whether a slot in which the time domain position 801 is located is a time domain start position of a window of a first process.

In FIG. 8, a time domain resource of a process 1, a time domain resource of a process 2, and a time domain resource of a process 3 are consecutive in the time domain. During specific application, the time domain resources may be inconsecutive in the time domain. For example, the process 1 occupies a slot 0 to a slot 4, the process 2 occupies a slot 6 to a slot 10, and the process 3 occupies a slot 11 to a slot 15. For another example, a TB group transmitted using the process 1 occupies a slot 0 and a slot 4, a TB group transmitted using the process 2 occupies a slot 6 and a slot 10, and a TB group transmitted using the process 3 occupies a slot 11, a slot 13, and a slot 15.

For example, a new data indicator (new data indicator, NDI) field in DCI on a control channel indicates that a plurality of TBs (or a TB group) transmitted using the first process are initially transmitted (or newly transmitted) TBs. In a same process, if the NDI field is flipped, for example, a value of an NDI field received last time is "0", and a value of an NDI field received this time is "1", that the NDI field is flipped indicates that a group of new TB data is transmitted, and the second indication information indicates that a slot carrying the second indication information or a slot carrying the NDI field is the time domain start position of the first window. Alternatively, a value of an NDI field received last time is "1", and a value of an NDI field received this time is "0". In this case, that the NDI field is flipped indicates that a group of new TB data is transmitted, and the second indication information indicates that a slot carrying the second indication information or a slot carrying the NDI field is the time domain start position of the first window.

For example, the second indication information includes at least one bit, and the at least one bit indicates an offset between a reference time domain position and a time domain position of the first window. The reference time domain position may be preset (for example, a slot for transmitting the second indication information) or indicated by the network device. For example, the reference time domain position is a time domain resource on which the second indication information is located. The network device sends the second indication information in a slot 1, and an offset indicated by the second indication information is 2. In this case, the terminal may determine that the time domain position of the first window is a slot 3. If the second indication information indicates downlink transmission, the slot 3 is a downlink slot. If the second indication information indicates uplink transmission, the slot 3 is an uplink slot.

Optionally, the second indication information may further indicate the reference time domain position. For example, if a value of a bit that indicates the reference time domain position in the second indication information is "1", it indicates that the reference time domain position is located in a slot in which the second indication information is located. If a value of a bit that indicates the reference time domain position in the second indication information is "0", it indicates that the reference time domain position is not located in a slot in which the second indication information is located. The reverse is also applicable.

In another example, the second indication information indicates a time domain position occupied by the first window. In this way, the terminal may determine, based on the time domain position, which TBs belong to a same process.

For example, the first window is a window of the first process, and the second indication information indicates a time domain position of each of the plurality of TBs or a time domain position of each of the plurality of TBs in the window based on a bitmap (bitmap). For example, the second indication information includes W bits, W is greater than or equal to a number of the plurality of TBs, and one of the W bits corresponds to one time domain resource, and indicates whether a TB is transmitted on the time domain resource. For example, the number of the plurality of TBs is 3, and W is equal to 4. The second indication information includes a bit sequence "1011". 4 bits in the bit sequence respectively correspond to a slot 0 to a slot 3. In this case, the bit sequence indicates that TBs are transmitted in the slot 0, the slot 2, and the slot 3. It may be understood that, in this example, a duration of the window of the first process is four slots.

For example, the first window is the window of the first process, and there are a plurality of pieces of second indication information. For example, a number of pieces of second indication information is the same as the number of the plurality of TBs, and each piece of second indication information indicates a time domain position of each TB. For example, one piece of second indication information may indicate an identifier of a time domain resource on which a corresponding TB is located. The terminal may blindly detect the second indication information, to determine the time domain position of each TB. Optionally, the second indication information is carried in scheduling information of a control channel.

For example, the first window is a window for transmitting the first scheduling information, and the second indication information indicates a time domain position of each of the plurality of pieces of first scheduling information based on a bitmap. For details, refer to the manner of indicating the time domain position of each of the plurality of TBs by using the second indication information based on a bitmap.

It may be understood that when the first window is a window for transmitting the first scheduling information, after the network device indicates the time domain position of the first window (for example, by indicating a time domain start position or a time domain end position of the first window), the terminal may determine the time domain position of the first window (for example, the terminal may determine the time domain position of the first window based on an indication of the network device and a length of the first window). Subsequently, the terminal may blindly detect scheduling information (for example, the scheduling information is carried in DCI of a control channel). If a time domain resource of the scheduling information blindly detected by the terminal is located is in the first window, the terminal determines that the scheduling information is the first scheduling information, and a TB scheduled by using the scheduling information may be transmitted using the first process. In other words, TBs scheduled by using scheduling information obtained by the terminal through blind detection at the time domain position of the first window belong to a same TB group, and may be transmitted using a same process.

Optionally, the network device may further indicate a frequency domain position of the first window to the terminal. For example, the second indication information further indicates the frequency domain position of the first window, or the network device further sends seventh indication information to the terminal, to indicate the frequency domain position of the first window. Optionally, there are a plurality of pieces of second indication information or seventh indication information, to respectively indicate different frequency domain positions. For example, the first window is the window of the first process, and a plurality of pieces of second indication information or seventh indication information separately indicate a frequency domain position of each TB.

It may be understood that the foregoing describes a specific manner in which the network device schedules the time domain resource of the first window, and the network device may schedule time domain resources of a plurality of first windows by using a method similar to the foregoing method.

For the design 2, the second indication information indicates time domain positions of a plurality of TBs transmitted using the first process.

In an example, the second indication information indicates a time domain position of a TB that is in the plurality of TBs and that is at an earliest time domain position. In this way, the terminal may determine that a total of *S* TBs from the TB to a subsequently scheduled TB are jointly mapped to one process. *S* is a number of the plurality of TBs. Similarly, the second indication information indicates a time domain position of a TB that is in the plurality of TBs and that is at a latest time domain position. In this way, the terminal may determine that a total of *S* TBs from the TB to a previously scheduled TB are jointly mapped to one process.

For example, in FIG. 8, the network device sends the second indication information at a time domain position 801, to indicate that a slot in which the time domain position 801 is located is a time domain position of a start TB in the plurality of TBs mapped to one process. The terminal may determine that a total of 10 TBs from a TB received in the slot to a subsequently scheduled TB are jointly mapped to one process, for example, a process 1.

For example, an NDI field in DCI on a control channel indicates that a plurality of TBs (a TB group) transmitted using the first process are initially transmitted (or newly transmitted) TBs. In a same process, if the NDI field is flipped, for example, a value of an NDI field received last time is "0", and a value of an NDI field received this time is "1", that the NDI field is flipped indicates that a group of new TB data is transmitted, and the second indication information indicates that a slot carrying the second indication information or a slot carrying the NDI field is the time domain position of the start TB transmitted using the first process. Alternatively, a value of an NDI field received last time is "1", and a value of an NDI field received this time is "0". In this case, that the NDI field is flipped indicates that a group of new TB data is transmitted, and the second indication information indicates that a slot carrying the second indication information or a slot carrying the NDI field is the time domain position of the start TB transmitted using the first process.

For example, the second indication information (for example, the second indication information is carried in scheduling information) indicates a time domain position of each of the plurality of TBs, so that the terminal directly determines the time domain position of each TB, thereby simplifying an operation of the terminal. For example, the network device indicates the time domain position of each TB based on a bitmap.

For example, there are a plurality of pieces of second indication information (for example, the second indication information is carried in different scheduling information). For example, a number of pieces of the second indication information is the same as the number of the plurality of TBs, and each piece of second indication information indicates a time domain position of each TB.

Optionally, the network device may further indicate a frequency domain resource of each of the plurality of TBs to the terminal. For example, the second indication information further indicates a frequency domain resource of each of the plurality of TBs. Alternatively, there are a plurality of pieces of second indication information, and each piece of second indication information indicates a frequency domain position of each TB.

It may be understood that the foregoing describes a specific manner in which the network device schedules time domain resources of the plurality of TBs transmitted using the first process, and the network device may schedule, by using a method similar to the foregoing method, time domain resources of TBs transmitted using a process other than the first process in a plurality of processes.

For the design 3, the second indication information indicates a time domain position of the first scheduling information.

For example, if there is one piece of first scheduling information, the second indication information indicates a time domain position of the one piece of first scheduling information. For example, the second indication information includes an identifier of a time domain resource on which the first scheduling information is located. If there are a plurality of pieces of first scheduling information, the second indication information indicates a time domain position of each piece of first scheduling information. For example, the network device indicates the time domain position of each piece of first scheduling information based on a bitmap. In this way, the terminal may determine that TBs scheduled by using the first scheduling information received at these time domain positions are jointly mapped to one process.

For example, if there are a plurality of pieces of first scheduling information, the second indication information indicates a time domain position of first scheduling information at an earliest time domain position in the plurality of pieces of first scheduling information. In this way, the terminal may determine that TBs scheduled by *Z* pieces of first scheduling information in total from the first scheduling information to subsequently received first scheduling information are jointly mapped to one process. *Z* is a number of pieces of the first scheduling information. For example, the second indication information may indicate whether a time domain resource on which the second indication information is located is a time domain position of first scheduling information at an earliest time domain position. Similarly, the second indication information indicates a time domain position of first scheduling information that is in the plurality of pieces of first scheduling information and that is at a latest time domain position. In this way, the terminal may determine that TBs scheduled by *Z* pieces of first scheduling information in total from the first scheduling information to previously received first scheduling information are jointly mapped to one process.

For example, there are a plurality of pieces of second indication information. For example, a number of pieces of second indication information is the same as the number of pieces of first scheduling information, and each piece of second indication information indicates a time domain position of each first scheduling information.

Optionally, the network device may further indicate a frequency domain resource of each piece of first scheduling information to the terminal. For example, the second indication information further indicates a frequency domain resource of each piece of first scheduling information. Alternatively, there are a plurality of pieces of second indication information, and each piece of second indication information indicates a frequency domain position of each piece of first scheduling information.

Optionally, the second indication information may be carried in a broadcast message like a SIB1, OSI, or a MIB. Alternatively, the second indication information may be carried in RRC signaling, DCI, group DCI, a MAC CE, or a PDCCH. It may be understood that the second indication information may be carried in one or more fields included in the foregoing message. For example, the second indication information is carried in the DCI, and the second indication information may be carried in an NDI field. Alternatively, the second indication information may be sent to the terminal by using a table. Alternatively, the second indication information may be transmitted with data or transmitted on a separately allocated PDSCH bearer.

Optionally, the network device may schedule retransmitted data. For example, the network device sends indication information at a time domain position 802 shown in FIG. 8, to indicate whether a 1^{st} TB in retransmitted data of the process 1 is transmitted on a time domain resource on which the time domain position 802 is located. Alternatively, the network device may send indication information to the terminal, to indicate a time domain position of each TB in the retransmitted data, for example, indicate the time domain position of each TB in the retransmitted data based on a bitmap.

Optionally, in a possible implementation of the method shown in FIG. 4, the plurality of TBs transmitted using the first process include a first TB, and the network device may indicate related information of the first TB, so that the terminal performs decoding based on the related information of the first TB. Specifically, as shown in FIG. 7, the method shown in FIG. 4 may further include the following steps.

S400C: The network device sends third indication information to the terminal. Correspondingly, the terminal receives the third indication information from the network device.

In this application, the third indication information may indicate at least one of the following: whether a first TB is retransmitted data, a number of transmissions of the first TB, a coding group to which the first TB belongs, an order of the first TB in a first coding group, an order of the first TB in a plurality of TBs transmitted using a first process, whether the first TB is a parity TB, or whether the first TB is a source TB. The first coding group is the coding group to which the first TB belongs. For example, the coding group includes several TBs obtained through outer encoding.

Optionally, the third indication information may be carried in a broadcast message like a SIB1, OSI, or a MIB. Alternatively, the third indication information may be carried in RRC signaling, DCI, group DCI, a MAC CE, or a PDCCH. It may be understood that information included in the third indication information may be carried in one or more fields included in the foregoing message. Alternatively, the third indication information may be sent to the terminal by using a table. Alternatively, the third indication information may be transmitted with data or transmitted on a separately allocated PDSCH bearer. The following uses an example in which the third indication information is carried in DCI to describe a manner of indicating the foregoing information by using the third indication information.

For example, an NDI field in the DCI may indicate whether the first TB is retransmitted data, so that the terminal can determine whether the first TB is new data or retransmitted data, to facilitate decoding by the terminal. For example, if a bit included in the NDI field changes or is flipped, it indicates that the first TB is new data or initially transmitted data. If a value of the bit included in the NDI field remains unchanged or is not flipped, it indicates that the first TB is retransmitted data or a parity TB. "Whether the first TB is retransmitted data" may be replaced with "whether the first TB is new data", "whether the first TB is a parity TB", or the like.

For example, an RV field in the DCI may indicate a number of transmissions or a transmission rank of the first TB, and may be used for outer decoding, so that the terminal determines the number of transmissions of the first TB, and further determines an order of the parity TB. For example, if a value of the RV field is 0, the terminal determines that the first TB is transmitted for the first time or initially transmitted data. If a value of the RV field is not equal to 0, the terminal determines that the first TB is not transmitted for the first time.

Optionally, if the first TB is initially transmitted data, the terminal may determine, based on S400A and/or S400B, a TB process to which the first TB belongs. Because a number of retransmitted TBs may be less than a number of initially transmitted TBs, if the first TB is retransmitted data, the terminal may not limit a number of TBs by using a process window. In other words, if the first TB is initially transmitted data, the network device may send the first TB using a corresponding process, for example, the first process, and the terminal determines, by using the method described above, the process to which the first TB belongs. If the first TB is retransmitted data, the network device may send the first TB without using a process, or the network device sends the first TB using a process, but does not limit a window length of the process or a number of TBs mapped to the process. Certainly, if the first TB is retransmitted data, the network device may alternatively send the first TB using a corresponding process, for example, the first process.

Optionally, if the first TB is retransmitted data, the network device may alternatively indicate, to the terminal, a number of TBs retransmitted in the first process or a number of parity TBs retransmitted in the first process. For example, the network device indicates the foregoing information by using the third indication information. An example in which the third indication information is carried in the DCI is still used as an example. A DAI field in the DCI may indicate a number of TBs retransmitted in the first process or a number of parity TBs retransmitted in the first process.

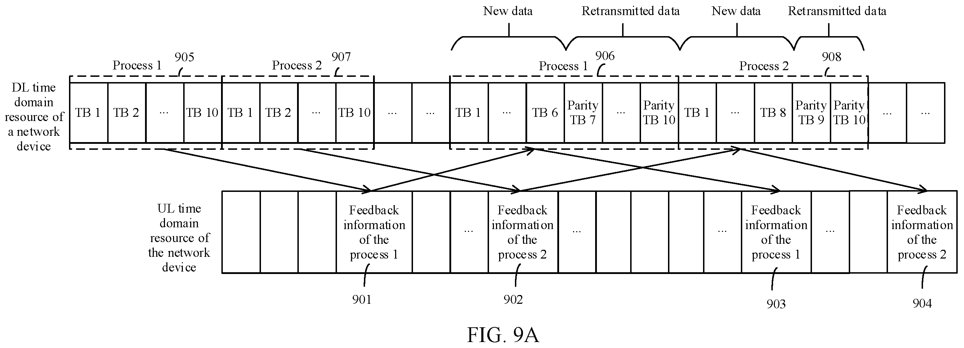

For example, an NDI field in the DCI may indicate a coding group to which the first TB belongs. For example, the coding group to which the first TB belongs may be indicated by whether a bit included in the NDI field changes or is flipped. Specifically, TBs transmitted in a same TB process and having a same NDI field belong to one coding group, and TBs transmitted in a same TB process and having different NDI fields do not belong to one coding group. For example, DCI #1 is for scheduling a TB 1 in a process window 905 shown in FIG. 9A, and DCI #2 is for scheduling a TB 2 in the process window 905. If an NDI field in the DCI #1 includes "0", and an NDI field in the DCI #2 includes "0", it indicates that the TB 1 and the TB 2 belong to one coding group. If an NDI field in the DCI #1 includes "0", and an NDI field in the DCI #2 includes "1", it indicates that the TB 1 and the TB 2 do not belong to one coding group. For example, DCI #1 is for scheduling a TB 1 in a process window 905 shown in FIG. 9A, and DCI #2 is for scheduling a parity TB 7 in a process window 906. If an NDI field in the DCI #1 includes "0", and an NDI field in the DCI #2 includes "0", it indicates that the TB 1 and the parity TB 7 belong to one coding group. If an NDI field in the DCI #1 includes "0", and an NDI field in the DCI #2 includes "1", it indicates that the TB 1 and the parity TB 7 do not belong to one coding group. It may be understood that TBs in a same coding group may be jointly decoded. Therefore, the terminal can determine, based on the third indication information, a coding group to which the first TB belongs, to perform joint decoding, thereby improving decoding reliability. It may be understood that outer encoding may be used for the coding group.

For example, an RV field in the DCI may indicate an order of the first TB in a first coding group, so that the terminal can determine the order of the first TB in the first coding group, and further determines an order of an outer encoding combination, to perform joint decoding, thereby improving decoding reliability. For example, an RV field may indicate which TB process (or which process window) in a plurality of TB processes (or a plurality of process windows) with a same process number is used to transmit a first TB. The RV field may be interpreted in combination with the NDI field. For example, DCI #1 is for scheduling a TB 1 in a process window 905 shown in FIG. 9A, and DCI #2 is for scheduling a parity TB 7 in a process window 906. If an NDI field in the DCI #1 includes "0", an RV field in the DCI #1 includes "0", an NDI field in the DCI #2 includes "0", and an RV field in the DCI #2 includes "1", it indicates that the TB 1 and the parity TB 7 belong to one coding group, the TB 1 is located in a 1^{st} process window (namely, the process window 905) of a process (namely, a process 1) corresponding to the coding group, and the parity TB 7 is located in a 2^{nd} process window (namely, the process window 906) of the process (namely, the process 1) corresponding to the coding group.

For example, a DAI field in the DCI may indicate an order of the first TB in a plurality of TBs transmitted using a first process (or orders of the plurality of TBs transmitted in a process window). For example, if the first TB is the TB 1 in the process window 905, the DAI field includes "00"; if the first TB is the TB 2 in the process window 905, the DAI field includes "01"; if the first TB is a TB 3 in the process window 905, the DAI field includes "10"; if the first TB is a TB 4 in the process window 905, the DAI field includes "11"; if the first TB is a TB 5 in the process window 905, the DAI field includes "00"; and the rest may be deduced by analogy. In this way, the terminal can determine a number of currently scheduled TBs, and the terminal may feed back, based on the DAI field, whether each TB is correctly received, or feed back a number of correctly received TBs, or feed back a number of incorrectly received TBs.

For example, the third indication information may indicate whether the first TB is a parity TB, or indicate whether the first TB is a source TB. For example, the third indication information includes 1 bit. When a value of the 1 bit is "0", it indicates that the first TB is not a parity TB. When a value of the 1 bit is "1", it indicates that the first TB is a parity TB. The reverse is also applicable. For another example, the third indication information includes 1 bit. When a value of the 1 bit is "0", it indicates that the first TB is a source TB. When a value of the 1 bit is "1", it indicates that the first TB is not a source TB. The reverse is also applicable. For another example, the third indication information includes 1 bit. When a value of the 1 bit is "0", it indicates that the first TB is a source TB. When a value of the 1 bit is "1", it indicates that the first TB is a parity TB. The reverse is also applicable.

It may be understood that the foregoing is merely an example of the information indicated by the third indication information. During specific application, the third indication information may further indicate other information. This is not limited.

Optionally, the RV field may be reused to indicate a number of parity TBs included in the retransmitted data.

It may be understood that the network device may send the third indication information for each of the plurality of TBs transmitted in the first process, to indicate information about the corresponding TB.

Optionally, in a possible implementation of the method shown in FIG. 4, the network device may indicate related information of the plurality of TBs transmitted using the first process, so that the terminal performs decoding based on the related information. Specifically, as shown in FIG. 7, the method shown in FIG. 4 may further include the following steps.

S400D: The network device sends fourth indication information to the terminal. Correspondingly, the terminal receives the fourth indication information from the network device.

In this application, the fourth indication information indicates at least one of the following: whether a plurality of TBs are retransmitted data, a number of transmissions of the plurality of TBs, a coding group to which the plurality of TBs belong to, orders of the plurality of TBs in the coding group to which the plurality of TBs belong to, a number of the plurality of TBs, whether the plurality of TBs are parity TBs, or whether the plurality of TBs are source TBs.

Optionally, the fourth indication information may be carried in a broadcast message like a SIB1, OSI, or a MIB. Alternatively, the fourth indication information may be carried in RRC signaling, DCI, group DCI, a MAC CE, or a PDCCH. It may be understood that information included in the fourth indication information may be carried in one or more fields included in the foregoing message. Alternatively, the fourth indication information may be sent to the terminal by using a table. Alternatively, the fourth indication information may be transmitted with data or transmitted on a separately allocated PDSCH bearer.

It may be understood that in S400D, "the plurality of TBs" may be considered as a whole. For example, "the plurality of TBs" may be understood as a TB group or a group of TBs. The network device may uniformly indicate information about the entire group of TBs by using the fourth indication information. The following uses an example in which the fourth indication information is carried in DCI to describe a manner of indicating the information about the entire group of TBs by using the fourth indication information. Optionally, information about each TB in the group of TBs is the same.

For example, an NDI field in the DCI may indicate that all TBs in the group are retransmitted data or none of the TBs in the group is retransmitted data, so that the terminal determines whether the group of TBs are new data or retransmitted data, to perform decoding. For example, if a bit included in the NDI field changes or is flipped, it indicates that the group of TBs are new data or initially transmitted data. If a value of the bit included in the NDI field remains unchanged or is not flipped, it indicates that the group of TBs are retransmitted data or parity TBs. "Whether the group of TBs are retransmitted data" may be replaced with "whether the group of TBs are new data", "whether the group of TBs are parity TBs", or the like.

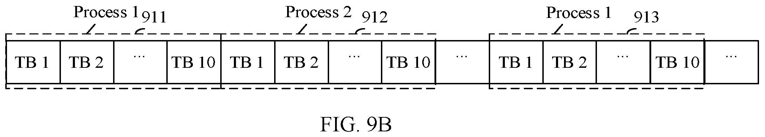

For example, an RV field in the DCI may be reused to indicate a number of transmissions of the group of TBs, and may be used for outer decoding, so that the terminal determines the number of transmissions of the group of TBs (it may be understood that a plurality of transmissions of the group of TBs may include different redundancy versions obtained based on the group of TBs, or a parity TB obtained through outer encoding), and further determines an order of a parity TB. For example, DCI #1 is for scheduling a TB group (denoted as a TB group 1) transmitted in a process window 911 shown in FIG. 9B, DCI #2 is for scheduling a TB group (denoted as a TB group 2) transmitted in a process window 912, and DCI #3 is for scheduling a TB group (denoted as a TB group 3) transmitted in a process window 913 shown in FIG. 9B. If TBs in the TB group 1 and the TB group 2 are transmitted for the first time, and TBs in the TB group 3 are not transmitted for the first time, a value of an RV field in the DCI #1 is 0, a value of an RV field in the DCI #2 is 0, and a value of an RV field in the DCI #3 is 1. If TBs in the TB group 1 are transmitted for the first time, TBs in the TB group 2 are transmitted for the second time, and TBs in the TB group 3 are transmitted for the third time, a value of an RV field in the DCI #1 is 0, a value of an RV field in the DCI #2 is 1, and a value of an RV field in the DCI #3 is 2.

It may be understood that if the group of TBs are all initially transmitted data, the terminal may determine, based on S400A and/or S400B, a TB process to which the group of TBs belong. Because a number of retransmitted TBs may be less than a number of initially transmitted TBs, if the group of TBs are retransmitted data, the terminal may not limit a number of TBs by using a process window. In other words, if the group of TBs are initially transmitted data, the network device may send the group of TBs using a corresponding process, for example, the first process, and the terminal determines, by using the foregoing method, the process to which the group of TBs belong. If the group of TBs are retransmitted data, the network device may send the group of TBs without using a process window, or the network device sends the group of TBs using a process window, but does not limit a window length of the process or a number of TBs mapped to the process. Certainly, if the group of TBs are retransmitted data, the network device may alternatively send the group of TBs using a corresponding process, for example, the first process.

Optionally, if the group of TBs are retransmitted data, the network device may alternatively indicate, to the terminal, a number of TBs retransmitted in the first process or a number of parity TBs retransmitted in the first process. For example, the network device indicates the foregoing information by using the fourth indication information. An example in which the fourth indication information is carried in the DCI is still used as an example. A DAI field in the DCI may indicate a number of TBs retransmitted in the first process or a number of parity TBs retransmitted in the first process.

For example, an NDI field in the DCI may indicate a coding group to which the group of TBs belong. For example, the coding group to which the TB belongs may be indicated by whether a bit included in the NDI field changes or is flipped. Specifically, for example, DCI #1 is for scheduling a TB group (denoted as a TB group 1) in a process window 911 shown in FIG. 9B, and DCI #2 is for scheduling a TB group (denoted as a TB group 2) in a process window 912. If an NDI field in the DCI #1 includes "0", and an NDI field in the DCI #2 includes "0", it indicates that the TB group 1 and the TB group 2 belong to one coding group. If an NDI field in the DCI #1 includes "0", and an NDI field in the DCI #2 includes "1", it indicates that the TB group 1 and the TB group 2 do not belong to one coding group. It may be understood that TBs in a same coding group may be jointly encoded or decoded. Therefore, the terminal may determine, based on the fourth indication information, a coding group to which the group of TBs belong, to perform joint decoding, thereby improving decoding reliability. It may be understood that outer encoding may be used for the coding group.

For example, an RV field in the DCI may indicate an order of the group of TBs in the coding group to which the group of TBs belong, so that the terminal can determine an order of an outer encoding combination, to perform joint decoding, thereby improving decoding reliability. For example, an RV field may indicate which TB process (or which process window) in a plurality of TB processes (or a plurality of process windows) with a same process number is used to transmit the group of TBs. The RV field may be interpreted in combination with the NDI field. For example, DCI #1 is for scheduling a TB group (denoted as a TB group 1) in a process window 911 shown in FIG. 9B, and DCI #2 is for scheduling a TB group (denoted as a TB group 3) in a process window 913. If an NDI field in the DCI #1 includes "0", an RV field in the DCI #1 includes "0", an NDI field in the DCI #2 includes "0", and an RV field in the DCI #2 includes "1", it indicates that the TB group 1 and the TB group 3 belong to one coding group, the TB group 1 is located in a 1^{st} process window (namely, the process window 911) of a process (namely, a process 1) corresponding to the coding group, and the TB group 3 is located in a 2^{nd} process window (namely, the process window 913) of the process (namely, the process 1) corresponding to the coding group.

For example, a DAI field in the DCI may indicate a number of TBs included in the group of TBs, so that the terminal may determine a number of currently scheduled TBs, and the terminal may feed back, based on the DAI field, whether each TB is correctly received, or feed back a number of correctly received TBs, or feed back a number of incorrectly received TBs. For example, if the group of TBs include two TBs, the DAI field includes "10"; or if the group of TBs include three TBs, the DAI field includes "11".

For example, the fourth indication information may indicate whether the group of TBs are parity TBs, or indicate whether the group of TBs are source TBs, to facilitate decoding by the terminal. For example, the fourth indication information includes 1 bit. When a value of the 1 bit is "0", it indicates that the group of TBs are not parity TBs. When a value of the 1 bit is "1", it indicates that the group of TBs are parity TBs. The reverse is also applicable. For another example, the fourth indication information includes 1 bit. When a value of the 1 bit is "0", it indicates that the group of TBs are source TBs. When a value of the 1 bit is "1", it indicates that the group of TBs are not source TBs. The reverse is also applicable. For another example, the fourth indication information includes 1 bit. When a value of the 1 bit is "0", it indicates that the group of TBs are source TBs. When a value of the 1 bit is "1", it indicates that the group of TBs are parity TBs. The reverse is also applicable. For another example, the fourth indication information may indicate, based on a bitmap, whether the group of TBs are source TBs or parity TBs. For example, for the process window 905, the fourth indication information includes a bit sequence "1111111111" or "0000000000", to indicate that the 10 TBs in the process window 905 are all source TBs. For the process window 906, the fourth indication information includes a bit sequence "1111110000" or "0000001111 ", to indicate that in the 10 TBs in the process window 906, the first six TBs are all source TBs, and the last four TBs are all parity TBs.

It may be understood that in S400D, "the plurality of TBs" may not be considered as a whole, and "the plurality of TBs" may refer to each of the plurality of TBs. The fourth indication information may include indication information corresponding to each of the plurality of TBs, to indicate corresponding information.

For example, the number of the plurality of TBs is 2. The fourth indication information may include two pieces of indication information. One piece of indication information indicates related information of a 1^{st} TB, and the other piece of indication information indicates related information of a 2^{nd} TB. For example, one piece of indication information in the two pieces of indication information may indicate at least one of the following: whether the 1^{st} TB is retransmitted data, a number of transmissions of the 1^{st} TB, a coding group to which the 1^{st} TB belongs, an order of the 1^{st} TB in the coding group to which the 1^{st} TB belongs, an order of the 1^{st} TB in the two TBs (the terminal may determine a number of TBs included in the group of TBs with reference to an order of each TB), whether the 1^{st} TB is a parity TB, or whether the 1^{st} TB is a source TB. The other piece of indication information may indicate at least one of the following: whether the 2^{nd} TB is retransmitted data, a number of transmissions of the 2^{nd} TB, a coding group to which the 2^{nd} TB belongs, an order of the 2^{nd} TB in the coding group to which the 2^{nd} TB belongs, an order of the 2^{nd} TB in the two TBs (the terminal may determine a number of TBs included in the group of TBs with reference to an order of each TB), whether the 2^{nd} TB is a parity TB, or whether the 2^{nd} TB is a source TB.

It may be understood that the foregoing is merely an example of the information indicated by the fourth indication information. During specific application, the fourth indication information may further indicate other information. This is not limited.

An execution sequence of S400A to S400C is not limited in this application. For example, S400A may be performed first, then S400B is performed, and finally S400C is performed; or S400B may be performed first, then S400A is performed, and finally S400C is performed; or S400C may be performed first, then S400B is performed, and finally S400A is performed. It may be understood that S400C and S400D are parallel solutions. Therefore, an execution sequence of S400A, S400B, and S400D is not limited in this application.

Optionally, content included in each piece of indication information (for example, at least one of the first indication information, the second indication information, the third indication information, or the fourth indication information) in this application may be carried in one message, or may be carried in different messages. This is not limited.

Optionally, content included in each piece of indication information (for example, at least one of the first indication information, the second indication information, the third indication information, or the fourth indication information) in this application may be sent to the terminal in a multicast or broadcast manner, to reduce signaling overheads, and avoid scheduling different resources for different terminals, to reduce system scheduling complexity.

Optionally, content included in each piece of indication information (for example, at least one of the first indication information, the second indication information, the third indication information, or the fourth indication information) in this application may be sent to the terminal in a unicast manner, to flexibly schedule information of each terminal. For example, RTTs between the network device and terminals located at different locations are different. Therefore, the network device may configure different process window lengths or different numbers of TBs mapped to processes for different terminals (or terminals in different terminal groups) based on locations of the terminals (for example, geographical locations of the terminals or cells accessed by the terminals), to optimize data scheduling and processing latency of the terminals, and further improve overall communication performance of a communication system.

The actions of the network device or the terminal in S400A to S400D may be performed by the processor 301 in the communication apparatus 30 shown in FIG. 3 by invoking the application program code stored in the memory 303. This is not limited in this application.

Optionally, in a possible implementation of the method shown in FIG. 4, initially transmitted data and retransmitted data may be transmitted in one process window, to support flexible data transmission and improve transmission efficiency. Alternatively, joint outer encoding on data in a plurality of process windows may be supported, and the terminal may perform joint decoding, to improve decoding reliability and lower data transmission latency.

The following describes a process of transmitting a TB between the network device and the terminal by using an example in which the network device and the terminal process two processes (a process 1 and a process 2) in parallel, each process may transmit 10 TBs (or each process occupies 10 slots, and one TB may be transmitted in each slot), the network device sends a TB 1 to a TB 10 to the terminal using the process 1, and sends a TB 1 to a TB 10 to the terminal using the process 2, the TB 1 to the TB 10 sent using the process 1 are different from the TB 1 to the TB 10 sent using the process 2, and the network device further indicates that the TB 1 to the TB 10 sent using the process 1 are all source TBs. Specifically, as shown in FIG. 9A, for the TB 1 to the TB 10 sent using the process 1, the network device may receive feedback information from the terminal on a time domain resource 901. If the feedback information indicates that the TB 1 and the TB 3 are incorrectly decoded, or indicates that a number of TBs that are incorrectly decoded is 2, the network device may send new data (for example, a TB 1 to a TB 6) and retransmitted data (for example, a parity TB 7 to a parity TB 10) to the terminal in a process window 906. The network device may further indicate, by using the foregoing method, that the TB 1 to the TB 6 are new data, and the parity TB 7 to the parity TB 10 are retransmitted data. The parity TB 7 to the parity TB 10 are obtained by the network device through joint outer encoding based on the TB 1 to the TB 10 sent in a process window 905 and the TB 1 to the TB 6 sent in the process window 906. In this way, the terminal may decode the parity TB 7 to the parity TB 10, and perform joint outer decoding on the parity TB 7 to the parity TB 10 and the 16 previously received TBs, to improve decoding reliability and lower data transmission latency. Subsequently, the network device may further receive feedback information from the terminal on a time domain resource 903, to indicate whether the TBs transmitted using the process 1 are correctly received. For example, the feedback information indicates that the TBs transmitted using the process 1 are correctly received. For the TB 1 to the TB 10 sent using the process 2, the network device may receive feedback information from the terminal on a time domain resource 902. If the feedback information indicates that the TB 2 is incorrectly decoded, or indicates that a number of TBs that are incorrectly decoded is 1, the network device may send new data (for example, a TB 1 to a TB 8) and retransmitted data (for example, a parity TB 9 and a parity TB 10) to the terminal in a process window 908. The network device may further indicate, by using the foregoing method, that the TB 1 to the TB 8 are new data, and the parity TB 9 and the parity TB 10 are retransmitted data. The parity TB 9 and the parity TB 10 are obtained by the network device through joint outer encoding based on the TB 1 to the TB 10 sent in a process window 907 and the TB 1 to the TB 8 sent in the process window 908. Subsequently, the network device may further receive feedback information from the terminal on a time domain resource 904, to indicate whether the TBs transmitted using the process 2 are correctly received. For example, the feedback information indicates that the TBs transmitted using the process 2 are correctly received.

The foregoing mainly describes the solutions provided in this application from the perspective of interaction between network elements. Correspondingly, this application further provides a communication apparatus. The communication apparatus may be the terminal in the foregoing method embodiments, an apparatus including the foregoing terminal, or a component that can be used in the terminal. Alternatively, the communication apparatus may be the network device in the foregoing method embodiments, an apparatus including the foregoing network device, or a component that can be used in the network device. It may be understood that, to implement the foregoing functions, the terminal or the network device includes corresponding hardware structures and/or software modules for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that interaction between network elements is described above by using the terminal and a network device as an example. Actually, processing performed by the terminal is not limited to being performed only by a single network element, and processing performed by the network device is not limited to being performed only by a single network element. For example, processing performed by the network device may be separately performed by at least one of a CU, a DU, or an RU.

In this application, functional modules of the terminal or the network device may be divided based on the foregoing method examples. For example, each functional module may be divided corresponding to each function, or two or more functions may be integrated into one processing module. The integrated module may be implemented in a form of hardware, or may be implemented in a form of a software functional module. It may be understood that division of the modules in this application is an example. The division is merely logical function division and may be other division in actual implementation.

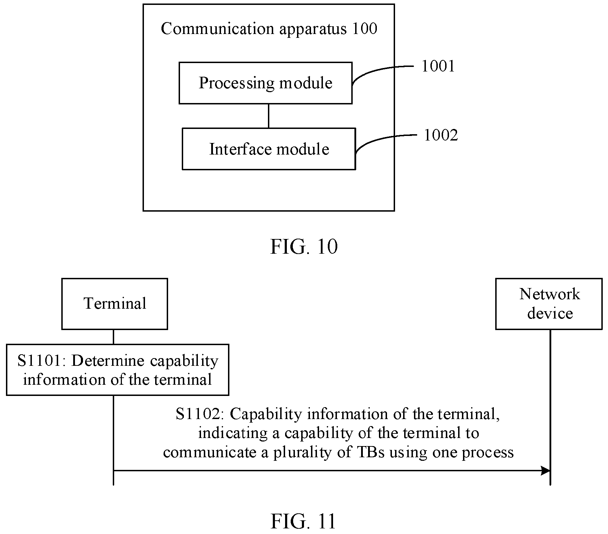

For example, when each functional module is obtained through division in an integrated manner, FIG. 10 is a diagram of a structure of a communication apparatus 100. The communication apparatus 100 includes a processing module 1001 and an interface module 1002. The processing module 1001 may also be referred to as a processing unit, is configured to perform an operation other than the receiving and sending operations, and for example, may be a processing circuit or a processor. The interface module 1002 may also be referred to as an interface unit, and is configured to perform a sending/receiving operation. For example, the interface module may be an interface circuit, a transceiver machine, a transceiver, or a communication interface.

In some embodiments, the communication apparatus 100 may further include a storage module (not shown in FIG. 10), configured to store program instructions and data.

For example, the communication apparatus 100 is configured to implement a function of a receive end. The communication apparatus 100 is, for example, the terminal described in the embodiment shown in FIG. 4 or the embodiment shown in FIG. 7.

The processing module 1001 is configured to control the interface module 1002 to receive a plurality of transport blocks using a first process. For example, the processing module 1001 may be configured to perform S401.

The interface module 1002 is configured to send feedback information. The feedback information indicates whether the plurality of transport blocks are correctly received. For example, the interface module 1002 may be configured to perform S402.

In a possible implementation, the interface module 1002 is further configured to receive or send first indication information, where the first indication information indicates a length of a first window, a number of the plurality of transport blocks, or a number of pieces of first scheduling information, the first window is a window of the first process or a window for transmitting the first scheduling information, and the first scheduling information is for scheduling the plurality of transport blocks.

In a possible implementation, the first indication information is related to a round-trip time between a network device and a terminal.

In a possible implementation, the first indication information is further related to a number of processes supported by the terminal for transmitting a transport block.

In a possible implementation, the interface module 1002 is further configured to: receive or send second indication information. The first indication information indicates the length of the first window, and the second indication information indicates a time domain position of the first window; or the first indication information indicates the number of the plurality of transport blocks, and the second indication information indicates a time domain position of the plurality of transport blocks; or the first indication information indicates the number of pieces of first scheduling information, and the second indication information indicates a time domain position of the first scheduling information.

In a possible implementation, the plurality of transport blocks include a first transport block, and the interface module 1002 is further configured to: receive or send third indication information, where the third indication information indicates at least one of the following: whether the first transport block is retransmitted data, a number of transmissions of the first transport block, a coding group to which the first transport block belongs, an order of the first transport block in a first coding group, an order of the first transport block in the plurality of transport blocks, or whether the first transport block is a parity transport block. The first coding group is the coding group to which the first transport block belongs.

In a possible implementation, the interface module 1002 is further configured to: receive or send fourth indication information, where the fourth indication information indicates at least one of the following: whether the plurality of transport blocks are retransmitted data, a number of transmissions of the plurality of transport blocks, a coding group to which the plurality of transport blocks belong, orders of the plurality of transport blocks in the coding group to which the plurality of transport blocks belong, the number of the plurality of transport blocks, or whether the plurality of transport blocks are parity transport blocks.

In a possible implementation, the interface module 1002 is further configured to: send fifth indication information, where the fifth indication information indicates a number of detected transport blocks.

When the communication apparatus 100 is configured to implement the function of the receive end, for another function that can be implemented by the communication apparatus 100, refer to related descriptions of the embodiment shown in FIG. 4 or the embodiment shown in FIG. 7. Details are not described again.

Alternatively, for example, the communication apparatus 100 is configured to implement a function of a transmit end. The communication apparatus 100 is, for example, the network device described in the embodiment shown in FIG. 4 or the embodiment shown in FIG. 7.

The processing module 1001 is configured to control the interface module 1002 to send a plurality of transport blocks using a first process. For example, the processing module 1001 may be configured to perform S401.

The interface module 1002 is configured to receive feedback information. The feedback information indicates whether the plurality of transport blocks are correctly received. For example, the interface module 1002 may be configured to perform S402.

In a possible implementation, the interface module 1002 is further configured to send or receive first indication information. The first indication information indicates a length of a first window, a number of the plurality of transport blocks, or a number of pieces of first scheduling information, the first window is a window of the first process or a window for transmitting the first scheduling information, and the first scheduling information is for scheduling the plurality of transport blocks.

In a possible implementation, the first indication information is related to a round-trip time between a network device and a terminal.

In a possible implementation, the first indication information is further related to a number of processes supported by the terminal for transmitting a transport block.

In a possible implementation, the interface module 1002 is further configured to send or receive second indication information. The first indication information indicates the length of the first window, and the second indication information indicates a time domain position of the first window; or the first indication information indicates the number of the plurality of transport blocks, and the second indication information indicates a time domain position of the plurality of transport blocks; or the first indication information indicates the number of pieces of first scheduling information, and the second indication information indicates a time domain position of the first scheduling information.

In a possible implementation, the plurality of transport blocks include a first transport block, and the interface module 1002 is further configured to: send or receive third indication information, where the third indication information indicates at least one of the following: whether the first transport block is retransmitted data, a number of transmissions of the first transport block, a coding group to which the first transport block belongs, an order of the first transport block in a first coding group, an order of the first transport block in the plurality of transport blocks, or whether the first transport block is a parity transport block. The first coding group is the coding group to which the first transport block belongs.

In a possible implementation, the interface module 1002 is further configured to: send or receive fourth indication information, where the fourth indication information indicates at least one of the following: whether the plurality of transport blocks are retransmitted data, a number of transmissions of the plurality of transport blocks, a coding group to which the plurality of transport blocks belong, orders of the plurality of transport blocks in the coding group to which the plurality of transport blocks belong, the number of the plurality of transport blocks, or whether the plurality of transport blocks are parity transport blocks.

In a possible implementation, the interface module 1002 is further configured to: receive fifth indication information, where the fifth indication information indicates a number of transport blocks detected by a device receiving the plurality of transport blocks.

When the communication apparatus 100 is configured to implement the function of the transmit end, for another function that can be implemented by the communication apparatus 100, refer to related descriptions of the embodiment shown in FIG. 4 or the embodiment shown in FIG. 7. Details are not described again.

In a simple embodiment, a person skilled in the art may figure out that the communication apparatus 100 may be in a form shown in FIG. 3. For example, the processor 301 in FIG. 3 may invoke the computer-executable instructions stored in the memory 303, to enable the communication apparatus 100 to perform the method in the foregoing method embodiments.

For example, functions/implementation processes of the processing module 1001 and the interface module 1002 in FIG. 10 may be implemented by the processor 301 in FIG. 3 by invoking the computer-executable instructions stored in the memory 303. Alternatively, the function/implementation process of the processing module 1001 in FIG. 10 may be implemented by the processor 301 in FIG. 3 by invoking the computer executable instructions stored in the memory 303, and the function/implementation process of the interface module 1002 in FIG. 10 may be implemented by the communication interface 304 in FIG. 3.

The foregoing describes the method for transmitting a TB between the terminal and the network device. In addition to the foregoing method, this application further provides a communication method. In the communication method, a terminal may report a capability of the terminal to communicate a TB to the network device, so that the network device determines whether the terminal can communicate the TB by using the method shown in FIG. 4 or FIG. 7.

FIG. 11 shows a communication method according to this application. The communication method may include the following steps.

S1101: A terminal determines capability information of the terminal.

In this application, the terminal may be any terminal in the communication system 20 shown in FIG. 2A, for example, the terminal 202, the terminal 203, or the terminal 204. The capability information of the terminal indicates a capability of the terminal to communicate a plurality of TBs using one process. "Communicate" herein may be understood as sending and/or receiving. In other words, the capability information of the terminal may indicate a capability of the terminal to send a plurality of TBs using one process, or indicate a capability of the terminal to receive a plurality of TBs using one process, or indicate a capability of the terminal to send a plurality of TBs using one process and a capability of the terminal to receive a plurality of TBs using one process. The process may alternatively be described in another alternative manner. For example, the process may be replaced with a thread, a HARQ process, or the like. This is not limited.

In this application, in a process of sending a plurality of TBs using one process, the terminal stops receiving (or does not receive) scheduling information of a TB in the process. Alternatively, in a process of sending a plurality of TBs using one process, the terminal does not expect the network device to schedule, using the process, the terminal to send another TB or another TB group. Correspondingly, in a process of receiving the plurality of TBs using one process, the network device stops sending (or does not send) scheduling information of a TB in the process. Alternatively, in a process of receiving, using one process, the plurality of TBs sent by the terminal, the network device does not schedule, using the process, the terminal to send another TB or another TB group. The plurality of TBs may be considered as a group of TBs or a TB group (TB group). Therefore, transmission of the plurality of TBs may be referred to as TB group transmission (TB group transmission). Optionally, the TB group transmission may also be referred to as TB group retransmission (TB group retransmission). The another TB or the another TB group is a TB other than the plurality of TBs. The following uses a TB group as an example to describe a process in which the terminal sends a plurality of TBs using one process. The terminal may send a TB group using one process, and the network device may decode TBs in the TB group. If all or part of the TBs in the TB group are incorrectly decoded, after the terminal sends the TB group, the network device schedules the terminal to perform retransmission (for example, schedules the terminal to send a redundancy version or a parity TB of the TB in the TB group) in a unified manner, so that the network device continues to decode the TB group based on data retransmitted by the terminal. If all the TBs in the TB group are correctly decoded, the terminal may send a next TB group using the process. In other words, the network device may schedule, using the process, the terminal to send a new TB group.

In this application, in a process of receiving a plurality of TBs using one process, the terminal stops sending (or does not send) a decoding result of a plurality of TBs in the process. Alternatively, in a process of receiving a plurality of TBs using one process, before feeding back, to the network device, that the plurality of TBs are correctly received, the terminal does not expect to receive another TB or another TB group sent by the network device using the process. Correspondingly, in a process of sending the plurality of TBs using one process, the network device stops receiving (or does not receive) a decoding result of a TB in the process. Alternatively, in a process of sending the plurality of TBs to the terminal using one process, before receiving, from the terminal, feedback to the network device indicating that the plurality of TBs are correctly received, the network device does not send another TB or another TB group to the terminal using the process. The following uses a TB group as an example to describe a process in which the terminal receives a plurality of TBs using one process. The network device may send a TB group using one process. Correspondingly, the terminal may receive the TB group using one process. After the network device sends the TB group, the terminal sends a decoding result of the TB group in the process to the network device. If the decoding result indicates that all or part of TBs in the TB group are incorrectly decoded, the network device resends data to the terminal based on the decoding result. If the decoding result indicates that all TBs in the TB group are correctly decoded, the network device may send a next TB group using the process.

In a possible design, the capability information of the terminal includes at least one of the following: first indication information or second indication information.

First, the first indication information is described.

In the method shown in FIG. 11, the first indication information indicates whether the terminal supports sending a plurality of TBs using one process; or the first indication information indicates whether the terminal supports receiving a plurality of TBs using one process; or the first indication information indicates whether the terminal supports sending a plurality of TBs using one process and whether the terminal supports receiving a plurality of TBs using one process.

For example, the first indication information indicates whether the terminal supports sending a plurality of TBs using one process. The first indication information includes 1 bit. If a value of the 1 bit is "0", it indicates that the terminal does not support sending a plurality of TBs using one process. If a value of the 1 bit is "1", it indicates that the terminal supports sending a plurality of TBs using one process. The reverse is also applicable. Alternatively, if the first indication information includes a field related to a TB group, for example, includes a TB-group field or a TB groupPUSCH field, it indicates that the terminal supports sending a plurality of TBs using one process. If the first indication information does not include a TB group-related field, it indicates that the terminal does not support sending a plurality of TBs using one process. Alternatively, the first indication information is a TB-groupPUSCH or TB-group parameter, and the parameter indicates whether the terminal supports sending a plurality of TBs using one process (Indicates whether the UE supports TB group transmission for PUSCH). For example, different values may be assigned to the parameter to indicate whether the terminal supports sending a plurality of TBs using one process.

For example, the first indication information indicates whether the terminal supports receiving a plurality of TBs using one process. The first indication information includes 1 bit. If a value of the 1 bit is "0", it indicates that the terminal does not support receiving a plurality of TBs using one process. If a value of the 1 bit is "1", it indicates that the terminal supports receiving a plurality of TBs using one process. The reverse is also applicable. Alternatively, if the first indication information includes a TB group-related field, for example, includes a TB-group field or a TB-groupPDSCH field, it indicates that the terminal supports receiving a plurality of TBs using one process. If the first indication information does not include a TB group-related field, it indicates that the terminal does not support receiving a plurality of TBs using one process. Alternatively, the first indication information is a TB-groupPDSCH or TB-group parameter, and the parameter indicates whether the terminal supports receiving a plurality of TBs using one process (Indicates whether the UE supports TB group transmission for PDSCH). For example, different values may be assigned to the parameter to indicate whether the terminal supports receiving a plurality of TBs using one process.

For example, the first indication information indicates whether the terminal supports sending a plurality of TBs using one process and whether the terminal supports receiving a plurality of TBs using one process. The first indication information includes 1 bit. If a value of the 1 bit is "0", it indicates that the terminal supports neither sending a plurality of TBs using one process nor receiving a plurality of TBs using one process. If a value of the 1 bit is "1", it indicates that the terminal supports sending a plurality of TBs using one process and receiving a plurality of TBs using one process. The reverse is also applicable. Alternatively, the first indication information includes 2 bits, one bit in the 2 bits indicates whether the terminal supports sending a plurality of TBs using one process, and the other bit in the 2 bits indicates whether the terminal supports receiving a plurality of TBs using one process. For example, if the first indication information includes "00", it indicates that the terminal does not support sending a plurality of TBs using one process, and does not support receiving a plurality of TBs using one process. If the first indication information includes "01", it indicates that the terminal does not support sending a plurality of TBs using one process, but supports receiving a plurality of TBs using one process. If the first indication information includes "10", it indicates that the terminal supports sending a plurality of TBs using one process, but does not support receiving a plurality of TBs using one process. If the first indication information includes "11", it indicates that the terminal supports sending a plurality of TBs using one process, and supports receiving a plurality of TBs using one process. Alternatively, if the first indication information includes a TB groupPUSCH field, it indicates that the terminal supports sending a plurality of TBs using one process. If the first indication information does not include the TB-groupPUSCH field, it indicates that the terminal does not support sending a plurality of TBs using one process. If the first indication information includes a TB-groupPDSCH field, it indicates that the terminal supports receiving a plurality of TBs using one process. If the first indication information does not include a TB-groupPDSCH field, it indicates that the terminal does not support receiving a plurality of TBs using one process. Alternatively, the first indication information is a TB-group parameter, and the TB-group parameter indicates whether the terminal supports sending a plurality of TBs using one process and whether the terminal supports receiving a plurality of TBs using one process (Indicates whether the UE supports TB group transmission for PUSCH and PDSCH). For example, different values may be assigned to the TB-group parameter, to indicate whether the terminal supports sending a plurality of TBs using one process and whether the terminal supports receiving a plurality of TBs using one process.

Optionally, the terminal determines the first indication information based on a buffer capability of the terminal (for example, a buffer capability of a process of the terminal). For example, if the process of the terminal supports buffering decoding results of a plurality of TBs, the first indication information indicates that the terminal supports receiving a plurality of TBs using one process. If the process of the terminal does not support buffering decoding results of a plurality of TBs, the first indication information indicates that the terminal does not support receiving a plurality of TBs using one process. For another example, if the process of the terminal supports buffering a plurality of TBs, the first indication information indicates that the terminal supports sending a plurality of TBs using one process. If the process of the terminal does not support buffering a plurality of TBs, the first indication information indicates that the terminal does not support sending a plurality of TBs using one process.

The following describes the second indication information.

In the method shown in FIG. 11, the second indication information indicates a window length of a process, or indicates a number of TBs supported by the terminal for transmission using one process (namely, a number of TBs in a TB group). The window length of the process includes a duration from a time when the terminal starts communicating the 1^{st} TB in the plurality of TBs using the process to a time when the terminal completes communicating the last TB in the plurality of TBs. A unit of the window length of the process may be any time domain unit, for example, a symbol (symbol), a slot (slot), a frame, a subframe, a millisecond, or a microsecond. In the following embodiments of this application, an example in which the unit of the window length of the process is a slot is used for description.

For example, the second indication information indicates the window length of the process. The second indication information includes a first parameter and/or a second parameter. A value of the first parameter indicates a window length of a process used by the terminal to receive a plurality of TBs. Optionally, the window length of the process used by the terminal to receive the plurality of TBs is a maximum window length of the process that is supported by the terminal and that is used to receive the plurality of TBs. For example, the first parameter is max-TB-groupPDSCH-ProcessWindowLength, and may indicate a supported maximum process window length in one TB group transmission for a physical downlink shared channel (physical downlink shared channel, PDSCH) (Indicates the supported maximal process window length in one TB group transmission for PDSCH). A value of the second parameter indicates a window length of a process used by the terminal to send a plurality of TBs. Optionally, the window length of the process used by the terminal to send the plurality of TBs is a maximum window length of the process that is supported by the terminal and that is used to send the plurality of TBs. For example, the second parameter is max-TB-groupPUSCH-ProcessWindowLength, and may indicate a supported maximum process window length in one TB group transmission for a physical uplink shared channel (physical uplink shared channel, PUSCH) (Indicates the supported maximal process window length in one TB group transmission for PUSCH). For example, if a value of the first parameter is "8", it indicates that the window length of the process used by the terminal to receive the plurality of TBs is eight slots, or indicates that the supported maximum process window length in one TB group transmission for the PDSCH is eight slots. If a value of the second parameter is "10", it indicates that the window length of the process used by the terminal to send the plurality of TBs is 10 slots, or indicates that the supported maximum process window length in one TB group transmission for the PUSCH is 10 slots.

For example, the second indication information indicates the window length of the process. The second indication information includes a third parameter, and a value of the third parameter indicates a window length of the process used by the terminal to receive the plurality of TBs, and/or a window length of the process used by the terminal to send the plurality of TBs. Optionally, the window length of the process used by the terminal to receive the plurality of TBs is a maximum window length that is of the process for receiving the plurality of TBs and that is supported by the terminal, and the window length of the process used by the terminal to send the plurality of TBs is a maximum window length that is of the process for sending the plurality of TBs and that is supported by the terminal. For example, the third parameter is max-TB-group-ProcessWindowLength, and may indicate a supported maximum process window length in one TB group transmission for the PDSCH, and/or a supported maximum process window length in one TB group transmission for the PUSCH (Indicates the supported maximal process window length in one PUSCH and/or PDSCH TB group transmission). For example, if a value of the third parameter is "8", it indicates that the window length of the process used by the terminal to receive the plurality of TBs is eight slots, and/or the window length of the process used by the terminal to send the plurality of TBs is eight slots, or indicates that the supported maximum process window length in one TB group transmission for the PDSCH is eight slots, and/or the supported maximum process window length in one TB group transmission for the PUSCH is eight slots. For another example, if a value of the third parameter is "u8d16", it indicates that the window length of the process used by the terminal to receive the plurality of TBs is 16, and the window length of the process used by the terminal to send the plurality of TBs is 8 slots; or it indicates that the supported maximum process window length in one TB group transmission for the PDSCH is 16 slots, and the supported maximum process window length in one TB group transmission for the PUSCH is 8 slots.

It may be understood that if the window length of the process indicated by the second indication information is 0, it indicates that the terminal does not support communication of a plurality of TBs using one process. For example, if a value of the first parameter is "0", it indicates that the terminal does not support receiving a plurality of TBs using one process. If a value of the second parameter is "0", it indicates that the terminal does not support sending a plurality of TBs using one process. If a value of the third parameter is "0", it indicates that the terminal does not support sending and/or receiving a plurality of TBs using one process.

Optionally, the terminal determines the window length based on a buffer capability of the terminal (for example, a buffer capability of a process of the terminal). For example, the terminal may determine, based on a buffer size of a memory, a maximum number of TBs that can be buffered for one process, and then determine the window length based on a length of a time domain resource corresponding to each TB. For example, one process of the terminal may support buffering 10 TBs, and one TB corresponds to one slot. In this case, the terminal may determine that the window length is 10 slots.

For example, the second indication information indicates the number of TBs supported by the terminal for transmission using one process. The second indication information includes a fourth parameter and/or a fifth parameter. A value of the fourth parameter indicates a number of TBs supported by the terminal and sent using one process. Optionally, the number of TBs supported by the terminal and sent using one process is a maximum number of TBs supported by the terminal and sent using the process. For example, the fourth parameter is max-TB-groupPUSCH-TBNumber, and may indicate a supported maximum number of TBs scheduled in one TB group transmission for a PUSCH (Indicates the supported maximal scheduled TB number in one TB group transmission for PUSCH). A value of the fifth parameter indicates a number of TBs supported by the terminal and received using one process. Optionally, the number of TBs supported by the terminal and received using one process is a maximum number of TBs supported by the terminal and received using the process. For example, the fifth parameter is max-TB-groupPDSCH-TBNumber, and may indicate a supported maximum number of TBs scheduled in one TB group transmission for a PDSCH (Indicates the supported maximal scheduled TB number in one TB group transmission for PDSCH). For example, if a value of the fourth parameter is "8", it indicates that the terminal supports sending eight TBs using one process, or indicates that the supported maximum number of TBs scheduled in one TB group transmission for the PUSCH is 8. If a value of the fifth parameter is "16", it indicates that the terminal supports receiving 16 TBs using one process, or indicates that the supported maximum number of TBs scheduled in one TB group transmission for the PDSCH is 16.

For example, the second indication information indicates the number of TBs supported by the terminal for transmission using one process. The second indication information includes a sixth parameter, and the sixth parameter indicates a number of TBs supported by the terminal and sent using one process, and/or a number of TBs supported by the terminal and received using one process. Optionally, the number of TBs supported by the terminal and sent using one process is a maximum number of TBs supported by the terminal and sent using the process, and the number of TBs supported by the terminal and received using one process is a maximum number of TBs supported by the terminal and received using the process. For example, the sixth parameter is max-TB-group-TBNumber, and may indicate a supported maximum number of TBs scheduled in one TB group transmission for a PUSCH and/or a PDSCH (Indicates the supported maximal scheduled TB number in one TB group transmission for PUSCH and/or PDSCH). For example, if a value of the sixth parameter is "8", it indicates that the terminal supports sending eight TBs using one process, and/or the terminal supports receiving eight TBs using one process, or it indicates that the supported maximum number of TBs scheduled in one TB group transmission for the PUSCH is 8, and/or the supported maximum number of TBs scheduled in one TB group transmission for the PDSCH is 8. For another example, if a value of the sixth parameter is "u8d16", it indicates that the terminal supports sending eight TBs using one process, and the terminal supports receiving 16 TBs using one process, or indicates that the supported maximum number of TBs scheduled in one TB group transmission for the PUSCH is 8, and/or the supported maximum number of TBs scheduled in one TB group transmission for the PDSCH is 16.

It may be understood that if the number of TBs indicated by the second indication information is 0, it indicates that the terminal does not support communication of a plurality of TBs using one process. For example, if a value of the fourth parameter is "0", it indicates that the terminal does not support sending a plurality of TBs using one process. If a value of the fifth parameter is "0", it indicates that the terminal does not support receiving a plurality of TBs using one process. If a value of the sixth parameter is "0", it indicates that the terminal does not support sending and/or receiving a plurality of TBs using one process.

Optionally, the terminal determines the number of TBs based on a buffer capability of the terminal (for example, a buffer capability of a process of the terminal). For example, the terminal may determine, based on a buffer size of a memory, a maximum number of TBs that can be buffered for one process, and determine the number of TBs as the number of TBs supported by the terminal for transmission using one process.

S1102: The terminal sends the capability information of the terminal to the network device. Correspondingly, the network device receives the capability information of the terminal from the terminal.

The network device may be the network device 201 in the communication system 20 shown in FIG. 2A.

In a possible implementation, after accessing the network device by using a random access process, the terminal sends the capability information of the terminal to the network device. The capability information of the terminal is carried in an RRC-related message, for example, an RRC connection setup complete (RRC connection setup complete) message.

In another possible implementation, the network device sends capability enquiry information to the terminal. The capability enquiry information is for enquiring a capability of the terminal to communicate a plurality of TBs using one process. After receiving the capability enquiry information, the terminal sends the capability information of the terminal to the network device. Optionally, the capability enquiry information is UE capability enquiry (UE capability enquiry) information, and the capability information of the terminal is UE capability information (UE capability information).

It may be understood that after receiving the capability information of the terminal, the network device may determine, based on the capability information of the terminal, whether the terminal supports communication of a plurality of TBs using one process, and further configure the terminal to perform TB communication.

In a possible implementation, if the capability information of the terminal includes the first indication information, and the first indication information indicates that the terminal supports communication of a plurality of TBs using one process, the network device may configure the terminal to communicate a plurality of TBs using one process. For example, if a round-trip time between the terminal and the network device is greater than or equal to a threshold, the network device configures the terminal to communicate the plurality of TBs using one process, to improve spectral efficiency of data transmission, ensure a data transmission rate, and lower data retransmission latency. If the first indication information indicates that the terminal does not support communication of a plurality of TBs using one process, the network device may configure the terminal to communicate one TB using one process, to avoid a failure of the terminal to implement a TB transmission mode configured by the network device.

In an example, the network device may send third indication information to the terminal. The third indication information indicates a first duration. For example, the third indication information includes the first duration. The first duration satisfies the capability information of the terminal. After receiving the third indication information, the terminal may communicate a plurality of TBs in the first duration using a first process. For example, the terminal sends the plurality of TBs to the network device in the first duration using the first process. Correspondingly, the network device receives the plurality of TBs from the terminal in the first duration using the first process. If all or part of the plurality of TBs are incorrectly decoded, the network device may further schedule the terminal to retransmit data or send a parity TB. For another example, the network device sends a plurality of TBs to the terminal in the first duration using a first process. Correspondingly, the terminal receives the plurality of TBs from the network device in the first duration using the first process, and sends a decoding result of the plurality of TBs to the network device. Optionally, the third indication information is determined based on the capability information of the terminal. For example, the first duration is less than or equal to the window length of the process indicated by the second indication information, to avoid a failure of the terminal to implement a TB transmission mode configured by the network device. It may be understood that, for a process of transmitting a plurality of TBs between the terminal and the network device using one process, refer to the corresponding descriptions in FIG. 4 or FIG. 7. Details are not described again.

In another example, the network device may send third indication information to the terminal. The third indication information indicates N. For example, the third indication information includes N, and N is a positive integer. N satisfies the capability information of the terminal. After receiving the third indication information, the terminal may communicate N TBs using a first process. For example, the terminal sends the N TBs to the network device using the first process. Correspondingly, the network device receives the N TBs from the terminal using the first process. If all or part of the N TBs are incorrectly decoded, the network device may further schedule the terminal to retransmit data or send a parity TB. For another example, the network device sends N TBs to the terminal using a first process. Correspondingly, the terminal receives the N TBs from the network device using the first process, and sends a decoding result of the N TBs to the network device. Optionally, the third indication information is determined based on the capability information of the terminal. For example, N is less than or equal to the number of TBs indicated by the second indication information, to avoid a failure of the terminal to implement a TB transmission mode configured by the network device. It may be understood that, for a process of transmitting a plurality of TBs between the terminal and the network device using one process, refer to the corresponding descriptions in FIG. 4 or FIG. 7. Details are not described again.

The foregoing mainly describes the solutions provided in this application from the perspective of interaction between network elements. Correspondingly, this application further provides a communication apparatus. The communication apparatus may be the terminal in the method shown in FIG. 11, an apparatus including the foregoing terminal, or a component that can be used in the terminal. Alternatively, the communication apparatus may be the network device in the method shown in FIG. 11, an apparatus including the foregoing network device, or a component that can be used in the network device. It may be understood that, to implement the foregoing functions, the terminal or the network device includes corresponding hardware structures and/or software modules for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that interaction between network elements is described above by using the terminal and a network device as an example. Actually, processing performed by the terminal is not limited to being performed only by a single network element, and processing performed by the network device is not limited to being performed only by a single network element. For example, processing performed by the network device may be separately performed by at least one of a CU, a DU, or an RU.

In this application, functional modules of the terminal or the network device may be divided based on the foregoing method examples. For example, each functional module may be divided corresponding to each function, or two or more functions may be integrated into one processing module. The integrated module may be implemented in a form of hardware, or may be implemented in a form of a software functional module. It may be understood that division of the modules in this application is an example. The division is merely logical function division and may be other division in actual implementation.

For example, when the functional modules are divided in an integrated manner, a structure of the terminal or the network device in the method shown in FIG. 11 may be shown in the communication apparatus 100 shown in FIG. 10.

For example, the communication apparatus 100 is configured to implement a function of the terminal. The communication apparatus 100 is, for example, the terminal described in the embodiment shown in FIG. 11.

The processing module 1001 is configured to determine capability information of the terminal. The capability information of the terminal indicates a capability of the terminal to send a plurality of transport blocks using one process, and/or indicates a capability of the terminal to receive a plurality of transport blocks using one process, in a process of sending a plurality of transport blocks using one process, the terminal stops receiving scheduling information of the transport blocks in the process, and in a process of receiving a plurality of transport blocks using one process, the terminal stops sending decoding results of the transport blocks in the process. For example, the processing module 1001 may be configured to perform S1101.

The interface module 1002 is configured to send the capability information of the terminal. For example, the interface module 1002 may be configured to perform S1102.

In a possible implementation, the capability information of the terminal includes first indication information, and the first indication information indicates whether the terminal supports sending a plurality of transport blocks using one process, and/or indicates whether the terminal supports receiving a plurality of transport blocks using one process.

In a possible implementation, the capability information of the terminal includes second indication information, and the second indication information indicates a window length of the process or a number of transport blocks supported by the terminal for transmission using one process.

In a possible implementation, the interface module 1002 is further configured to receive capability enquiry information, where the capability enquiry information is for enquiring a capability of the terminal to communicate a plurality of transport blocks using one process.

In a possible implementation, the interface module 1002 is further configured to receive third indication information, where the third indication information indicates a first duration, and the first duration satisfies the capability information of the terminal; and the interface module 1002 is further configured to transmit a plurality of transport blocks using a first process in the first duration.

In a possible implementation, the interface module 1002 is further configured to receive third indication information, where the third indication information indicates N, N is an integer greater than 1, and N satisfies the capability information of the terminal; and the interface module 1002 is further configured to transmit N transport blocks using a first process.

When the communication apparatus 100 is configured to implement the function of the terminal, for another function that can be implemented by the communication apparatus 100, refer to related descriptions of the embodiment shown in FIG. 11. Details are not described again.

Alternatively, for example, the communication apparatus 100 is configured to implement a function of the network device. The communication apparatus 100 is, for example, the network device described in the embodiment shown in FIG. 11.

The interface module 1002 is configured to receive the capability information of the terminal. The capability information of the terminal indicates a capability of the terminal to send a plurality of transport blocks using one process, and/or indicates a capability of the terminal to receive a plurality of transport blocks using one process, in a process of sending a plurality of transport blocks using one process, the terminal stops receiving scheduling information of the transport blocks in the process, and in a process of receiving a plurality of transport blocks using one process, the terminal stops sending decoding results of the transport blocks in the process. The feedback information indicates whether the plurality of transport blocks are correctly received. For example, the interface module 1002 may be configured to perform S1102.

The processing module 1001 is configured to determine, based on the capability information of the terminal, whether the terminal supports communication of a plurality of transport blocks using one process.

In a possible implementation, the capability information of the terminal includes first indication information, and the first indication information indicates whether the terminal supports sending a plurality of transport blocks using one process, and/or indicates whether the terminal supports receiving a plurality of transport blocks using one process.

In a possible implementation, the capability information of the terminal includes second indication information, and the second indication information indicates a window length of the process or a number of transport blocks supported by the terminal for transmission using one process.

In a possible implementation, the interface module 1002 is further configured to send capability enquiry information, where the capability enquiry information is for enquiring a capability of the terminal to communicate a plurality of transport blocks using one process.

In a possible implementation, the interface module 1002 is further configured to send third indication information to the terminal, where the third indication information indicates a first duration, and the first duration satisfies the capability information of the terminal; and the interface module 1002 is further configured to transmit a plurality of transport blocks using a first process in the first duration.

In a possible implementation, the interface module 1002 is further configured to send third indication information to the terminal, where the third indication information indicates N, N is an integer greater than 1, and N satisfies the capability information of the terminal; and the interface module 1002 is further configured to transmit N transport blocks using a first process.

When the communication apparatus 100 is configured to implement the function of the network device, for another function that can be implemented by the communication apparatus 100, refer to related descriptions of the embodiment shown in FIG. 11. Details are not described again.

It may be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built in an SoC (system-on-chip) or an ASIC, or may be an independent semiconductor chip. The processor may further include a necessary hardware accelerator, such as a field programmable gate array (field programmable gate array, FPGA), a PLD (programmable logic device), or a logic circuit that implements special logic operations, in addition to the core for executing software instructions to perform operations or processing.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in this application.

Optionally, this application further provides a computer-readable storage medium. All or part of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or part of procedures in the foregoing method embodiments may be implemented by a computer program instructing related hardware. The program may be stored in the computer program product. When the program is executed, the procedures in the foregoing method embodiments may be performed.

Optionally, this application further provides computer instructions. All or part of the procedures in the foregoing method embodiments may be completed by computer instructions instructing relevant hardware (for example, a computer, a processor, a terminal, or a network device). The program may be stored in the computer-readable storage medium or the computer program product.

Optionally, this application further provides a communication system, including the network device and the terminal in the foregoing embodiments.

The foregoing descriptions about implementations allow a person skilled in the art to understand that, for the purpose of convenient and brief description, division of the foregoing functional modules is taken as an example for illustration. During actual application, the foregoing functions can be allocated to different functional modules and implemented according to a requirement, that is, an inner structure of an apparatus is divided into different functional modules to implement all or part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, wherein the method comprises:
receiving a plurality of transport blocks using a first process; and
sending feedback information, wherein the feedback information indicates whether the plurality of transport blocks are correctly received.

2. The method according to claim 1, wherein the method further comprises:
receiving or sending first indication information, wherein the first indication information indicates a length of a first window, a number of the plurality of transport blocks, or a number of pieces of first scheduling information, the first window is a window of the first process or a window for transmitting the first scheduling information, and the first scheduling information is for scheduling the plurality of transport blocks.

3. The method according to claim 2, wherein the first indication information is related to a round-trip time between a network device and a terminal.

4. The method according to claim 3, wherein the first indication information is further related to a number of processes supported by the terminal for transmitting a transport block.

5. The method according to any one of claims 1 to 4, wherein the method further comprises:
receiving or sending second indication information, wherein
the first indication information indicates the length of the first window, and the second indication information indicates a time domain position of the first window; or the first indication information indicates the number of the plurality of transport blocks, and the second indication information indicates a time domain position of the plurality of transport blocks; or the first indication information indicates the number of pieces of first scheduling information, and the second indication information indicates a time domain position of the first scheduling information.

6. The method according to any one of claims 1 to 5, wherein the plurality of transport blocks comprise a first transport block, and the method further comprises:
receiving or sending third indication information, wherein the third indication information indicates at least one of the following: whether the first transport block is retransmitted data, a number of transmissions of the first transport block, a coding group to which the first transport block belongs, an order of the first transport block in a first coding group, an order of the first transport block in the plurality of transport blocks, or whether the first transport block is a parity transport block, wherein
the first coding group is the coding group to which the first transport block belongs.

7. The method according to any one of claims 1 to 5, wherein the method further comprises:
receiving or sending fourth indication information, wherein the fourth indication information indicates at least one of the following: whether the plurality of transport blocks are retransmitted data, a number of transmissions of the plurality of transport blocks, a coding group to which the plurality of transport blocks belong, orders of the plurality of transport blocks in the coding group to which the plurality of transport blocks belong, the number of the plurality of transport blocks, or whether the plurality of transport blocks are parity transport blocks.

8. The method according to any one of claims 1 to 7, wherein the method further comprises:
sending fifth indication information, wherein the fifth indication information indicates a number of detected transport blocks.

9. A data transmission method, wherein the method comprises:
sending a plurality of transport blocks using a first process; and
receiving feedback information, wherein the feedback information indicates whether the plurality of transport blocks are correctly received.

10. The method according to claim 9, wherein the method further comprises:
sending or receiving first indication information, wherein the first indication information indicates a length of a first window, a number of the plurality of transport blocks, or a number of pieces of first scheduling information, the first window is a window of the first process or a window for transmitting the first scheduling information, and the first scheduling information is for scheduling the plurality of transport blocks.

11. The method according to claim 10, wherein the first indication information is related to a round-trip time between a network device and a terminal.

12. The method according to claim 11, wherein the first indication information is further related to a number of processes supported by the terminal for transmitting a transport block.

13. The method according to any one of claims 9 to 12, wherein the method further comprises:
sending or receiving second indication information, wherein
the first indication information indicates the length of the first window, and the second indication information indicates a time domain position of the first window; or the first indication information indicates the number of the plurality of transport blocks, and the second indication information indicates a time domain position of the plurality of transport blocks; or the first indication information indicates the number of pieces of first scheduling information, and the second indication information indicates a time domain position of the first scheduling information.

14. The method according to any one of claims 9 to 13, wherein the plurality of transport blocks comprise a first transport block, and the method further comprises:
sending or receiving third indication information, wherein the third indication information indicates at least one of the following: whether the first transport block is retransmitted data, a number of transmissions of the first transport block, a coding group to which the first transport block belongs, an order of the first transport block in a first coding group, an order of the first transport block in the plurality of transport blocks, or whether the first transport block is a parity transport block, wherein
the first coding group is the coding group to which the first transport block belongs.

15. The method according to any one of claims 9 to 13, wherein the method further comprises:
sending or receiving fourth indication information, wherein the fourth indication information indicates at least one of the following: whether the plurality of transport blocks are retransmitted data, a number of transmissions of the plurality of transport blocks, a coding group to which the plurality of transport blocks belong, orders of the plurality of transport blocks in the coding group to which the plurality of transport blocks belong, the number of the plurality of transport blocks, or whether the plurality of transport blocks are parity transport blocks.

16. The method according to any one of claims 9 to 15, wherein the method further comprises:
receiving fifth indication information, wherein the fifth indication information indicates a number of transport blocks detected by a device receiving the plurality of transport blocks.

17. A communication apparatus, wherein the communication apparatus comprises a processing module and an interface module;
the processing module is configured to control the interface module to receive a plurality of transport blocks using a first process; and
the interface module is configured to send feedback information, wherein the feedback information indicates whether the plurality of transport blocks are correctly received.

18. The communication apparatus according to claim 17, wherein
the interface module is further configured to receive or send first indication information, wherein the first indication information indicates a length of a first window, a number of the plurality of transport blocks, or a number of pieces of first scheduling information, the first window is a window of the first process or a window for transmitting the first scheduling information, and the first scheduling information is for scheduling the plurality of transport blocks.

19. The communication apparatus according to claim 18, wherein the first indication information is related to a round-trip time between a network device and a terminal.

20. The communication apparatus according to claim 19, wherein the first indication information is further related to a number of processes supported by the terminal for transmitting a transport block.

21. The communication apparatus according to any one of claims 17 to 20, wherein
the interface module is further configured to receive or send second indication information; and
the first indication information indicates the length of the first window, and the second indication information indicates a time domain position of the first window; or the first indication information indicates the number of the plurality of transport blocks, and the second indication information indicates a time domain position of the plurality of transport blocks; or the first indication information indicates the number of pieces of first scheduling information, and the second indication information indicates a time domain position of the first scheduling information.

22. The communication apparatus according to any one of claims 17 to 21, wherein the plurality of transport blocks comprise a first transport block; and
the interface module is further configured to receive or send third indication information, wherein the third indication information indicates at least one of the following: whether the first transport block is retransmitted data, a number of transmissions of the first transport block, a coding group to which the first transport block belongs, an order of the first transport block in a first coding group, an order of the first transport block in the plurality of transport blocks, or whether the first transport block is a parity transport block, wherein
the first coding group is the coding group to which the first transport block belongs.

23. The communication apparatus according to any one of claims 17 to 21, wherein
the interface module is further configured to receive or send fourth indication information, wherein the fourth indication information indicates at least one of the following: whether the plurality of transport blocks are retransmitted data, a number of transmissions of the plurality of transport blocks, a coding group to which the plurality of transport blocks belong, orders of the plurality of transport blocks in the coding group to which the plurality of transport blocks belong, the number of the plurality of transport blocks, or whether the plurality of transport blocks are parity transport blocks.

24. The communication apparatus according to any one of claims 17 to 23, wherein
the interface module is further configured to send fifth indication information, wherein the fifth indication information indicates a number of detected transport blocks.

25. A communication apparatus, wherein the communication apparatus comprises a processing module and an interface module, wherein
the processing module is configured to control the interface module to send a plurality of transport blocks using a first process; and
the interface module is configured to receive feedback information, wherein the feedback information indicates whether the plurality of transport blocks are correctly received.

26. The communication apparatus according to claim 25, wherein
the interface module is further configured to send or receive first indication information, wherein the first indication information indicates a length of a first window, a number of the plurality of transport blocks, or a number of pieces of first scheduling information, the first window is a window of the first process or a window for transmitting the first scheduling information, and the first scheduling information is for scheduling the plurality of transport blocks.

27. The communication apparatus according to claim 26, wherein the first indication information is related to a round-trip time between a network device and a terminal.

28. The communication apparatus according to claim 27, wherein the first indication information is further related to a number of processes supported by the terminal for transmitting a transport block.

29. The communication apparatus according to any one of claims 25 to 28, wherein
the interface module is further configured to send or receive second indication information; and
the first indication information indicates the length of the first window, and the second indication information indicates a time domain position of the first window; or the first indication information indicates the number of the plurality of transport blocks, and the second indication information indicates a time domain position of the plurality of transport blocks; or the first indication information indicates the number of pieces of first scheduling information, and the second indication information indicates a time domain position of the first scheduling information.

30. The communication apparatus according to any one of claims 25 to 29, wherein the plurality of transport blocks comprise a first transport block; and
the interface module is further configured to send or receive third indication information, wherein the third indication information indicates at least one of the following: whether the first transport block is retransmitted data, a number of transmissions of the first transport block, a coding group to which the first transport block belongs, an order of the first transport block in a first coding group, an order of the first transport block in the plurality of transport blocks, or whether the first transport block is a parity transport block, wherein
the first coding group is the coding group to which the first transport block belongs.

31. The communication apparatus according to any one of claims 25 to 29, wherein
the interface module is further configured to send or receive fourth indication information, wherein the fourth indication information indicates at least one of the following: whether the plurality of transport blocks are retransmitted data, a number of transmissions of the plurality of transport blocks, a coding group to which the plurality of transport blocks belong, orders of the plurality of transport blocks in the coding group to which the plurality of transport blocks belong, the number of the plurality of transport blocks, or whether the plurality of transport blocks are parity transport blocks.

32. The communication apparatus according to any one of claims 25 to 31, wherein
the interface module is further configured to receive fifth indication information, wherein the fifth indication information indicates a number of transport blocks detected by a device receiving the plurality of transport blocks.

33. A communication apparatus, comprising a processor, wherein the processor is coupled to a memory, the memory is configured to store a program or instructions, and when the program or the instructions are executed by the processor, the apparatus is enabled to perform the method according to any one of claims 1 to 8 or the method according to any one of claims 9 to 16.

34. A computer-readable storage medium, wherein the computer-readable storage medium stores a computer program or instructions, and when the computer program or the instructions are executed, a computer is enabled to perform the method according to any one of claims 1 to 8 or the method according to any one of claims 9 to 16.

35. A computer program product, wherein the computer program product comprises computer program code, and when the computer program code is run on a computer, the computer is enabled to implement the method according to any one of claims 1 to 8 or implement the method according to any one of claims 9 to 16.

36. A communication method, wherein the method comprises:
determining capability information of a terminal, wherein the capability information of the terminal indicates a capability of the terminal to send a plurality of transport blocks using one process, and/or indicates a capability of the terminal to receive a plurality of transport blocks using one process, in a process of sending a plurality of transport blocks using one process, the terminal stops receiving scheduling information of a transport block in the process, and in a process of receiving a plurality of transport blocks using one process, the terminal stops sending a decoding result of a transport block in the process; and
sending the capability information of the terminal.

37. The method according to claim 36, wherein the capability information of the terminal comprises first indication information, and the first indication information indicates whether the terminal supports sending a plurality of transport blocks using one process, and/or indicates whether the terminal supports receiving a plurality of transport blocks using one process.

38. The method according to claim 36 or 37, wherein the capability information of the terminal comprises second indication information, and the second indication information indicates a window length of the process or a number of transport blocks supported by the terminal for transmission using one process.

39. The method according to any one of claims 36 to 38, wherein the method further comprises:
receiving capability enquiry information, wherein the capability enquiry information is for enquiring a capability of the terminal to communicate a plurality of transport blocks using one process.

40. The method according to any one of claims 36 to 39, wherein the method further comprises:
receiving third indication information, wherein the third indication information indicates a first duration, and the first duration satisfies the capability information of the terminal; and
communicating a plurality of transport blocks using a first process in the first duration.

41. The method according to any one of claims 36 to 39, wherein the method further comprises:
receiving third indication information, wherein the third indication information indicates N, N is an integer greater than 1, and N satisfies the capability information of the terminal; and
communicating N transport blocks using a first process.

42. A communication method, wherein the method comprises:
receiving capability information of a terminal, wherein the capability information of the terminal indicates a capability of the terminal to send a plurality of transport blocks using one process, and/or indicates a capability of the terminal to receive a plurality of transport blocks using one process, in a process of sending a plurality of transport blocks using one process, the terminal stops receiving scheduling information of a transport block in the process, and in a process of receiving a plurality of transport blocks using one process, the terminal stops sending a decoding result of a transport block in the process; and
determining, based on the capability information of the terminal, whether the terminal supports communication of a plurality of transport blocks using one process.

43. The method according to claim 42, wherein the capability information of the terminal comprises first indication information, and the first indication information indicates whether the terminal supports sending a plurality of transport blocks using one process, and/or indicates whether the terminal supports receiving a plurality of transport blocks using one process.

44. The method according to claim 42 or 43, wherein the capability information of the terminal comprises second indication information, and the second indication information indicates a window length of the process or a number of transport blocks supported by the terminal for transmission using one process.

45. The method according to any one of claims 42 to 44, wherein the method further comprises:
sending capability enquiry information, wherein the capability enquiry information is for enquiring a capability of the terminal to communicate a plurality of transport blocks using one process.

46. The method according to any one of claims 42 to 45, wherein the method further comprises:
sending third indication information to the terminal, wherein the third indication information indicates a first duration, and the first duration satisfies the capability information of the terminal; and
communicating a plurality of transport blocks using a first process in the first duration.

47. The method according to any one of claims 42 to 45, wherein the method further comprises:
sending third indication information to the terminal, wherein the third indication information indicates N, N is an integer greater than 1, and N satisfies the capability information of the terminal; and
communicating N transport blocks using a first process.

48. A communication apparatus, comprising a unit or module configured to perform the method according to any one of claims 36 to 41, or a unit or module configured to perform the method according to any one of claims 42 to 47.

49. A communication apparatus, comprising a processor, wherein the processor is coupled to a memory, the memory is configured to store a program or instructions, and when the program or the instructions are executed by the processor, the apparatus is enabled to perform the method according to any one of claims 36 to 41 or the method according to any one of claims 42 to 47.

50. A chip, comprising a processor, wherein the processor is coupled to a memory, the memory is configured to store a program or instructions, and when the program or the instructions are executed by the processor, the chip is enabled to perform the method according to any one of claims 36 to 41 or the method according to any one of claims 42 to 47.

51. A computer-readable storage medium, wherein the computer-readable storage medium stores a computer program or instructions, and when the computer program or the instructions are executed, a computer is enabled to perform the method according to any one of claims 36 to 41 or the method according to any one of claims 42 to 47.

52. A computer program product, wherein the computer program product comprises computer program code, and when the computer program code is run on a computer, the computer is enabled to implement the method according to any one of claims 36 to 41 or implement the method according to any one of claims 42 to 47.

53. A communication system, comprising an apparatus configured to perform the method according to any one of claims 1 to 8, and/or an apparatus configured to perform the method according to any one of claims 9 to 16.

54. A communication system, comprising an apparatus configured to perform the method according to any one of claims 36 to 41, and/or an apparatus configured to perform the method according to any one of claims 42 to 47.
